(19) Europäisches Patentamt
European Patent Office
Office européen des brevets

(11) Publication number: **0 143 537 B1**

(12) **EUROPEAN PATENT SPECIFICATION**

(45) Date of publication of patent specification: **21.03.90**

(51) Int. Cl.⁵: **B 01 D 53/04**

(21) Application number: **84306709.1**

(22) Date of filing: **02.10.84**

# (54) Method and apparatus for gas separation and synthesis.

(30) Priority: **03.10.83 US 538370**

(43) Date of publication of application:
**05.06.85 Bulletin 85/23**

(45) Publication of the grant of the patent:
**21.03.90 Bulletin 90/12**

(84) Designated Contracting States:
**DE FR GB IT NL SE**

(56) References cited:
**US-A-3 262 277**
**US-A-3 871 179**
**US-A-4 354 859**

**IND. ENG. CHEM. FUNDAMENTALS, vol. 5, no. 1, February 1966, pages 141-144; R.H. WILHELM et al.: "Parametric pumping"**

(73) Proprietor: **Keefer, Bowie Gordon**
**4324, West 11th Avenue**
**Vancouver British Columbia V6R 2M1 (CA)**

(72) Inventor: **Keefer, Bowie Gordon**
**4324, West 11th Avenue**
**Vancouver British Columbia V6R 2M1 (CA)**

(74) Representative: **Jones, Michael Raymond et al**
**HASELTINE LAKE & CO. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

Field of the invention

The invention relates generally to separations and catalytic chemical reactions conducted in the gas or vapour phase. Some particular applications include gas separation or purification combined with waste heat recovery, generation of already compressed and preheated oxygen for combustion, natural gas purification and compression, hydrogen isotope separation, ammonia or methanol synthesis, and steam reforming of methane.

Prior art

Gas separation by pressure swing adsorption is achieved by cyclic flow of a gas mixture over an adsorbent bed which more readily adsorbs a fraction of the mixture. The term "swings" refers to periodic variations of pressure. The total pressure, i.e. sum of partial pressures of the gases, is elevated during intervals of flow in a first direction and is reduced during alternating intervals of flow in the reverse direction. According to the well known parametric pumping separation principle, the less readily adsorbed fraction tends to migrate in the first direction over complete cycles while the more readily adsorbed fraction tends to migrate in the reverse direction.

The conventional process for gas separation by pressure swing adsorption uses two or more adsorbent beds with directional valving to control the flow of compressed feed gas over each bed in alternating sequence, while the other bed is purged at low pressure by the reverse flow of a portion of the product gas. This conventional process makes inefficient use of mechanical energy, because the compression energy of the feed gas is largely dissipated over the valves. Another common name for pressure swing adsorption gas separation is "heatless adsorption", which seems to deny the possibility of a beneficial effect by thermal coupling to heat sources or heat sinks to improve pressure swing adsorption apparatus as disclosed in the present invention.

Conventional gas separation processes (including pressure swing adsorption, cryogenic distillation and membrane permeation) are powered by mechanical energy. The energy intensiveness of air separation is a major obstacle to widen use of enriched oxygen in high temperature processes such as solid fuel gasification. An efficient air separation process powered by waste heat would address this need.

Some secondary and adverse thermal effects do arise in operation of conventional pressure swing adsorption gas separation apparatus, particularly those using large adsorption beds with poor heat exhange to ambient. The adverse effects include cyclic release and take-up of the latent heat of adsorption which causes a temperature swing of the adsorbent bed which acts in opposition to the pressure swing. Adsorption is increased by higher pressure and/or reduced temperature, and conversely is decreased by lower pressure and/or higher temperatures.

Examples of single bed pressure swing adsorption devices are found in U.S. Pat. No. 3,121,625 (Broughton), U.S. Pat. No. 3,164,454 (Wilson), U.S. Pat. No. 3,236,028 (Rutan), U.S. Pat. No. 4,169,715 (Eriksson), U.S. Pat. No. 4,194,892 (Jones et al), U.S. Pat. No. 4,207,084 (Gardner), and U.S. Pat. No. 4,354,859 (Keller et al). Most of the above references use mechanical volume displacement means at one or both ends of the adsorbent bed to generate cyclic flow and pressure variations in the bed. The Keller patent uses mechanical volume displacement means at both ends of the adsorbent bed, with a specified range of phase angles between the two volume displacement means of unequal displacement. None of these references contemplates the integral coupling of a pressure swing adsorption process with a regenerative thermal power or heat pump cycle as in the present invention.

A temperature swing adsorption separation process known as "recuperative parametric pumping" was described by Wilhelm (R. H. Wilhelm, A. W. Rice and A. R. Bendelius, Ind. Eng. Chem. Fundamentals 5, 141, (1966) with applications to liquid phase separation. A fluid mixture was made to flow cyclically in forward and reverse directions in an adsorbent bed with an imposed thermal gradient between hot and cold ends. The heat capacity of the fluid mixture was large with respect to the heat capacity of the adsorbent material, in order to obtain thermal cycling of each adsorbent pellet.

The present invention can be considered as subjecting a flow of a gas mixture to a Stirling cycle or other thermodynamic regenerative cycle which has been changed to operate as an *open cycle* to perform thermally coupled pressure swing adsorption separations. This contrasts with a conventional Stirling cycle machine which has a *closed* working volume filled with a gaseous working fluid. The working volume includes hot and cold spaces, whose voume is varied by mechanical volume displacement means reciprocating out of phase. A thermal regenerator is in the flow path connecting the hot and cold spaces. In a conventional Stirling machine heat capacity of the working fluid is desirably very low with respect to the heat capacity of the regenerator materials so that the temperature swing at each point of the regenerator will be minimal. This temperature swing of the regenerator results in non-isothermal conditions in the regenerator and is an unavoidable source of inefficiency in conventional Stirling type machine.

The out of phase reciprocation of the volume displacement means causes cyclic flow of the working fluid through the regenerator. Cyclic pressure variations are associated with alternative heating or cooling of gas flowing respectively into the hot or cold spaces, and with variations of total working volume. If volume changes in the hot space have a leading phase with respect to

volume changes in the cold space, the Stirling machine is an engine. Conversely, the Stirling machine is a heat pump or refrigerator when volume changes in the hot space lag volume changes in the cold space. Related machines include thermocompressors, Vuilleumier thermally powered refrigeration machines, and Gifford-McMahon pressure powered refrigeration machines.

In Stirling type machines operated as cryogenic refrigerators, performance deteriorates at very low temperatures where the heat capacity of regenerator materials ceases to be very large relative to the heat capacity of the helium gas working fluid. As disclosed in U.S Patent 3,262,277 (Nesbitt), a solid adsorbent material can improve performance of thermal regenerators operating below 20 degrees K, as the effective heat capacity is increased by the presence of adsorbed helium in the regenerator material. Under the steady state operating conditions envisaged by Nesbitt, the adsorbed helium phase is essentially static, contrary to the requirements of a gas separation or purification process. Significant rates of cyclic adsorption and desorption would entail corresponding release and take-up of a latent heat of adsorption, degrading regenerator thermal performance in a Stirling type refrigerator. Successful operation of the Nesbitt patent depends on suppression of cyclic pressure swing adsorption and desorption through substantial cancellation by opposing temperature swing effects over the adsorbent in the regenerator, and probably also through capillary condensation of liquid helium in adsorbent pores which causes known pressure hysteresis effects inhibiting desorption from pores filled with liquid adsorbate. High speed operation may also tend to suppress cyclic adsorption and desorption.

Use of rapidly dissociating gases such as nitrogen tetroxide as working fluid in Brayton and Stirling closed cycle engines is proposed in U.S. Patent No. 3,370,420 (Johnson). The dissociation/recombination reaction increases gas volume in the hot space and thus improves engine work ratio. Use of a catalyst in the regenerator of a Stirling engine using a dissociated gas working fluid has been proposed in U.S. Pat. No. 3,871,179 (Bland) with the object of obtaining enhanced reaction rates in closed cycle Stirling engines with high work ratio. In these inventions, the forward reaction is exactly cancelled by the reverse reacton over each cycle because reaction products are trapped in the engine spaces. As there is no means to drive the reaction off equilibrium, these inventions cannot be applied to chemical synthesis processes. Therefore it has not hitherto been possible to apply the closed Stirling cycle to recover heat from exothermic chemical synthesis reactions, or to supply heat for endothermic reactions, while using the reacting gases as the Stirling machine working fluid.

Fundamental problems in chemical process industry include the removal of reaction product species and exothermic reaction heat from catalyst beds. High temperatures promote good reaction rates, but shift the equilibrium of an exothermic reaction toward lower conversion. These problems and their conventional solutions are exemplified by the important chemical process of ammonia synthesis, which proceeds by the exothermic reaction:—

$$3H_2+N_2 \leftrightarrows 2NH_3$$

This reaction takes place over a promoted iron catalyst at a typical pressure of 200 atmospheres and a typical temperature of 750 degrees K. The hydrogen and nitrogen feed gases are stringently purified (apart from minor amounts of "inert" gases such as argon and methane, which are nonreactive in the ammonia synthesis loop, and are compressed to the high working pressure. In order to remove the product and thus drive the synthesis reaction over the catalyst bed off equilibrium, the gas mixture of reagents and produced ammonia is recirculated between the hot catalyst bed and a cool ammonia separator/condenser. This recirculation requires a recycle compressor and a recuperative heat exchanger. To prevent excessive catalyst heating from the exothermic reaction, temperature control is achieved either by energy inefficient quenching by injection of cool feed gas, or by heat exchange to an external waste heat recovery power cycle. A Brayton cycle gas turbine heat recovery approach for ammonia synthesis is disclosed in U.S. Pat. No. 4,224,299 (Barbet et al) and U.S. Pat. No. 4,273,743 (Barber et al). Unless the synthesis loop operates at very high pressure, a refrigeration plant is needed to condense liquid ammonia at the cool end of the synthesis loop. Means are provided for purging accumulated inerts from the loop, and valuable hydrogen from the purge gas.

Considerable research attention has been devoted to improving productivity or selectivity of catalytic chemical reactors through cyclic operation forced by periodic variation of feed composition or temperature cycling. For example, it was found by (A. K. Jain, Ph.D. Thesis, University of Waterloo Ontario) that forced feed composition cycling at periods of several minutes improved the productivity of the ammonia synthesis reaction. However operation of the ethylene hydrogenation reaction over a nickel catalyst with pulsating pressure and flow was tested by Baiker et al (A. Baiker and W. Richarz, Chem.Ing.Tech 48, 1203, (1976)), who found that catalyst productivity was reduced relative to steady state operation. While it has been shown that in many cases cyclic operation can improve reaction productivity or selectivity under laboratory conditions, there remains a need for full scale reactors capable of beneficially exploiting a wide range of periodic phenomena which may be based on cyclic composition, temperature, flow or pressure variations.

Chromatographic effects have been found to enable some catalytic reactions to be driven

beyond normal equilibrium constraints, when the reverse reaction is suppressed by opposite separation of products species as pulses of a feed reactant migrate through a catalyst bed in the presence of a continuously flowing carrier gas, which may be a second reactant. Chromatographic reactors are disclosed in U.S. Pat. No. 2,976,132 (Dinwiddie and Morgan) and in Canadian Pat. No. 631,882 (Magee). It was found by Unger and Rinker (B. Unger and R. Rinker, Ind.Eng.Chem., Fundam; *15*,226 (1976)) that ammonia synthesis could be conducted to high conversions beyond equilibrium at relatively low pressure by pulsing nitrogen, with hydrogen as the carrier, through a packed bed of catalyst mixed with adsorbent. These chromatographic reactors have severe limitations, including low catalyst productivity because of the interval between feed pulses, and the mixing of dilute product species in the carrier gas.

Closed cycle Stirling machines have been developed strictly as devices for conversion between thermal and mechanical forms of energy. The complex internal regime in which pressure, temperature and velocity vary continuously with time and location in Stirling machines has not previously been found useful for gas separations or chemical synthesis between components of the working fluid as taught in the present invention.

## Summary of the invention

The invention reduces the difficulties and disadvantages of the prior art by providing a process and apparatus for gas separation, and also for gas phase chemical reactions which improves the yield of such reactions and simultaneously can also reduce energy consumption and complexity of such prior art processes. Furthermore, the invention utilizes a relatively simple apparatus in which mechanical valving for gas flow, heat transfer processes, and throttling of high pressure gases to low pressure are reduced considerably, thus simplifying construction and maintenance of such plants. Furthermore, the invention utilizes the well known Stirling cycle, or a similar regenerative, thermodynamic cycle, for use with these gas separations and synthesis, which has been found to provide desirable flow and pressure characteristics over an adsorbent bed. Furthermore the invention utilizes the temperature gradient found in a Stirling cycle machine to enhance gas separations.

The invention may be considered as modifying a gas separation process using pressure swings over an adsorbent bed, which has been modified by superimposing on the bed a thermal regenerator subjected to a temperature gradient or thermal gradient from a Stirling cycle machine. Alternatively, the process may be considered as modifying an existing Stirling cycle machine by providing, in cooperation with the thermal regenerator of the Stirling cycle machine, an adsorbent bed which adsorbs one or more of the gas components within the Stirling cycle, which has been further modified to incorporate inlet and outlet means to admit and to exhaust gas from the normally closed Stirling cycle.

US—A—4,354,859, for example, discloses a device and method according to the preamble of the independent claims.

According to a first aspect of the invention, there is provided a process for separating components of a gas mixture containing a first component which is more readily adsorbed and a second component which is less readily adsorbed by an adsorbent material, the process including the steps of:

introducing the gas mixture into a working volume having a flow path containing the adsorbent material within an adsorbent bed;

cyclically reversing direction of flow of the gas mixture along the flow path so that direction of the flow alternates between opposite ends of the flow path, cyclically varying the total pressure of the gas mixture between upper and lower pressure limits within the working volume;

simultaneously coordinating a phase relationship between the cyclic pressure variations and the cyclic flow reversals relative to the adsorbent bed such that the first component is preferentially adsorbed and immobilized by increased pressure on the adsorbent bed when the gas flows in one direction, and the first component is preferentially desorbed when the pressure is decreased and the flow is reversed;

removing from adjacent one end of the adsorbent bed a first gas fraction enriched in the first component, and removing from adjacent the opposite end of the adsorbent bed a second gas fraction depleted in the first component;

providing in the flow path first and second spaces disposed adjacent opposite ends of the regenerator combination, the spaces being at different temperatures to expose the regenerator combination to a thermal gradient; and

passing the flow of gas through the spaces in series with the regenerator; the process being characterised by:

providing in the flow path a thermal regenerator to cooperate with the adsorbent bed to produce an adsorbent/regenerator combination;

passing through the adsorbent/regenerator combination the flow which passes along the flow path; and

generating the cyclic pressure variations and the cyclic flow reversals by first cyclic gas volume displacements associated with the first space and by second cyclic gas volume displacements associated with the second space, such that the first cyclic gas volume displacements have a leading phase angle with respect to the second cyclic gas volume displacements, so as to subject the gas flow to cyclical reversals of temperature, together with the cyclical reversals of pressure and direction flow, so as to facilitate separation of the gas into the first and second fractions, and achieve conversion between thermal energy and compression energy in the gas mixture.

According to a second aspect of the invention, there is provided a process of operating a modified Stirling cycle machine wherein an internal working volume containing a gas has a flow path containing first and second spaces and a thermal regenerator disposed between the spaces, the first and second spaces being at different temperatures to expose the regenerator to a thermal gradient, the process including the steps of:

cyclically reversing direction of flow of the gas along the flow path so that direction of flow alternates between opposite ends of the flow path; and

cyclically varying pressure of the gas between upper and lower pressure limits within the working volume so that a phase relationship exists between the cyclic pressure variations and cyclic flow reversals relative to the thermal regenerator, the process being characterized by:

(a) providing between the spaces an adsorbent bed containing adsorbent material to cooperate with the thermal regenerator to produce an adsorbent/regenerator combination;

(b) introducing into the working volume a gas mixture containing a first component which is more readily adsorbed by the adsorbent material, and a second component which is less readily adsorbed by the adsorbent material;

(c) generating the cyclic pressure variations and the cyclic flow reversals by first cyclic gas volume displacements associated with the first space and by second cyclic gas volume displacements associated with the second space such that the first cyclic gas volume displacements have a leading phase angle with respect to the second cyclic gas volume displacements;

(d) simultaneously when coordinating the phase relationship between the cyclic pressure variations and the cyclic flow reversals relative to the regenerator combination, preferentially adsorbing and immobilising the first component on the combination bed by increased pressure when the gas flows in one direction, and preferentially desorbing the first component by decreasing the pressure when the flow direction is reversed; and

(e) removing from one end of the regenerator combination a first gas fraction enriched in the first component, and removing from the opposite end of the regenerator combination a second gas fraction depleted in the first component, thereby also achieving conversion between thermal energy and compression energy in the gas mixture.

According to a third aspect of the invention, there is provided an apparatus for separating components of a gas mixture containing a first component which is more readily adsorbed and a second component which is less readily adsorbed by an adsorbent material, the apparatus including a body having an internal working volume having first and second spaces, a flow path inter-connecting the first and second spaces, and an adsorbent bed containing the adsorbent material and provided in the flow path between the spaces, inlet means to admit gas mixture into the working volume, and outlet means to discharge gas from adjacent opposite ends of the adsorbent bed, volume displacement means associated with the first and second spaces, reciprocating means cooperating with the volume displacement means so as to produce cyclic variations in total pressure and cyclic reversals in direction of flow of the gas, the reciprocating means determining a phase relationship between the cyclic variations of pressure in the gas and and directions of flow of the gas over the adsorbent bed, so that flow under reduced pressure past the adsorbent bed towards one space is enriched in the first more readily adsorbed component, while reverse flow under increased pressure past the adsorbent bed towards the opposite space is depleted in the first more readily adsorbed component, the apparatus being further characterised by:

(a) a thermal regenerator cooperating with the adsorbent bed to produce an adsorbent/regenerator combination provided in the flow path between the spaces to receive flow which passes along the flow path,

(b) means for maintaining the first and second spaces at different temperatures to expose the regenerator combination to a thermal gradient, so as to subject the gas flow to cyclical reversals of temperature together with the cyclical reversals of pressure and direction of flow so as to facilitate separation of the gas mixture into a first gas fraction enriched in the first component, and a second gas fraction enriched in the second component,

(c) the reciprocating means cooperating with the first and second volume displacement means so that the displacement means reciprocate at the same frequency, and the volume of gas displayed by the first volume displacement means leads the volume of gas displaced by the second volume displacement means by a phase angle of between zero degrees and 180 degrees.

According to a fourth aspect of the invention, there is provided an apparatus which resembles a modified Stirling cycle machine, the apparatus including a body having an internal working volume having first and second spaces, a flow path for gas inter-connecting the first and second spaces, a thermal regenerator provided in the flow path between the first and second spaces, the first and second spaces being at different temperatures to expose the regenerator to a thermal gradient, first and second volume displacement means communicating with the first and second spaces respectively, reciprocating means cooperating with the first and second volume displacement means so that the first and second volume displacement means reciprocate at the same frequency to produce cyclic variations in total pressure and in direction of flow of the gas, the reciprocating means determining phase angle between cyclic variations of pressure in the gas and flow directions of the gas over the regenerator, the apparatus being characterized by:

(a) an adsorbent bed containing adsorbent

material cooperating with the thermal regenerator to produce an adsorbent/regenerator combination disposed between the first and second spaces,

(b) the gas being a gas mixture containing a first component which is more readily adsorbed and a second component which is less readily adsorbed by the adsorbent material,

(c) inlet means to admit the gas mixture into the working volume, and outlet means to discharge gas fractions from opposite ends of the regenerator combination,

(d) the reciprocating means subjecting the gas flow to cyclical reversals of pressure and direction flow so that flow under decreased pressure of a first gas fraction past the regenerator combination towards one space is enriched in the first more readily adsorbed component and is discharge through one outlet means, and flow under increased pressure of a second gas fraction past the regenerator combination towards the remaining space is depleted in the first more readily adsorbed component, and the second gas fraction is removed through another outlet means,

(e) the reciprocating means cooperating with the first and second volume displacement means so that the displacement means reciprocate at the same frequency, and the volume of gas displaced by the first volume displacement means leads the volume of gas displaced by the second volume displacement means by a phase angle of between zero degrees and 180 degrees.

Gas enriched in more readily adsorbed gas component(s) and heat at one temperature are delivered at one end of the regenerator combination, while gas enriched in less readily adsorbed component(s) is delivered to the other end of the regenerator combination which accepts heat at another temperature. Net transport of heat and the more readily adsorbed gas components are in the same direction, while less readily adsorbed gas component(s) are transported in a reverse direction. Some conversion between heat and mechanical or compression energy is achieved.

The Stirling type machine of the present invention can operate either as a thermally powered engine, or as a heat pump or refrigerator. When operating as an engine it may deliver useful mechanical or compression work in addition to performing a gas separation. When operating as a heat pump or refrigerator, it may perform useful heating or cooling functions in addition to the gas separation function.

As stated previously, in the conventional Stirling engine there is an unavoidable source of inefficiency due to non-isothermal conditions at each point of the thermal regenerator. This results in temperature swings of the conventional thermal regenerator which are reduced or eliminated in the engine embodiment of the present invention where the heat of adsorption released, (or heat of desorption taken up), contributes to more nearly isothermal conditions at each point in the regenerator bed. This is because cyclic heat generation will oppose the normal temperature swing that would arise in conventional Stirling engine regenerators. This is a unique advantage of the invention in the engine embodiment, but not in the heat pump and refrigerator embodiment this advantage is not found, and steps are taken to reduce undesirable temperature swings in these other embodiments.

The present invention also applies to gas phase reactions, many of which are enhanced by use of a catalyst. In the case of an exothermic reaction, the heat of reaction assists in driving the Stirling engine internally. Alternatively enough heat may be supplied to a Stirling engine to drive both the engine and the reaction. In the case of an endothermic reaction, the Stirling heat pump would supply the heat of reaction internally. In some instances, when using a catalyst, catalyst productivity is enhanced by pressure swing operation. Also, when considering secondary cyclic temperature and composition effects, the apparatus generates cyclic variations of pressure, flow and gas composition over the catalyst and adsorbent beds, and thus provides great flexibility to exploit these variations, so as to improve productivity, conversion and selectivity in certain catalytic reactions.

In chemical gas phase reactions the invention provides closed integration of a catalytic or non-catalytic reactor with an adsorbent bed and the Stirling thermodynamic cycle. The adsorbent bed separates reactants and products of the chemical reaction to drive the reaction toward high conversion; while the Stirling cycle removes and usefully converts heat from exothermic reactions or provides heat to endothermic reactions. The exothermic reactions take place in the space associated with a leading phase volume displacement, while endothermic reactions take place in the space associated with the lagging phase volume displacement.

A detailed disclosure following, related to accompanying drawings, describes several preferred apparatus and methods according to the invention, which are capable of expression in apparatus and methods other than those particularly described and illustrated.

Description of the drawings

Figure 1 is a simplified schematic of a Stirling cycle pressure swing adsorption apparatus, including a modification to provide a low temperature pressure swing adsorption apparatus with Stirling cycle per refrigeration,

Figure 2 is a simplified diagram in graph form, showing temperature and gas composition regimes adjacent an adsorbent/regenerator combination of the Fig. 1 embodiment for a two component mixture and associated wavefront,

Figure 3 is a simplified temperature profile for a Stirling cycle engine embodiment, assuming isothermal expansion and compression, adjacent the regenerator combination of Fig. 1 embodiment,

Figure 4 is a simplified temperature profile for a Stirling cycle heat pump embodiment, which is analogous to the Fig. 3 temperature profile,

Figure 5 is a simplified schematic of a single

displacer thermocompressor pressure swing adsorption apparatus,

Figure 6 is a simplified schematic of a thermally coupled pressure swing adsorption apparatus with two displacers,

Figure 7 is a simplified schematic of a gas separation apparatus powered by a heat source, with a portion of the adsorbent/regenerator combination being cooled,

Figure 8 is a simplified schematic of an improved gas synthesis apparatus based on the invention.

Detailed disclosure

Figure 1

A Stirling cycle machine 10 has a single acting power piston 11 reciprocating in a power cylinder 12, and a double-acting displacer piston 13 reciprocating in a displacer cylinder 14. The power cylinder encloses a variable volume 15 sealed by a high pressure piston seal 16.

The displacer piston 13 is driven by a displacer rod 17 having a cross sectional area which is small with respect to the cross sectional area of displacer cylinder 14. The displacer rod 17 is sealed by a high pressure gland seal 18. The displacer piston 13 divides the internal volume of displacer cylinder 14 between a variable volume 19 adjacent the gland seal 18 and a variable volume 20. The variable volume 19 is connected to the variable volume 15 by a conduit means 21. The variable volume 20 is the expansion volume or the first space of the Stirling machine, while the sum of the variable volumes 15 and 19 is the compression volume or the second space of the machine. The pistons 11 and 13 serve as a first volume displacement means and a second volume displacement means, respectively, which communicate with the first space 20, and with the second space (15 and 19) respectively.

The variable volume 20 is connected by a conduit means 24 to a first heat exchanger 25 maintained at a temperature $T_1$, which in turn is connected to a thermal regenerator 27 by conduit means 28. The variable volume 19 is connected by conduit means 30 to a second heat exchanger 32 maintained at a temperature $T_2$ which will often approximate ambient temperature, which in turn is connected to the thermal regenerator 27 by a conduit means 33. It is evident that gas within the expansion volume or first space, i.e. volume 20 and the conduits 24 and 28 will be maintained approximately at temperature $T_1$, while gas within the compression volume or second space, i.e. volumes 15 and 19, and the conduits 30 and 33 will be maintained approximately at temperature $T_2$. It can be seen that a temperature or thermal gradient between $T_1$ and $T_2$ will be maintained across the regenerator 27 between the connections to conduits 28 and 33. The volumes 15, 19 and 20, the conduits and associated heat exchangers and the thermal regenerator provide a flow path of the apparatus, which has a working volume. While the heat exchangers 25 and 32 are shown spaced from the cylinders enclosing the respective volumes, following conventional Stirling cycle machine design, the heat exchangers could be incorporated into the cylinder walls.

A reciprocating means 35 interconnects rods 36 and 19 of the pistons 11 and 13 so that the pistons are reciprocated at the same frequency and with suitable phase such as that an increase (or decrease) of the expansion volume leads an increase (or decrease) of the compression volume. Hence upwards motion of the displacer piston 13 leads upwards motion of the power piston 11. The Stirling machine will then operate to convey heat from the heat exchanger 25 to heat exchanger 32 i.e., there is a net transport of heat from the expansion space to the compression space. If $T_1$ is greater than $T_2$, first and second ends 41 and 42 of the regenerator are associated with relatively hot and relatively cold spaces respectively, and the machiine will function as an engine, delivering work from the power piston 11. Conversely, if $T_2$ is greater than $T_1$, the ends 41 and 42 are associated with relatively cold and hot spaces respectively and the machine will operate as a heat pump or refrigerator, absorbing work from the power piston 11.

In a conventional Stirling engine, the regenerator contains finely divided material with high heat capacity and large surface area, arranged to adsorb and store heat from gas flowing through the regenerator with efficient heat transfer and low flow friction. In order to achieve the purposes of the invention, the regenerator 27 also contains fixed adsorbent material 34 which preferentially adsorbs a first component of a feed gas mixture relative to a less readily adsorbed second component, in the operating pressure and temperature regime, both of which vary cyclically within the reversing flows of gas as will be described.

Hence the regenerator includes an adsorbent bed of a sorbent which provides a sorption function, such as surface adsorption, bulk adsorption and desorption. The adsorbent material may be mixed with non-adsorbent material, and different adsorbent materials or mixtures of material may be used in zones of the regenerator operating at different temperature levels. Alternatively, all of the material in the regenerator may be the adsorbent material which than also provides the full heat storage function. For particular applications as will be described with reference to Figure 8, some of the adsorbent may also have catalytic properties with respect to reactions of mixing gas components. Particularly in heat pump or refrigerator embodiment, the heat capacity of the solid material must be large with respect to the heat capacity of the working fluid. The regenerator and the adsorbent bed cooperate to produce an adsorbent/regenerator combination but the term "regenerator", "adsorbent bed", and "bed" and "regenerator combination" are used interchangeably in this specification except where so stated.

The adsorbent or catalyst bed may be a packed bed of pellets, fibres or granular material, which

may be mixed with metallic material to augment heat capacity. Adsorbent or catalyst material may also be formed in monolithic blocks with multiple parallel flow passage, similar to well known honeycomb catalytic support. Adsorbent or catalyst material also may be bonded in thin layers to metal supports, or to metal heat exchange surfaces as down with catalytic tube wall reactors, or maybe a liquid retained in a matrix. Stirling machine regenerators use a variety of well known configurations to meet conflicting performance objectives of high heat capacity and large internal surface area with excellent heat exchange, low pressure drop, low dead volume and low thermal conductivity between hot and cold ends. To avoid the pressure hysteresis problems previously referred to with reference to U.S. Pat. No. 3,262,277 (Nesbitt), when the present invention is used with vapours near their saturation pressure it is important that the adsorbent material is selected to have a pore structure and other characteristics to avoid capillary condensation.

In this invention, the working fluid in the Stirling machine is a gas mixture containing a first component (or components) more readily adsorbed on the adsorbent 34 than remaining component(s) in the mixture. The gas mixture is admitted into the regenerator 27 through an inlet conduit 37 having an inlet valve 39 and a non-return valve 40. First and second outlet valves 43 and 46 are provided in first and second outlet conduits 45 and 48 which communicate with the conduits 33 and 28 respectively.

As the pressure within the Stirling machine is relatively elevated while the gas mixture in the regenerator 27 is flowing toward conduit 28, i.e. towards the expansion volume, the first component of the mixture will be preferentially adsorbed at that time. The pressure is reduced while the gas mixture in regenerator 27 is flowing toward conduit 33 i.e. towards the compression volume, so the first component will be parametrically pumped to the compression space. A first gas fraction or product enriched in the first component will be withdrawn from the conduit 33 through the outlet valve 43 adjacent the end 42 of the bed, while a second gas fraction or product depleted in the first component will be withdrawn from the conduit 28 through the outlet valve 46 adjacent the opposite end 41 of the bed. Optional heat recovery from the second gas fraction to the regenerator 27 can be achieved by a heat exchanger 50 cooperating with the conduit 48.

In many gas purification applications, it will be desirable to introduce the feed gas mixture midway through the regenerator 27 as shown. The feed gas conducted from the inlet valve 39 passes through a heat exchanger 52 in the regenerator 27 through the non-return valve 40 at the desired point of feed injection 54. The preferred locations of the outlet valve 43 and the non-return valve 40 are chosen to minimize the total internal dead volume of the Stirling machine.

If the valves 43 and 46 are directional valves with minimal pressure drop when open, they should each be open only when the pressure is essentially balanced across internal and external conduits, as otherwise the machine could not operate and develop pressure swings. Subject to the above restriction, the valves can in general be operated in batch, semi-batch or continuous separation modes according to application requirements and performance optimization. If valves 43 or 46 are opened during intervals of high pressure, the machine will deliver some work in compression of the corresponding gas stream but with a corresponding reduction in mechanical work output.

Valve control means 57 is provided to control the properly sequenced introduction of feed gas and removal of product gas fractions from the apparatus. The valve control means 57, through suitable undesignated connections shown as broken lines, and sensors if needed, may be programmed to open the valves 43 and 46 only when desired gas concentration levels have been reached in conduits 33 and 28 respectively.

The first product fraction delivered from the apparatus will be mostly highly enriched in the first component if the outlet valve 43 is opened at intervals of *minimum* cycle pressure. Similarly, the second product fraction will be most highly depleted in the first component if the outlet valve 46 is opened at intervals of *maximum* cycle pressure. Hence the outlet valve 46 may be a simple non-return valve, with control provided by external regulation of pressure in the outlet conduit 48. The inlet valve 39 may also be a simple non-return valve, with control provided by internal regulation of pressure in the inlet conduit 37. The outlet valve 43 may be operated mechanically in fixed phase with the piston means to open during intervals of minimum cycle pressure, with control of flow rate provided by external regulation of pressure in the outlet conduit 45.

Injection of feed gas midway in the regenerator can facilitate high purification of both first and second components. According to the value of the two components and the degree of separation desired, it may be more convenient to inject the feed gas mixture adjacent the expansion volume in some applications (i.e., air dehydration), or adjacent the compression volume in other applications (i.e., oxygen separation from air without nitrogen production).

The basic parameters of a Stirling cycle machine include:

(1) the ratio of absolute temperatures $T_1$ and $T_2$;

(2) the ratio of volumetric displacement in compression and expansion volumes;

(3) the phase angle by which net volume displacements in the expansion volume lead volume displacements in compression volume (0 to 180°);

(4) the ratio of total dead volume within the working volume to displacement volume. Note that dead volume includes clearance space in cylinders, conduits, regenerator voidage, and adsorbent porosity.

The above parameters may be varied over wide limits. They determine critical operating characteristics, including:

(a) the ratio of maximum pressure to minimum pressure inside the machine;

(b) the phase relationship between gas flow velocities and pressure at each point in the regenerator;

(c) the ratio of each cyclic distance travelled by gas particles in the regenerator to length of the regenerator.

It will be noted that the reciprocating means 35 or piston drive mechanism of the Figure 1 Stirling machine has not been described in detail. Numerous Stirling machine crank mechanisms and also free piston configurations are known in the prior art, and may be used in conjunction with this invention. Likewise, numerous alternative arrangements of compression and expansion volume displacement means are known such as diaphragms or liquid pistons. The power and displacer pistons may occupy a single cylinder. Separate compression and expansion cylinders may provide the equivalent function of power and displacer cylinders. Compression and expansion cylinders may be compounded in multi-cylinder double-acting Stirling machines. Also, the regenerator may be installed inside the displacer piston of displacer type machines. For purposes of this invention, the above and other prior art Stirling machines configurations are equivalent.

While the Stirling cycle manifestly icorporates cyclic changes in both pressure and gas velocity, it is not immediately evident that a favourable regime for pressure swing adsorptive separation is in fact available. A general theoretical foundation for the present invention is found in a theorem (based on an ideal Stirling machine with isothermal expansion and compression, perfect heat exchange and no friction) correlating flow direction of any point of the regenerator with the pressure extremes. At the cycle pressure maximum, the direction of flow will be from the compression volume toward the expansion volume at all points in the regenerator. At the cycle pressure minimum, the flow direction is from the expansion volume to the compression volume. This theorem is valid for the ideal Stirling cycle machine for all possible parameters of temperature ratio, volume displacement ratio, displacement phase angle and dead volume ratio. Consequently net heat i.e. heat transported over a complete cycle, and the preferentially adsorbed gas component will be transported toward the compression volume or second space in the present invention, while the less readily adsorbed gas component will be transported toward the expansion volume or first space, the relationship of the volumes or spaces being determined by the phase relationship as described.

Operation

As stated previously, the Stirling cycle machine 10 can operate either as an engine producing net work from the power piston 11, and/or a portion of compression work from the gases discharged from the regenerator. Alternatively it can function as a heat pump or refrigerator, absorbing work from the piston 11. When operating in either mode as above, the reciprocating means 35 coordinates the phase relationship between the cyclic pressure variations and the cyclic flow reversals relative to the adsorbent bed so that the volume of gas displaced by the displacer piston 13, the first volume displacement means, leads the volume of gas displaced by the power piston 11, the second volume displacement means. Hence, the volume displacement means coordinates the phase relationship between the pressure and flow reversals such that cyclic gas volume displacements adjacent the first space or the first end 41 of the bed have a leading displacement phase angle with respect to cyclic gas volume displacements adjacent the second space or opposite second end 42 of the bed. This produces the cyclic variations in total pressure and cyclic reversals in direction of flow over the bed so that flow of a first gas fraction under reduced pressure past the bed towards one end of the bed or flow path is enriched in the first more readily adsorbed component, while reverse flow of a second gas fraction under increased pressure past the bed towards the opposite end of the flow path is depleted in the first more readily adsorbed component. This is because the first component is preferentially adsorbed and immobilised by increased pressure on the adsorbent bed when the gas flows in one direction, and the first component is preferentially desorbed when the pressure is decreased and the flow is reversed. The first gas fraction enriched in the more readily adsorbed first component is removed from one end of the bed, while the second gas fraction enriched in the less readily adsorbed component is removed from the opposite end of the bed.

Whether the apparatus is operating either as an engine, a heat pump or refrigerator, the phasing of pressure and the flow cycle is such that, when pressure is at the upper limit for a particular cycle of pressure, the direction of the bulk flow of gas is towards the expansion volume, that is towards the variable volume 20. Similarly, when pressure is at a lowermost point of its cycle, the corresponding direction of bulk flow of the gas is towards the compression volume, that is towards the variable volumes 15 and 19. Also, the Stirling engine or pump can be considered as a means of transporting heat in a particular direction through a complete cycle. This is referred to as a net transport of heat, and in the present invention, it has been found that the net transport of heat moves in the direction of flow of the preferentially adsorbed component, that is towards the compression volume, the variable volumes 15 and 19.

In summary, the invention has the dual function of transporting heat and the preferentially adsorbed component in one direction, while transporting the less readily adsorbed gas component in the reverse direction across a temperature or thermal gradient. If the heat is transported in the direction of the lower temperature, the apparatus functions as an engine. If the heat is transported in the direction of the higher

temperature, the apparatus is a pump or a refrigerator. The process also includes removing the second gas fraction depleted in the preferentially adsorbed component from the working volume at a time when pressure is approximately at its maximum for the cycle, and removing the first gas fraction enriched in the more readily adsorbed component when pressure is approximately at a minimum for the cycle. The first gas fraction enriched in the first component is removed from the second end of the regenerator combination adjacent the second space. The second gas fraction depleted in the first component is removed from the first end of the regenerator combination adjacent the first space.

In practice the effective adsorbent selectivity may be modified by kinetic rate effects. In cases where equilibrium selectivity dominates, preferably pressure variations should be closely in phase with velocity variations over the adsorbent. In the idealized case of isothermal expansion and compression processes in the regenerator/adsorbent bed, perfect heat transfer, no friction effects, low pressure ratios and a phase angle of about 90 degrees, an important relationship between temperature ratios and displacement ratios is found as follows. The first and second volume displacement means, namely the displacer piston 13 and the power piston 11 respectively have respective amplitudes of reciprocation and are associated with the first and second spaces respectively. The ratio of amplitudes of the displacements of the first and second volume displacement means is approximately equal to the ratio of the higher temperature to the lower temperature at opposite ends of the thermal regenerator, when the temperatures are expressed in degrees Kelvin. Since flows in different portions of a Stirling engine regenerator are not in phase because of compressibility effects, the optimum phase of the pressure swings will be sensitive to the distribution of the adsorbent in the regenerator. In cases where adsorbent selectivity is strongly affected by rate effects, substantially different phase relationships may offer best performance. It should be noted that some phase shift will be caused by wave propagation delays in pores of the adsorbent, and that these effects may be substantial at higher operating speeds depending on adsorbent structure. At excessively high speeds, gas separation will be impaired.

Adsorbent working capacity and selectivity will generally be improved by higher cycle pressure ratios. The Stirling cycle pressure ratio is sensitive to the phase angle and amplitude ratio of volume displacements, the temperature ratio expressed in degrees Kelvin, the ratio of dead volume to displacement volume and in this invention to the adsorbent working capacity. Pressure ratio is higher for smaller phase angles between expansion and compression displacements, for lower ratios of dead volume to displacement volume and for lower adsorbent working capacities.

In the design of conventional Stirling engines, it is generally desired to achieve high efficiency and high power density, hence high operating speeds. Dead volume must be substantial in order that effective heat exchange with low flow friction losses will be achieved. The phase angle between compression and expansion displacements is usually about 90°, which favours good efficiency and power density. In the present invention, limitations on operating speeds may be required by use of a highly porous structure and limited mechanical strength of common adsorbent materials. Hence, Stirling machines designed according to the invention will often be relatively low speed machines, operating sometimes in the order of a few revolutions per minute. For machines delivering mechanical power, the phase angle should be between 30 degrees and 150 degrees.

Figs. 2 through 4

Major characteristics of the gas mixture within the thermal regenerator and adjacent the adsorbent bed will now be described.

Referring to Fig. 2, the horizontal axis of the graph represents linear position of the gas flow path through the adsorbent/regenerator combination 27, 34, from adjacent the expansion volume or space 20 to the compression volume or space 15, 19. The vertical axis of the graph designates approximately gas composition mixture when expressed as mole fractions of a two component gas mixture. The gas mixture has a more readily or strong adsorbed component 68 concentrated towards the compression space, while the less readily or strongly adsorbed component 69 is concentrated towards the expansion space. A concentration wave front 70 exists between regimes of the two components and moves cyclically in the same direction as the bulk gas flow, which is shown as an arrow 72 when the gas flows towards the compression space, and as an arrow 73 when it flows towards the expansion space. The wave front velocity is lower than the bulk gas flow by an amount dependent on adsorbent selectivity. Ideally the wave front will move between extreme positions 75 and 76 shown as broken outlines so as to avoid "breakthrough" of the wave front beyond ends of the regenerator bed, for reasons as will be described.

Referring to Fig. 3, the horizontal axis of the graph is identical to that in Fig. 2, and the vertical axis of the graph depicts temperature of the gas. Thus this is a simplified temperature profile with $T_1$ being the temperature adjacent the expansion volume of the regenerator, and $T_2$ being the temperature adjacent the compression volume for an engine. Arrows 83 and 84 represent flow directions for the instances of minimum and maximum pressures of the cycle respectively. At the moment of minimum pressure, flow is towards the compression space 15, 19 per the arrow 83. In the conventional Stirling engine, the gas would tend to warm the regenerator material by forced convection, creating an upward temperature swing or rise as shown in broken

outline as 86. In the present invention, this temperature swing tends to increase the desorption induced by the pressure minimum, but will itself be cancelled in part by cooling induced by the latent heat of desorption. Conversely, at the moment of maximum pressure, the flow per arrow 84 is towards the compression space 20 and the adsorption induced by the pressure swing tends to be reinforced by a downward temperature swing of the bed shown as broken line 87, which is not cancelled by the latent heat of adsorption. In prior art Stirling engines, the temperature swing effect would be as shown by the broken lines 86 and 87 in Figure 3, which would contribute to efficiency losses, without the aforesaid compensating effect of the invention associated with the latent heat of adsorption. Hence the engine embodiment of the present invention offers improvements both to the effectiveness of the adsorption process, and also to the cycle thermodynamic efficiency in this aspect. An arrow 88 represents direction of net heat transport.

Figure 4 is an analogous temperature profile for a heat pump embodiment in which the expansion space 20 is at $T_1$ which is lower than the compression space 15, 19 which is at $T_2$. In a conventional Stirling cycle heat pump, there is an upward temperature swing 91 and a corresponding downward temperature swing 92, both shown in broken outline. The upper temperature swing now arises with the maxiumum pressure flow, shown in direction of arrow 94, which is in opposition to the desired adsorption. The amplitude of the temperature swing will be increased further by the release of latent heat by pressure swing induced adsorption. Hence, in the heat pump embodiment the temperature swing is adverse to gas separation effectiveness and to cycle thermodynamic efficiency. It will thus be desirable to provide high heat capacity in the heat pump regenerator so as to minimise the actual temperature swing. The arrow 88 again represents direction of net heat transport.

Adsorbent selectivity between the gas components has an effect on the operation of this invention. The term "preferentially" as used herein refers to a component that is more readily adsorbed relative to a second component when the adsorbed molar concentration of the first species changes relatively more strongly with varying partial pressure of the first species, while the adsorbed molar concentration of the second species changes relatively less strongly with varying partial pressure of the second species. The above occurs within the operating regime of pressures, temperatures, gas compositions and cycle speeds over a particular portion of the adsorbent bed. This definition relates selectivity to the active adsorption and desorption of gas species under pressure swings, as opposed to the static capacity of the adsorbent bed under some average condition.

In the case of high adsorbent selectivity between gas components and/or large capacity of the adsorbent bed, the velocity of the concentration wave front will be a small fraction of the gas velocity. Then a relatively short adsorbent bed can achieve good separation, without "break through" of the wave front beyond the regenerator. Break through would cause mixing to reduce the separation achieved. The finite width of the concentration wave front must be considered in design optimization.

In the case of low adsorbent selectivity between gas components and/or large capacity of the adsorbent bed, the velocity of the concentration wave front will more closely approach that of the gas velocity. Break through of the wave front can be avoided or minimized by using a relatively low phase angle between compression and expansion displacements, and/or by using a relatively high dead volume (within the regenerator) which will reduce attainable pressure ratio. It may be desired to reduce the adsorbent capacity (for example by admixture with non-adsorbent material, or by use of thin adsorbent coatings) in order that the machine more closely approach the operating characteristics of a conventional Stirling machine, with gas separation as a secondary role.

Some examples of specific applications of the Figure 1 embodiment are now described.

Example No. 1

Oxygen separation from air may be achieved using a zeolite such as molecular sieve 13X, which adsorbs nitrogen more readily than oxygen. Air is introduced through the inlet valve 39. An oxygen enriched gas fraction will be produced through the outlet valve 46, while a nitrogen enriched fraction will be produced through the outlet valve 43. If temperature $T_2$ is ambient temperature and heat is supplied to the heat exchanger 25 such that temperature $T_1$, is greater than temperature $T_2$, the machine is a Stirling engine which will deliver mechanical work after losses are taken into account. With the adsorbent operating at elevated temperatures, it will be necessary to use a relatively high mean working pressure to achieve adequate adsorbent loading and selectivity. Thus air entering inlet valve 39 must be already compressed.

Conversely if the heat exchanger 25 is at a lower than ambient temperature i.e., temperature $T_1$ is less than temperature $T_2$ the machine can be a combined refrigeration and dehydration and air separation plant. The refrigerator will actively reduce temperature $T_1$ below ambient until the cooling load including thermal leakage is in balance with the machine's cooling capacity. The heat rejection temperature $T_2$ and the position of the feed injection point 54 in regenerator 27 are designed to ensure that the temperature at the feed injection point is above zero degrees centigrade, to prevent frost formation in the regenerator. Then water, carbon dioxide and nitrogen will be concentrated toward the outlet valve 43 at the warmer portion of the apparatus, while oxygen will be concentrated to the outlet valve 46 at the colder end.

In this case it will be appropriate to operate at a much lower mean working pressure than in the

case of the engine, because the adsorbent loading must be kept well below saturation in order to achieve good selectivity. Good separation may be achieved at temperatures between zero degrees centigrade and minus 75 degrees centigrade with air introduced to the machine at atmospheric pressure.

A simple modification to the embodiment of Fig. 1 enables the apparatus 10 to perform pressure swing separations at low temperatures using a Stirling refrigeration cycle. The modification includes elimination of both the heat exchanger 25 cooperating with the conduits 24 and 28, and the heat exchanger 50 within the regenerator. Portions of the apparatus associated with the expansion volume 20, the conduits 24 and 28 and the first end 41 of the regenerator 27 are enclosed in an insulating jacket 60, broken outline, to reduce heat transfer from ambient into the portion of the machine which is cold. There is no external refrigeration load, and heat leakage into the cold portions of the machine is minimised by the thermal insulation enclosure. This embodiment is particularly suitable for adsorption separations most effectively performed at reduced temperatures. Mechanical work expended in refrigeration to keep the expansion volume of the machine sufficiently cold is offset by reduced compression work for separation where favourable adsorbent uptake and selectivity are achieved at low pressure and at reduced temperatures. The low temperature $T_1$ is attained in conduits 24 and 28 and adjacent spaces and can be used for various separations, one example of which is shown below.

Example No. 2

If the working fluid is air, the modified machine will deliver cold oxygen enriched air through the outlet valve 46, and this will represent the cooling load. If the adsorbent has no selectivity for oxygen and nitrogen separation, but strongly adsorbs water, the machine delivers cold dehydrated air and may be used as a frost-free air cycle refrigerator.

This apparatus is evidently suitable for many gas or vapour phase separations, including all the present applications of conventional pressure swing adsorption. The gas separation process is conducted in a combined cycle with thermal power conversion or refrigeration. The invention provides full scope and much flexibility for energy recovery from gas separation processes.

Example No. 3

Hydrogen is a preferred working fluid for Stirling cycle machines because of its unique heat transfer properties and low viscosity. It is known that heavy hydrogen isotopes (deuterium and radioactive tritium) are differentially adsorbed relative to ordinary hydrogen on many materials including hydride forming metals at ambient or elevated temperatures, and on zeolites at low temperatures. Stirling engines or cooling machines may use hydrogen as a working fluid, while concentrating the trace isotopes. In nuclear power plants, dual function Stirling machines according to the invention could use helium as the working fluid to concentrate tritium contaminated reactor coolant helium. Tritium recovery is important for safety reasons, and in future fusion power plants will be important because of the fuel value of the tritium. Using appropriate isotope selective adsorbent, deuterium in natural hydrogen may also be concentrated by Stirling cycle engines or cooling machines adapted according to this invention. Higher concentration ratios may be achieved in large installations by cascading engines or cooling machines in series and parallel multi-stage separation plants.

Alternatives and equivalents

Fig. 5

A second main embodiment of the invention 102 serves as a thermo compressor, which has a thermodynamic cycle which is more closely based on the well known Ericsson cycle rather than the Stirling cycle. The main difference between this embodiment and that of the Fig. 1 is that the power piston 11 and associated power cylinder 12 are eliminated because the engine delivers compression work as opposed to mechanical work. Other features of the invention are basically similar to the embodiment Fig. 1 and are described briefly as follows.

A displacer cylinder 104 has a double-acting displacer piston or means 106 mounted on a displacer piston rod 108 which is sealed with high pressure seals 109, and has a small cross sectional area relative to cross sectional area of the cylinder 104. The rod 108 is reciprocated by a reciprocating means 110. The displacer piston 106 divides the cylinder 104 into the first space, or expansion volume 111, and a second space or compression volume 113. A conduit 115 extends from the first space 111, through a heat exchanger 117 to a first end 118 of a thermal regenerator 119. The thermal regenerator also contains adsorbent material 120 and is an adsorbent/regenerator combination essentially similar to the combination regenerator of Fig. 1. The regenerator has a heat exchanger 121 extending from a non-return valve 123 to an outlet conduit 125 which delivers a gas fraction from the first end 118. An inlet conduit 126 has outer and inner non-return inlet valves 128 and 129, a heat exchanger 130 and a discharge or point of injection 132 within the regenerator to determine the point of discharge of feed gas mixture fed into the apparatus. A conduit 134 extends from an opposite or second end 133 of the thermal regenerator, through a heat exchanger 136 and communicates with the second space 113 or compression volume. An outlet conduit 138 communicates with the second end 133 and has an outlet valve 139 which is controlled through a valve control means 140 to open to discharge a gas fraction as required.

When compared with the first embodiment, it can be seen that, in effect, the previously

described first and second volume displacement means are combined into the first double-acting displacer piston or means 106 so that the phase angle between the first and second displacer means is 180 degrees. This results in the compression volume and expansion volume being almost equal and 180 degrees out of phase. The machine can be either operated as an engine, in which case $T_1$ is higher than $T_2$, or as a heat pump or refrigerator, in which case $T_2$ is greater than $T_1$. As there is no power piston, only modest pressure ratios can be achieved even with high temperature ratios unless one of the components changes phase while in the regenerator combination 119, 120. In operation of the engine, there will be a substantial phase difference between pressure variations and flow in the regenerator, approaching 90 degrees in the limit of zero feed throughput when the apparatus ceases to deliver any useful work. This phase difference is reduced in a preferred operation mode in which the outlet valve 139 is opened by the control means 40 during the lowest pressure interval of the cycle. Phase shift between pressure and regenerator flow can be further reduced by increasing feed throughput, at a penalty of reduced pressure ratio. In effect, this process involves converting a portion of the heat supplied to the relatively hot space to compression work by delivering at least a portion of the separated gas fraction at elevated pressure relative to the pressure at which the feed gas mixture is introduced into the process.

Example No. 4

This Fig. 5 embodiment has the advantage of extreme simplicity. Its use will be attractive in applications where a highly adsorbed contaminant is to be removed from a gas which is also to be compressed. For example, well head natural gas compression can be combined with purification to remove hydrogen sulphide, water and carbon dixode, while the gas itself is compressed through a modest pressure ratio. In this particular example, the heat source to power the apparatus may be provided by combustion of the waste gas stream.

In view of the substantial phase shift in the regenerator between pressure and flow, this embodiment may be applied more favourably to separations where adsorptive selectivity is controlled by rate effects, since regenerator flow will be approximately in phase with the time rate of change of pressure.

A simple modification to the Fig. 5 embodiment 102 is to substitute the non-return valves 123 and 128 for positively timed, two-wave valves which are also controlled by the control means 140, by undesignated connections shown in broken outline. This alternative apparatus may be operated in close analogy to a Gifford-McMahon cooling machine. In this alternative, temperature $T_2$ may be ambient, and temperature $T_2$ is greater than $T_1$. The apparatus is now powered by compression energy of a pressurised feed gas mixture introduced through the inlet valve 128 in the inlet conduit 126. The valve 128 is opened after the displacer piston 106 is extended to an outer portion of the stroke so that the compression space 113 is at its maximum and the pressure is fairly low and the outlet valve 139 is closed. The entering feed gas mixture through the conduit 126 compresses gas already in the compression space 113 until the valve 123 is opened by the control means to deliver some product gas fraction depleted in the more readily adsorbed component. The pressure in the conduit 125 is now slightly less than the supply pressure in the conduit 126. The inlet valve 128 is closed, and the displacer piston 106 is retracted to the bottom of its stroke, displacing gas from the compression space 113 to flow through the regenerator 119 into the space 111 with cooling over the regenerator and through a consequent pressure drop. The outlet valve 139 is then opened, reducing pressure further and delivering gas enriched in the more adsorbed component. When the pressure in the system is reduced to the minimum level, the valve 139 is closed and the displacer 111 retracts to displace gas from the space 113 through the regenerator to the space 111, becoming warmer and thus providing an initial pressure rise to complete the cycle.

The Gifford-McMahon cycle has a major advantage that high pressure ratios can be imposed externally, but, unlike other embodiments, has the disadvantage of relatively low thermal efficiency because of irreversible gas expansion.

Fig. 6

A third embodiment of the invention 148 utilises two similar displacer and regenerator combinations, within a single working volume. in which the two displacers are operated out of phase. The apparatus has a flow path having generally similar first and second portions 150 and 151 respectively which resemble a flow path portion of the Fig. 5 embodiment and have first and second displacer cylinders 153 and 154 with first and second double-acting displacers 155 and 156 respectively. The displacers 155 and 156 have respective rods 159 and 160 which cooperate with a reciprocating means 162 to reciprocate the displacers within the respective cylinders at equal frequencies but phased apart. The first displacer 155 divides the cylinder 153 into a first space or an expansion space 163 and a second or compression space 165. The displacer 156 divides the cylinder 154 into a first space or expansion space 168 and a second space or compression space 170. A connecting conduit 172 interconnects the compression spaces 165 and 170 so that pressure throughout the embodiment 148 is essentially equalised.

A first thermal regenerator 175 has a first end 176 connected by conduits 176 and 177 to the expansion and compression spaces respectively of the first cylinder 153. Heat exchangers 178 and 179 at temperatures $T_1$ and $T_2$ cooperate with the conduits 176 and 177 respectively to maintain the adjacent spaces at the particular temperatures of

the heat exchangers. An inlet conduit 181 controlled by a non-return inlet valve 182 feeds a feed mixture of gases into a second end of 180 the regenerator adjacent the expansion space 165. An outlet conduit 183, controlled by a non-return outlet valve 184 discharges from the first end a gas component separated from the gas mixture, and also cooperates with the conduit 176. An outlet conduit 187 controlled by a mechanically operated outlet valve 188 discharges from the second end another gas fraction. The regenerator 175 contains adsorbent material 189 and thus is an adsorbent/regenerator combination in accordance with the invention. It can be seen that the first portion 150 of the apparatus resembles closely the thermo compressor embodiment 102 of Fig. 5, with the exception of removal of heat exchanger within the regenerator.

In contrast, the second portions 151 of the flow path has a second thermal regenerator 190 which contains non-adsorbent heat storage material, i.e., the regenerator 190 is basically conventional and is *not* a combination regenerator. Thus, the portion 151 does not provide any gas separation function, and instead is to provide an appropriate connection to the phase angle between the first and second portions. This is to attain the desired pressure variations in a desired phase relationship with flow through the regenerator combinations 175, 189 and also to improve the pressure ratio that is normally relatively low with use of the single thermo compressor of Fig. 5. The second portion 151 has conduits 192 and 193 interconnecting the regenerator 190 with a first or expansion space 168 and a second or compression space 170 of the cylinder 154. Heat exchangers 195 and 196 at temperatures $T_3$ and $T_2$ respectively cooperate with the conduits 192 and 193 so as to maintain the respective expansion spaces 168 and 170 at the required temperatures. Clearly both regenerators 175 and 190 are exposed to respective thermal gradients due to the adjacent heat exchangers.

Preferably, the displacer cylinder 156 has a larger displacement than the cylinder 153 so that pressure variations from the second portion 151 dominate the flow within the first portion 150. This enables a higher pressure ratio to be attained, and increases flexibility of design, both with reference to temperature variations and cycle efficiency. When the piston 156 is fully extended, the pressure is reduced by cooling gas drawn into the space 170. Similarly, when the piston 156 is fully retracted, the pressure is increased by heating gas drawn into the space 168.

When operated as a thermo-compressor, temperature $T_1$ is equal to temperature $T_3$, both of which are greater than temperature $T_2$, which is commonly ambient. Thus the thermal gradients have equal upper temperatures and equal lower temperatures. Compared to the more simple thermo-compressor of Fig. 5, the embodiment 148 has much greater flexibility to obtain an optimal phase relationship between the pressure swing and gas flow over the adsorbent/regenerator combination 175, 189. This embodiment is more suitable for separation of less strongly adsorbed gases, when compared with the previously described embodiment of Fig. 1.

In summary, when considering the first portion 150 of the flow path as a thermocompressor, it can be seen that the first and second volume displacement means, as previously defined, have been combined into a first double-acting displacer means 155, so that the phase angle between the first and second volume displacement means is 180 degrees. The displacer cylinder 153 cooperates with opposite ends of the regenerator combination 175, 189 and with the displacer means 155 so that the displacer means 155 separates the first and second spaces. The regenerator combination 175, 189 has a thermal gradient defined by first and second temperatures $T_1$ and $T_2$, in which the first space of the working volume is a temperature $T_1$ and the second space of the working volume is at the temperature $T_2$. When referring to the second portion 151, the second thermal regenerator 190 cooperates with opposite ends of the second displacer cylinder 154 and is subjected to a second thermal gradient defined by the second temperature $T_2$ and a third temperature $T_3$ in which the third temperature equals the first temperature $T_1$. Thus the thermal gradients of the regenerators of each portion are essentially equal.

Example No. 5

An attractive application for the thermo-compressor embodiment as above described is production of preheated and compressed oxygen enriched air for combustion in a furnace, gasifier or high temperature engine cycle. Some of the combustion heat or waste heat is applied to the heat exchangers 178 and 195. Air is supplied through the non-return inlet valve 182 through the inlet conduit 181, and oxygen depleted air is released at ambient temperature through the outlet valve 188, which is opened at intervals of minimum cycle pressure, Hot compressed oxygen is delivered through the non-return valve 184 in the outlet conduit 183 to the combusution furnace or other load.

An alternative application of the Fig. 6 embodiment is for operation as a modified Vuilleumier cycle cooling machine so as to operate between a low temperature and ambient. In this alternative, pressure swings in the apparatus are generated by thermo compression. When operated as a Vuilleumier refrigerator or as a heat pump, the larger displacer 156 cooperates with the regenerator 190 which operates as a thermocompressor, imposing a pressure regime on the regenerator 175. The smaller displacer 155 imposes correctly phased flows to obtain a cooling effect at the heat exchanger 178 at the temperature $T_1$. In this alternative, the temperature $T_3$ is greater than the temperature $T_2$, and the temperature $T_1$ is lower than temperature $T_2$. The reciprocating means 162 is modified so that the

displacer 156 leads the displacer 155 by about 90 degrees of phase. The refrigeration effect will be delivered partly as cooling load at the heat exchanger 178, and partly as a cold compressed gas delivered from the non-return outlet valve 184.

It is evident by comparison with the previous embodiment that alternative design selections of inlet and outlet valves, associated heat recovery coils and the feed injection location, not shown specifically, in the regenerator combination 175 are admissable within the scope of this invention and that features of the particular embodiments shown may be interchanged.

In summary, the refrigeration alternative of the Fig. 6 embodiment differs from the thermo-compressor embodiment mainly in the thermal gradients imposed on the regenerator. The regenerator combination 175 of the first portion, which has the adsorbent 189, has a thermal gradient defined by first and second temperatures in which the first temperature is lower than the second temperature and the second temperature is near ambient. However the second portion of the flow path has the second thermal regenerator 190 (without an adsorbent) and is subjected to a second thermal gradient defined by the second temperature $T_2$ and the third temperature $T_3$, in which the third temperature is elevated above ambient. Various means to supply heat to the apparatus at the third temperature are provided, so as to drive the displacer and reciprocating means in such a manner as to obtain gas separation together with refrigeration functions.

Fig. 7

A fourth embodiment 201 of the invention is for gas separation, and may be coupled together in series or in parallel to provide multiple separation steps of a complex process. Furthermore, as will be described with reference to Fig. 8, this invention, as well as the previously described embodiments, can also be used for chemical reactions. The fourth embodiment shows direct coupling of an engine with a refrigerator within a single Stirling cycle machine. One particular use of this embodiment is to deliver hot compressed oxygen to a high temperatur combustion process, in which the machine can be powered entirely by waste heat from the combustion process, thus avoiding the high cost of mechanical energy required for conventional air separation processes.

The embodiment 201 includes a stepped displacer cylinder 203 having outer and inner cylinder portions 205 and 206, in which the portion 205 is smaller in diameter than the portion 206. A stepped displacer 208 is complementary to the inner and outer cylinder portions and has a displacer rod 209 which is sealed at 210. A power piston 212 is reciprocable within a power cylinder 214 and a conduit 216 interconnects of variable volume 215 of the power cylinder with the inner cylinder portion 206. The piston 212 has a piston rod 219 which, similarly to the rod 209 cooperates with a reciprocating means 221 which reciprocates the piston 212 and the displacer 208 within their respective cylinders, at a similar frequency but phased apart. The displacer 208 divides the internal volume of the displacer cylinder 203 into a variable volume 225 in the outer cylinder portion, a variable volume 227 adjacent the lower portion of the inner cylinder portion 206, and a third variable volume 229 in a portion of the displacer cylinder which bridges the inner and outer portions. Similarly to the Stirling engine embodiment described with reference to Fig. 1, the variable volume 225 is the expansion volume or first space, and the sum of the variable volumes 215 and 227 is the compression volume of the machine and is termed the second space. The third variable volume or space 229 communicates with an intermediate conduit 231 connected adjacent an intermediate portion 232 of the displacer cylinder bridging the inner and outer portions thereof.

The embodiment 201 has a flow path including a conduit 233 extending from the first space 225, through a heat exchanger 235 to a first end of a thermal regenerator 238 containing an adsorbent bed 239, which cooperate to produce an adsorbent/regenerator combination as before. The flow path also includes a conduit 240 having a head exchanger 241 in which the conduit 240 communicates an opposite end of the regenerator combination 238 with the variable volume 227 or second space.

An inlet conduit 243 having an inlet valve 245 supplies feed gas to the interior of the thermal regenerator/adsorbent bed. Outlet conduits 248 and 247 provided with outlet valves 250 and 251 respectively communicate with opposite second and first ends 252 and 249 respectively of the regenerator combination.

With the exception of the stepped displacer 208, it can be seen that the structure above described closely resembles the Stirling cycle machine as described with reference to Fig. 1. The embodiment 201 differs mainly by the provision of the third space 229 and the intermediate conduit 231 which communicates with an intermediate combination portion 253 of the regenerator combination 238, 239. The regenerator combination has the intermediate portion 255 disposed between the opposite ends of the regenerator, so that first and second combination portions 255 and 256 extend between the intermediate portion and the first and second ends of the regenerator. In operation, the reciprocating means 221 reciprocates the displacer 208 and power piston 212 to function as volume displacement means so that the displacer 208 leads the piston 212 as before described. This provides cyclical reversal of flow and variations of pressure on the bed. The displacement means communicates also with the third space 229 to produce cyclical reversals in direction of flow of the gas between the third space and the intermediate portion. Due to relative diameters of the portions of the displacer 208, the mass flow in the second portion 256 is greater

than that the mass flow in the first portion 255. Because the displacer 208 functions as a single entity, the volume displacements relative to the first and third spaces 225 and 229 are in phase.

For a particular application, the heat exchanger 235 is heated at an elevated temperature $T_1$ and the heat exchanger 241 is at temperature $T_2$ which is ambient. An insulating jacket 259 extends to enclose portions of the flow path adjacent the intermediate conduit 231, the intermediate portion 253 and adjacent portions of the inner and outer cylinder portions 205 and 206. The insulating jacket reduces flow of heat into the apparatus from the outside, and thus enables low temperatures to be attained adjacent the intermediate conduit as follows.

The apparatus has a refrigerator section being the lower flow path including the conduits 231 and 240, the second portion 256 and associated portions of the displacer cylinder. This resembles a conventional Stirling cycle heat pump or refrigerator in which a low temperature is generated at the conduit 231 and heat is transported from the space 229 to the space 227. The upper flow path of the apparatus including the conduits 233 and 231 and associated first regenerator portion 255 and cylinder portions functions as a Stirling engine in which heat to power the engine is applied at the heat exchanger 235. Because there is a greater flow of gas in the lower flow path than the upper flow path, there is a net transport of heat from the space 229 to the heat exchanger 241, providing the refrigeration effect. It can be seen that each portion of the regenerator is subjected to a respective temperature gradient which has a lower temperature adjacent the intermediate portion 253, and higher temperatures exist adjacent outer ends of the regenerator bed.

The portion 256 of the regenerator combination is cooled for selected separation of oxygen and nitrogen under reduced pressures, while rejecting water and carbon dioxide into the outlet conduit 248 which contains nitrogen enriched air. The portion 255 of the regenerator is cooled adjacent the intermediate portion 253 by the adjacent cooler second portion 256 and provides further separation of oxygen towards the hotter end thereof, and nitrogen towards the colder end thereof, while supplying mechanical energy to at least assist in powering the apparatus.

It is noted that both portions of the regenerator contribute to separation of oxygen and nitrogen in a two stage process in which volume displacements at the intermediate regenerator portion 253 are in phase with volume displacements at the first regenerator portion 255. Similarly to the Fig. 1 embodiment, the phase relationship between the pressure and flow reversals is coordinate such that the cyclic gas volume displacements adjacent the first end of regenerator combination have a leading displacement phase with respect to cyclic gas volume displacements adjacent the second end of the regenerator combination. For certain applications, the insulation is provided adjacent the intermediate portion 253 and related conduits so that temperature adjacent the intermediate regenerator and associated conduits is lowered relative to temperature at both ends of the regenerator.

Fig. 8

A fifth embodiment 266 of the invention is particularly adapted for gas phase reactions in a reaction zone located inside a Stirling cycle machine. Adsorbent material in the regenerator separates at least one product from reactant components of the reaction, so as to maintain the reaction off equilibrium, thus increasing yield or conversion rate of the reaction. In the case of an exothermic reaction, the heat of reaction can be used, at least in part, to drive a Stirling engine. In the case of an endothermic reaction, the heat adsorbed or required by the reaction is transferred from the hotter portion of the apparatus which operates as a Stirling cycle refrigerator or heat pump.

The fifth embodiment 266 resembles a modified Stirling cycle machine and includes the body, not shown, having a working volume which includes a displacer cylinder 268 having a displacer piston 269, and a power cylinder 271 having a power piston 272. The displacer piston divides the displacer cylinder into variable volumes 274 and 275, and the power piston communicates with a variable volume 277. A conduit 278 interconnects the volumes 275 and 277 and similarly to the previous embodiment, the volume 274 is referred to as the expansion or first space, and the sum of the volumes 275 and 277 is referred to as the compression space or second space. A reciprocating means 281, shown only partly, cooperates with rods 279 and 280 connected to the displacer 269 and the piston 272 respectively to reciprocate the pistons out of phase so that an increase of the expansion volume leads to an increase of the compression volume.

A thermal regenerator 282, cooperating with adsorbent material 283 to produce an adsorbent/regenerator combination, has ends 273 and 276 connected to the first and second spaces of the displacer cylinder 268 by conduits 284 and 285 respectively, and heat exchangers 286 and 287 cooperate with the conduits 284 and 285 and are maintained at temperatures $T_1$ and $T_2$ respectively. An inlet conduit 290 has, in sequence from an outer end thereof, a gas purifier 291, a compressor 293, a first non-return inlet valve 295, a heat exchanger 296 within the thermal regenerator and a second non-return valve 298 which cooperates with the conduit 284 which in turn feeds into an adjacent first end of the regenerator 282. If desired, the compressor 293 can be coupled to the reciprocating means 281 through a connection 300, shown in broken outline, so as to drive the compressor, at least in part, with power from the Stirling engine.

The power cylinder 271 is shown in an inverted position to illustrate more clearly the function of

product separation in liquid form. A lower portion of the power cylinder 271 acts as a liquid separator 302 and has a liquid discharge valve 304 which is opened periodically to remove liquid product of the reaction. A purge valve 306 positioned above the separator 302 is open periodically to discharge "inert" gases which might otherwise accumulate in the power piston. In applications where the product of the reaction does not liquefy, or purging of inert gases is not a problem, the previously described power cylinder and power piston of Fig. 1 could be substituted for that shown in Fig. 8.

A major feature of the embodiment 266 is the provision of means to permit reaction of two or more gases within the reaction zone of the working volume, and removal of one or more components of the reaction to increase conversion rate. Because the rate of many gas phase chemical reactions is enhanced by use of a catalyst, in most cases it is preferable to provide a catalyst in the reaction zone where the chemical reaction is to take place. For example, if the gas phase reaction is an exothermic reaction, which liberates heat, the catalyst is best provided in the higher temperature portion of the apparatus, for example in the expansion or first space 274 where it is shown as a matrix 308. If the gas phase reaction is endothermic, which absorbs heat, the catalyst would best be provided in a second space 275 of the apparatus, and receives heat transported from the first space. Clearly, separate spaces for the reaction can be provided if necessary, the catalyst adjacent either end of the regenerator, or anywhere in the flow path at an appropriate temperature. The reaction zone is usually associated with a variable volume space which can remove exothermic heat or provide endothermic heat of reaction.

Example No. 6

A particularly useful application of the embodiment 266, using an exothermic reaction, is the synthesis of ammonia from nitrogen and hydrogen over a promoted iron catalyst. In this reaction, the regenerator combination 282, 283 contains an adsorbent which preferentially adsorbs ammonia relative to hydrogen and nitrogen, for example a zeolite such as molecular seive 13X. The feed gases of nitrogen and hydrogen in correct proportions are fed into the inlet conduit 290, purified by the purifier 291 with the exception of minor "inert" gases such as argon and methane, and compressed in the compressor 293 to an operating pressure of about 120 atmospheres. The compressed feed gas is delivered through the inlet valve 295 to the heat exchanger 296 which heats the feed gas to the synthesis temperature $T_1$ of about 450 degrees C. The preheated feed gas is injected into the conduit 284 of the Stirling engine through the non-return valve 298 and passes through the heat exchanger 286 which serves as a start-up heater.

The catalyst in the expansion volume 274 enhances the speed of the reaction so that the product, ammonia gas, is transported by pressure swing adsorption towards the second space or cooler end of the apparatus, that is towards the cooler end of the regenerator, through the conduit 285 where it is condensed in the compression space 275 by removing heat with the heat exchanger 287. Liquid ammonia condenses in the separator 302 from where it is removed during intervals of high pressure through the discharge valve 304. It is added that any liquid ammonia remaining in the separator during intervals of lower pressure would tend to evaporate and thus reduce the amplitude of pressure swings in the systems. Conversely, the presence of some freely mobile liquid ammonia (i.e. droplets in the gas mixture, in the cooler end of the regenerator would tend to increase the amplitude of pressure swings.

The zeolite adsorbent in the regenerator 282 has much higher affinity for ammonia than for hydrogen or nitrogen. However, nitrogen and "inert" gases including argon and methane will be preferentially adsorbed relative to hydrogen. Hydrogen is parametrically pumped into the reaction zone adjacent the hotter end 273. Hence a concentration gradient will be established across the regenerator with the nitrogen and "inerts" more concentrated toward the cold end where the ammonia is also concentrated and liquefied. Excessive build up of inerts will be avoided by periodic opening of the purge valve 306, which will vent the nitrogen rich mixture containing accumulated "inerts" from the separator 302.

It is anticipated that cyclic pressure excursions in this Stirling engine apparatus may range from 120 atmospheres to 200 atmospheres. Since average pressure is than 160 atmospheres, while feed gas injection is 120 atmospheres in this case, it can be seen that the engine actually performs the final stage of feed gas compression within its own regime of cyclic pressure.

At this relatively low synthesis loop pressure of 160 atmospheres, a conventional ammonia synthesis plant could not obtain satisfactory condensation of liquid ammonia without auxiliary refrigeration. In this invention, the lower temperature $T_2$ will correspond to normal ambient temperatures, and refrigeration is not required because ammonia is concentrated within the apparatus. It is expected that the pressure swing adsorption function will remove ammonia very rapidly from the expansion volume of the engine, driving the reaction far from equilibrium and thus enhancing catalyst productivity.

In ammonia synthesis, the desired product, i.e., ammonia, is adsorbed and removed from the reaction zone by adsorption followed by liquefying and removal as a liquid. In other reactions, if an undesirable side product is formed in a side reaction, the side reaction can be suppressed by preventing the side product from leaving the reaction zone, thus maintaining the side reaction at equilibrium. An example of this type of reaction is given in Example No. 7. In both cases, the process of the invention is thus characterized by

combining a chemical reaction function with the gas separation function adjacent a reaction zone, wherein the gas mixture includes at least one reactant and at least one product of the reaction, one of which is preferentially adsorbed in the adsorbent material.

Example No. 7

The potential for application of the invention to endothermics reactions may be illustrated by the important example of synthesis gas production by steam reforming of methane. The main reaction is

$$CH_4+H_2O \leftrightarrows CO+3H_2.$$

In the conventional process, feed methane and steam are passed over a nickel catalyst, at typical conditions of 900°C and 30 atmospheres. A large excess of steam is necessary to prevent carbon deposition on the catalyst, and to drive the reaction forward. The endothermic heat of reaction is supplied by external heating of the high alloy tubes containing the catalyst. These severely stressed catalyst tubes are very costly. High energy costs are also associated with the temperature drop through the tube walls, and the large excess volume of steam required. Also carbon dioxide is produced as a side product in a side reaction which lowers conversion rate of the desired or main product.

In the present invention applied to steam reforming, a heat pump embodiment of Figure 8 will be used to transport lower grade heat from an initial temperature $T_1$ of perhaps 300°C to the reforming temperature $T_2$ of about 900°C. The reaction zone will accordingly be associated with the second space 275 of the Stirling machine. To avoid high temperatures the power piston and drive means can be located in the cooler regime associated with the first space, while maintaining the required phase difference. To increase conversion rate it is desired to concentrate the reactants methane and water into the reaction zone in the space 275, while removing the products carbon monoxide and hydrogen.

The reactants, main products and side products of this reaction can be put in a descending order of adsorption over silica gel or alumina gel adsorbents as follows:

Water
Carbon dioxide
Methane
Carbon monoxide
Hydrogen

Hence steam will be concentrated strongly into the second space 275, while hydrogen and carbon monoxide will be separated and transported toward the first space 274. This achieves the desired separation of products from a reagent. Since the side product carbon dioxide is also concentrated into the reaction zone in space 275, this corresponding side reaction will be inhibited. This exemplifies the ability of the invention to achieve reaction selectivity, where the undesired product is trapped in the reaction zone, whereas the desired product is readily removed. A high partial pressure of carbon dioxide over the catalyst will help suppress carbon deposition. Since adsorbent coefficients are reduced at elevated temperatures, the apparatus may be designed to produce some carbon dioxide with the carbon monoxide, as is desirable for subsequent methanol synthesis.

As the endothermic heat is provided to the reaction zone directly by the reacting gases as the Stirling cycle working fluid, the need for heat exchange through highly stressed catalyst tubes is eliminated. The energy burden of excess steam supply above stoichiometric requirements is avoided, and the process may use relatively low grade heat.

It is seen that this more complex reaction is characterized by transporting by parametric pumping the desired product away from the reaction zone to maintain the desired reacton of equilibrium to assist in high conversion to the desired product, and maintaining by parametric pumping the undesired product within the reaction zone to assist in maintaining the undesired reaction near equilibrium, to reduce conversion to the undesired product.

Some important effects will arise in the operation of an off equilibrium catalytic reaction inside a Stirling engine. Unless auxiliary non-return valves or recirculation blowers are used to make the flow over the catalyst undirectional, the catalyst bed is subjected to a regime of reversing flows and pulsating pressure. It is expected that this regime will be favourable to good mass transfer and heat transfer from the catalyst. Pressure pulsations will generate forced breathing of catalyst pores, with consequently improved mixing.

A more subtle effect will arise from the pressure sensitivity of physical adsorption and hence chemisorption on the catalyst surfaces. Since pressure pulsations will cause reversing flow in catalyst pores and also will in general cause differential adsorption of reactant and product components, parametric pumping effects may be expected within catalyst pores. Such effects may change the reaction kinetics significantly.

If a reactant is more readily or rapidly adsorbed than the products, pressure swing parametric pumping may tend to oppose penetration of that reagent into the catalyst pores, and thus retard the reaction rate. This is a plausible explanation of the results obtained by Baiker for ethylene hydrogenation. Conversely if a reactant is more slowly adsorbed than the product, the product should be removed more rapidly from the interior of the catalyst by pressure swing parametric pumping, and the penetration of that reactant and the reaction rate should be enhanced. As ammonia and hydrogen are both readily adsorbed on an iron catalyst, while adsorption of nitrogen is lower, the above effect may be beneficial in the case of ammonia synthesis.

The thesis work of Jain showed that the rate of

ammonia synthesis can be enhanced by cyclic variations of feed composition. In the present invention, a non-uniform admixture of hydrogen and nitrogen is obtained in the regenerator combination through pressure swing adsorption. Because nitrogen is much less highly adsorbed than ammonia, the characteristic velocity of nitrogen concentration wave front will be faster than the velocity of ammonia concentration wave front. Hence, the machine can be designed so that at least partial break through of the nitrogen concentration wave front back into the catalyst is obtained. Then feed composition cycling over the catalyst will be obtained to some degree by the changing concentration of nitrogen. It will be evident that feed composition cycling may be further enhanced in this invention by separately timed and/or located injection of the feed components. Beneficial chromatographic effects may then be obtained, particularly if adsorbent with high capacity for ammonia is mixed with the catalyst as proposed by Unger and Rinker. In conventional ammonia synthesis plants, feed composition cycling appears to be impracticable because most of the gas flowing through the synthesis loop is recycled.

It will be apparent that many variations to the embodiment of Figure 8 are admissable within this invention. For example, the feed gas could be injected directly into the second or cooler end of the regenerator combination 282 without the heat exchanger 296. This might make control of reactant composition over the catalyst more difficult, but would provide the advantage that any trace carbon dioxide, carbon monoxide and water contaminants would be concentrated by parametric pumping into the ammonia and purge gas effluents, providing some protection to the catalyst.

With appropriately selected catalyst, the embodiment of Figure 8 can be applied directly to methanol synthesis and many other chemical reactions. An important case is Fischer-Tropsch synthesis of hydrocarbons from carbon monoxide and hydrogen reactants, for which the Figure 8 embodiment can favourably influence selectivity between alternative products according to their relative ability to be adsorbed on the selected adsorbent material. Both exothermic and endothermic reactions may be conducted inside Stirling cycle machines based on this invention with changes as discussed previously.

This invention clearly has a wide range of chemical reaction applications, and can be expressed in all embodiments above and in, many embodiments or combinations not limited to those described above.

**Claims**

1. A process for separating components of a gas mixture containing a first component which is more readily adsorbed and a second component which is less readily adsorbed by an adsorbent material, the process including the steps of:

introducing (37, 126, 181, 243, 290) the gas mixture into a working volume having a flow path containing the adsorbent material (34, 120, 189, 239, 283) within an adsorbent bed;

cyclically reversing direction of flow of the gas mixture along the flow path so that direction of the flow alternates between opposite ends of the flow path, cyclically varying the total pressure of the gas mixture between upper and lower pressure limits within the working volume;

simulataneously coordinating a phase relationship between the cyclic pressure variations and the cyclic flow reversals relative to the adsorbent bed such that the first component is preferentially adsorbed and immobilized by increased pressure on the adsorbent bed when the gas flows in one direction (72), and the first component is preferentially desorbed when the pressure is decreased and the flow is reversed (73);

removing from adjacent one end (42, 133, 180, 252, 276) of the adsorbent bed a first gas fraction enriched in the first component, and removing from adjacent the opposite end (41, 118, 174, 255, 273) of the adsorbent bed a second gas fraction depleted in the first component;

providing in the flow path first (20, 111, 163, 225, 274) and second (15, 19, 113; 165; 208, 215; 275, 277) spaces disposed adjacent opposite ends of the regenerator combination, the spaces being at different temperatures to expose the regenerator combination to a thermal gradient; and

passing the flow of gas through the spaces in series with the regenerator combination; the process being characterised by:

providing in the flow path a thermal regenerator (27, 119, 175, 238, 282) to cooperate with the adsorbent bed to produce an adsorbent/regenerator combination (34, 27; 120, 119; 189, 175; 239, 238; 283, 282);

passing through the adsorbent/regenerator combination the flow which passes along the flow path; and

generating the cyclic pressure variations and the cyclic flow reversals by first cyclic gas volume displacements associated with the first space (20, 111, 163, 225, 274) and by second cyclic gas volume displacements associated with the second space (15, 19; 113; 165; 208, 215; 275, 277), such that the first cyclic gas volume displacements have a leading phase angle with respect to the second cyclic gas volume displacements, so as to subject the gas flow to cyclical reversals of temperature, together with the cyclical reversals of pressure and direction flow, so as to facilitate separation of the gas into the first and second fractions, and achieve conversion between thermal energy and compression energy in the gas mixture.

2. A process of operating a modified Stirling cycle machine wherein an internal working volume containing a gas has a flow path containing first (20, 111, 163, 225, 274) and second (15, 19; 113; 165; 208, 215; 275, 277) spaces and a thermal regenerator (27, 119, 175, 238, 282) disposed between the spaces, the first and second spaces being at different temperatures to expose the regenerator to a thermal gradient, the process including the steps of:

cyclically reversing direction of flow of the gas along the flow path so that direction of flow alternates between opposite ends of the flow path; and

cyclically varying pressure of the gas between upper and lower pressure limits within the working volume so that a phase relationship exists between the cyclic pressure variations and cyclic flow reversals relative to the thermal regenerator, the process being characterized by:

(a) providing between the spaces an adsorbent bed containing adsorbent material (34, 120, 189, 239, 283) to cooperate with the thermal regenerator to produce an adsorbent/regenerator combination;

(b) introducing (37, 126, 181, 243, 290) into the working volume a gas mixture containing a first component which is more readily adsorbed by the adsorbent material, and a second component which is less readily adsorbed by the adsorbent material;

(c) generating the cyclic pressure varations and the cyclic flow reversals by first cyclic gas volume displacements associated with the first space (20, 111, 163, 225, 274) and by second cyclic gas volume displacements associated with the second space (15, 19; 113; 165; 208, 215; 275, 277) such that the first cyclic gas volume displacements have a leading phase angle with respect to the second cyclic gas volume displacements;

(d) simultaneously when coordinating the phase relationship between the cyclic pressure variations and the cyclic flow reversals relative to the regenerator combination, preferentially adsorbing and immobilising the first component on the combination bed by increased pressure when the gas flows in one direction (72), and preferentially desorbing the first component by decreasing the pressure when the flow direction is reversed (73); and

(e) removing from one end (42, 133, 180, 252, 276) of the regenerator combination a first gas fraction enriched in the first component, and removing from the opposite end (41, 118, 174, 255, 273) of the regenerator combination a second gas fraction depleted in the first component, thereby also achieving conversion between thermal energy and compression energy in the gas mixture.

3. A process as claimed in claim 1 or 2 further characterised by:

(a) transporting heat from the first space to the second space, in which the first space is at a first temperature ($T_1$) and the second space is at a second temperature ($T_2$),

(b) and removing the first gas fraction enriched in the first component from adjacent a second end (42, 133, 180, 252, 276) of the regenerator combination which is adjacent the second space, and removing the second gas fraction depleted in the first component from adjacent a first end (41, 118, 174, 255, 273) of the regenerator combination which is adjacent the first space.

4. A process as claimed in claim 1, 2 or 3, further characterized by:

(a) removing the second gas fraction depleted in the preferentially adsorbed component from the working volume at a time when the pressure is approximately at its maximum for the cycle,

(b) removing the first gas fraction enriched in the more readily adsorbed component when the pressure is approximately at a minimum for the cycle.

5. A process as claimed in any preceding claim further characterised in that:

(a) in order to generate the cyclical reversals of flow direction and variations of pressure in the working volume, first (13, 106, 155, 208, 269) and second (11, 106, 156, 212, 272) volume displacement means are reciprocated to communicate with the first (20, 111, 163, 225, 274) and second (15, 19; 113; 165; 208, 215; 275, 277) spaces respectively at respective first and second amplitudes of reciprocation, in which the ratio of amplitudes of the displacements is approximately equal to the ratio of the higher temperature ($T_1$) to the lower temperature ($T_2$) when expressed in degrees Kelvin, and the first volume displacement means has a leading phase angle of approximately 90 degrees with respect to the second volume displacement means.

6. A process as claimed in any preceding claim, further characterised by:

(a) locating the adsorbent bed (34, 120, 189, 239, 283) physically within a chamber containing the thermal regenerator (27, 119, 175, 283, 282) so that the regenerator combination is an integral unit.

7. A process as claimed in any preceding claim, in which the regenerator combination (27, 34; 119, 120; 175, 189; 238, 239; 282, 283) has first (41, 118, 174, 255, 273) and second (42, 133, 180, 252, 276) ends associated with the first (20, 111, 163, 225, 274) and second (15, 19, 113; 165; 208, 215; 275, 277) spaces respectively, and the process is further characterised by:

(a) maintaining the first space at a higher temperature than the second space,

(b) removing the first gas fraction enriched in the more readily adsorbed first component from adjacent the second end of the bed and removing the second gas fraction depleted in the first component from adjacent the first end of the bed,

(c) converting some of the heat supplied to the first space to mechanical work or to compression work so as to operate as an engine cycle.

8. A process as claimed in one of claims 1 to 6, in which the regenerator combination (27, 34; 119, 120; 175, 189; 238, 239; 282, 283) has first (41, 118, 174, 255, 273) and second (42, 133, 180, 252, 276) ends associated with the first and second spaces respectively, and the process is further characterised by:

(a) maintaining the second space at a higher temperature than the first space,

(b) removing from adjacent the second end of

the combination the first gas fraction enriched in the more readily adsorbed first component, and removing from adjacent the first end of the combination the second gas fraction depleted in the first component,

(c) conveying heat from the first space to the second space so as to operate as a heat pump cycle or a refrigeration cycle.

9. A process as claimed in claim 8 further characterised by:

(a) insulating (60) the first space (20), the first end (41) of the regenerator combination, and a portion (24, 28) of the flow path extending between the first space and the first end to permit attainment of low temperatures in the first end of the combination to facilitate gas separation.

10. A process as claimed in any preceding claim, further characterised by:

(a) coordinating the phase relationship between the pressure and flow reversals to generate first cyclic gas volume displacements adjacent a first end (118, 174) of the regenerator combination (119, 120; 175, 189) which have a leading displacement phase angle of 180° with respect to second cyclic gas volume displacements generated adjacent the opposite second end (133, 180) of the regenerator combination and maintaining the working volume substantially constant,

(b) converting a portion of the heat supplied to the relatively hot space (111, 163) to compression work by delivering at least one separated gas fraction at an elevated pressure relative to the pressure at which the gas mixture is introduced into the process, so as to operate as a thermo-compressor cycle.

11. A process as claimed in claim 1 further characterised by:

(a) in a first portion (150) of the flow path, coordinating the phase relationship between the pressure and flow reversals to generate first cyclic gas volume displacements adjacent a first end (174) of the regenerator combination which have a leading displacement phase angle of 180° with respect to second cyclic gas volume displacements generated adjacent the opposite second end of the combination, and maintaining the working volume of the first portion substantially constant,

(b) in a second portion (151) of the flow path, providing a second thermal regenerator (190), and generating within the second portion of the flow path a cyclically reversing direction of flow so that the direction of flow alternates between opposite ends of the second flow path, and subjecting the second regenerator to a thermal gradient so as to cyclically vary pressure of the gas between upper and lower pressure limits, so that a second phase relationship exists in the second portion wherein first cyclic gas volume displacements generated adjacent a first end of the second regenerator (190) have a leading displacement phase angle of 180° with respect to second cyclic gas volume displacements generated adjacent the opposite second end of the second regenerator, and maintaining the second working volume to be substantially constant,

(c) communicating the first and second portions (150, 151) of the flow path to attain a desired phase relationship between the flow direction reversals and pressure variations of the first and second portions of the apparatus, so as to provide greater flexibility and pressure differences for use as a thermo-compressor.

12. A process as claimed in claim 11 further characterised by:

(a) providing in the second portion (151) of the flow path reversals of larger volumes of gas than in the first portion (150) of the flow path, so that pressure variations from the second portion will dominate the first portion.

13. A process as claimed in claim 11 or 12 further characterised by:

(a) providing in the regenerator combination (175, 189) of the first portion (150) and in the thermal regenerator (190) of the second portion (151) essentially equal thermal gradients having essentially equal upper temperatures ($T_1$, $T_3$) and essentially equal lower temperatures ($T_2$) in which the first space (163, 168) of each portion is exposed to the upper temperature, so as to operate as a thermo-compressor with enhanced phase relationship.

14. A process as claimed in claim 11 or 12 further characterised by:

(a) in the first portion (150) of the flow path, providing a thermal gradient for the regenerator combination (175, 189) between upper ($T_1$) and lower temperatures ($T_2$), wherein the first space (163) is exposed to the lower temperature,

(b) in the second portion (151) of the apparatus, providing in the second regenerator (190) a second thermal gradient in which the first space (168) is exposed to a third temperature ($T_3$) which is higher than the upper temperature ($T_1$) of the first portion, so as to operate as a Vuilleumier refrigerator or heat pump, so as to obtain gas separations at low temperatures.

15. A process as claimed in claim 1 or 2 further characterised by:

(a) providing communication with the regenerator combination (238, 239) at an intermediate combination portion (253) between opposite first and second ends (249, 252) of the regenerator combination so that first and second combination portions 255, 256) extend between the intermediate portion (253) and first and second ends of the regenerator combination respectively,

(b) cyclically reversing direction of flow at the intermediate combination portion so as to cyclically vary flow through the first and second combination portions.

16. A process as claimed in claim 15 further characterised by:

(a) maintaining the cyclical reversals of flow at the intermediate combination portion (253) in phase with the cyclical reversals of flow relative to the first end (249) of the regenerator combination (238, 239),

(b) cyclically reversing the directions of flow at the intermediate portion (253) so that more gas circulates through the second combination portion (256) than through the first combination portion (255), so that flow of heat relative to the intermediate combination portion and the first and second combination portions result in a net gain or loss of heat at the intermediate portion.

17. A process as claimed in claim 16 further characterised by:

(a) coordinating the phase relationship between the cyclic flow reversals such that cyclic gas volume displacements adjacent the first end (249) of the regenerator combination (238, 239) have a leading displacement phase angle with respect to cyclic gas volume displacements adjacent the second end of the regenerator combination,

(b) providing insulating (259) adjacent the intermediate portion (253) and related conduits (231) so that temperature adjacent to the intermediate portion and associated conduits is lower than temperatures at both ends (239, 252) of the regenerator combination.

18. A process as claimed in claim 1 or 2 further characterised by:

(a) conducting a chemical reaction in a reaction zone, wherein the gas mixture includes at least one reactant and at least one product of the reaction, one of which is preferentially adsorbed in the adsorbent material,

(b) separating the reactant and the product by parametric pumping over the adsorbment material to drive the reaction towards high conversion,

(c) transporting heat relative to the reaction zone to control temperature of the reaction zone.

19. A process as claimed in claim 1 or 2 further characterised by:

(a) conducting a chemical reaction in a reaction zone, wherein the gas mixture includes at least one reactant of the reaction, at least one desired product of a desired chemical reaction, and at least one undesired product of a side reaction, one of the products being preferentially adsorbed in the adsorbent material,

(b) transporting by parametric pumping the desired product away from the reaction zone to assist in maintaining the desired reaction off-equilibrium to assist in high conversion to the desired product,

(c) trapping by parametric pumping the undesired product within the reaction zone to assist in retarding the undesired reaction near equilibrium, to reduce conversion to the undesired product.

20. A process as claimed in claim 18 or 19 further characterised by:

(a) providing a catalyst (308) in the reaction zone (274) to enhance the rate of the reaction.

21. A process as claimed in claim 18 or 19 further characterised in that:

(a) the chemical reaction is exothermic and generates heat of reaction,

(b) the reaction zone is located adjacent the first space (274) so that heat of reaction augments heat in the first space to assist in operation as a heat engine.

22. A process as claimed in claim 18 or 19 further characterised in that:

(a) the chemical reaction is endothermic and adsorbs heat of reaction,

(b) the reaction zone is located adjacent the second space (275) so that the heat required by the reaction is transported from the first space.

23. A process as claimed in claim 18 or 19 further characterised by:

(a) liquefying at least one product of the reaction in a cooler (277) space of the apparatus so as to facilitate separation of the product.

24. A process as claimed in claim 1 or 2 further characterised by:

(a) transferring heat between portions of the regenerator combination (27, 34; 119, 120; 282, 283) and the gas flow relative to either the inlet means (37, 126, 290) or the outlet means (48, 125).

25. An apparatus (10, 102, 148, 201, 266) for separating components of a gas mixture containing a first component which is more readily adsorbed and a second component which is less readily adsorbed by an adsorbent material (34, 120, 189, 239, 283), the apparatus including a body having an internal working volume having first (20, 111, 163, 225, 274) and second (15, 19; 113; 165; 215; 227; 275, 277) spaces, a flow path interconnecting the first and second spaces, and an adsorbent bed containing the adsorbent material and provided in the flow path between the spaces, inlet means (37, 126, 181, 243, 290, to admit gas mixture into the working volume, and outlet means (45, 48; 125, 138; 183, 187; 247, 248; 284, 285) to discharge gas from adjacent opposite ends (41, 42; 118, 133; 174, 180; 255, 256; 273, 276) of the adsorbent bed, volume displacement means (13, 11; 106; 155, 156; 208, 212; 269, 272) associated with the first and second spaces, reciprocating means (35, 110, 162, 221, 281) cooperating with the volume displacement means so as to produce cyclic variations in total pressure and cyclic reversals in direction of flow of the gas, the reciprocating means determining a phase relationship between the cyclic variations of pressure in the gas and directions of flow of the gas over the adsorbent bed, so that flow under reduced pressure past the adsorbent bed towards one space is enriched in the first more readily adsorbed component, while reverse flow under increased pressure past the adsorbent bed towards the opposite space is depleted in the first more readily adsorbed component, the apparatus being further characterised by:

(a) a thermal regenrator (27, 119, 175, 238, 282) cooperating with the adsorbent bed to produce an adsorbent/regenerator combination (27, 34; 119, 120; 175, 189; 238, 239; 282, 283) provided in the flow path between the spaces to receive flow which passes along the flow path,

(b) means for maintaining the first and second spaces at different temperatures ($T_1$, $T_2$) to expose the regenerator combination to a thermal gradient, so as to subject the gas flow to cyclical

reversals of temperature together with the cyclical reversals of pressure and direction of flow so as to facilitate separation of the gas mixture into a first gas fraction enriched in the first component, and a second gas fraction enriched in the second component,

(c) the reciprocating means (35, 110, 162, 221, 281) cooperating with the first and second volume displacement means so that the displacement means reciprocate at the same frequency, and the volume of gas displaced by the first volume displacement means leads the volume of gas displaced by the second volume displacement means by a phase angle of between zero degrees and 180 degrees.

26. An apparatus (10, 102, 148, 201, 266) which resembles a modified Stirling cycle machine, the apparatus including a body having an internal working volume having first (20, 111, 163, 225, 274) and second (15, 19; 113; 165; 215, 227; 275, 277) spaces, a flow path for gas inter-connecting the first and second spaces, a thermal regenerator (27, 119, 175, 238, 282) provided in the flow path between the first and second spaces, the first and second spaces being at different temperatures ($T_1$, $T_2$) to expose the regenerator to a thermal gradient, first (13, 106, 155, 208, 269) and second (11, 106, 156, 212, 272) volume displacement means communicating with the first and second spaces respectively, reciprocating means (35, 110, 162, 221, 281) cooperating with the first and second volume displacement means so that the first and second volume displacement means reciprocate at the same frequency to produce cyclic variations in total pressure and in direction of flow of the gas, the reciprocating means determining phase angle between cyclic variations of pressure in the gas and flow directions of the gas over the regenerator, the apparatus being characterised by:

(a) an adsorbent bed containing adsorbent material (34, 120, 189, 239, 283) cooperating with the thermal regenerator to produce an adsorbent/regenerator combination (27, 34; 119, 120; 175, 189; 238, 239; 282, 283) disposed between the first and second spaces,

(b) the gas being a gas mixture containing a first component which is more readily adsorbed and a second component which is less readily adsorbed by the adsorbment material,

(c) inlet means (37, 126, 181, 243, 290) to admit the gas mixture into the working volume, and outlet means (45, 48; 125, 138; 183, 187; 247, 248; 284, 285) to discharge gas fractions from opposite ends of the regenerator combination,

(d) the reciprocating means subjecting the gas flow to cyclical reversals of pressure and direction flow so that flow under decreased pressure of a first gas fraction past the regenerator combination towards one space is enriched in the first more readily adsorbed component and is discharged through one outlet means, a flow under increased pressure of a second gas fraction past the regenerator combination towards the remaining space is depleted in the first more readily adsorbed component, and the second gas fraction is removed through another outlet means,

(e) the reciprocating means (35, 110, 162, 221, 281) cooperating with the first and second volume displacement means so that the displacement means reciprocate at the same frequency, and the volume of gas displaced by the first volume displacement means leads the volume of gas displaced by the second volume displacement means by a phase angle of between zero degrees and 180 degrees.

27. An apparatus as claimed in claim 25 or 26 further characterised by the volume displacement means having first (13, 106, 155, 208, 269) and second (11, 106, 156, 212, 272) volume displacement means which communicate with the first and second spaces respectively.

28. An apparatus as claimed in claim 25, 26 or 27, further characterized by:

(a) control means (57, 140) adapted to cooperate with outlet valve means (43, 46; 123; 129; 139; 184, 188; 250, 251) so that the second gas fraction depleted in the more readily adsorbed component is removed from adjacent the first space at a time when the pressure is approximately at its maximum for the cycle, and the first gas fraction enriched in the more readily adsorbed component is removed from adjacent the second space when the pressure is approximately at a minimum for the cycle.

29. An apparatus as claimed in one of claims 25 to 28 further characterised by:

(a) auxiliary heat exchangers (50, 121, 296) provided in the regenerator combination (27, 34; 119, 120; 282, 283) and adapted to transfer heat between portions of the regenerator combination and gas flow relative to either the inlet means or the outlet means.

30. An apparatus as claimed in one of claims 25 to 29 further characterised by:

(a) the reciprocating means (35) cooperating with the volume displacement means (11, 13) so that heat is pumped from the first space (20) to the second space (15, 19),

(b) thermal insulation means (60) cooperating with the first space to enable reduction of the temperature of the first space to permit gas separation at reduced temperature.

31. An apparatus as claimed in one of claims 25 to 30 further characterised by:

(a) means to maintain the temperature ($T_1$) of the first space (20, 225, 274) higher than the temperature ($T_2$) of the second space (15, 19; 215, 227; 275, 277),

(b) work conversion means (11, 212, 272) cooperating with the first and second spaces to convert in part heat at the higher temperature to mechanical work or compression so as to operate also as an engine.

32. The apparatus as claimed in claim 25 further characterised by:

(a) the volume displacement means being a double-acting displacer means (106, 155), so that phase angle between first and second gas volume displacements is 180 degrees,

(b) a displacer cylinder (104, 153) cooperating with opposite ends (118, 133; 174, 180) of the regenerator combination and with the double-acting displacer means, so that the double-acting displacer means separates the first (111, 163) and second (113, 165) spaces,

(c) the temperature ($T_1$) of the first space (111, 163) is higher than temperature ($T_2$) of the second space (113, 165) so as to operate as a thermocompressor.

33. An apparatus as claimed in claim 32 further characterised by:

(a) the thermal gradient of the regenerator combination (175, 189) being defined by first ($T_1$) and second ($T_2$) temperatures associated with the first (163) and second (165) spaces respectively, the regenerator combination and the said displacer cylinder being a first portion (150) of the flow path,

(b) a second portion (151) of the flow path having a second double-acting displacer means (156) and a second displacer cylinder (154), the second double-acting displacer means being reciprocable within the second displacer cylinder,

(c) a second thermal regenerator (190) cooperating with opposite ends of the second displacer cylinder, and being exposed to a second thermal gradient defined by the second temperature ($T_2$) and a third temperature ($T_3$), in which the third temperature substantially equals the first temperature,

(d) conduit means (172) interconnecting the first and second portions (150, 151) of the flow path, and the first and second double-acting displacer means cooperating with the reciprocating means to operate at a phase angle which coordinates cyclic variations of pressure and reversals of gas flow past the regenerator combination to improve separation of the components.

34. An apparatus as claimed in claim 32 further characterised by:

(a) the thermal gradient of the regenerator combination being defined by first ($T_1$) and second ($T_2$) temperatures associated with the first (163) and second (165) spaces respectively, the second temperature being near ambient,

(b) a second portion (151) of the flow path having a second double-acting displacer means (156) and a second displacer cylinder (154), the second double-acting displacer means being reciprocable within the second displacer cylinder,

(c) a second thermal regenerator (190) communicating with opposite ends of the second displacer cylinder and being exposed to a second thermal gradient defined by the second temperature ($T_2$) and a third temperature ($T_3$) in which the third temperature is elevated above ambient,

(d) means to supply heat (195) to the apparatus at the third temperature so as to drive the displacer and reciprocating means in such a manner as to obtain both gas separation and refrigeration functions.

35. An apparatus as claimed in claim 33 or 34 further characterised by:

(a) the second double-acting displacer means (165) having a greater displacement than the first double-acting displacer means (155) so as to dominate gas flow and pressure variations within the working volume.

36. An apparatus as claimed in one of claims 25 to 35, further characterised by:

(a) the adsorbent/regenerator combination (238, 239) having an intermediate combination portion (253) disposed between opposite first (249) and second (256) ends of the regenerator combination so that first (255) and second (256) combination portions extend between the intermediate combination portion and the first and second ends of the regenerator combination respectively,

(b) the working volume has a third space (229) communicating with the intermediate portion through an intermediate conduit (231), and the volume displacement means (208) cooperate with the third space to produce cyclic reversals in direction of flow of the gas between the third space and the intermediate portion.

37. An apparatus as claimed in claim 36 further characterised by:

(a) the reciprocating means (221) cooperating with the volume displacement means (208) so as to maintain the cyclical reversals of flow between the third space (229) and the intermediate combination portion (253) in phase with the cyclical reversals of flow between the first space (225) and the first combination portion (255),

(b) the volume displacement means (208) cooperating with the first (227), second (215) and third (229) spaces so that flow of gas through the second combination portion (256) is greater than that through the first combination portion.

38. An apparatus as claimed in claim 37 further characterised by:

(a) the reciprocating means (221) cooperating with the volume displacement means (208) so that cyclic gas volume displacements adjacent the first end (249) of the regenerator combination (238, 239) have a leading displacement phase angle with respect to cyclic gas volume displacements adjacent the second end (252) of the regenerator combination,

(b) insulation means (255) adjacent the intermediate portion (253) and the intermediate conduit (231), so that temperature adjacent the intermediate portion and the intermediate conduit is lowered relative to temperature at both ends of the regenerator combination.

39. An apparatus as claimed in one of claims 25 to 38, further characterized by:

(a) means to conduct a chemical reaction within a reaction zone (274) in the working volume, in which the gas mixture includes at least one reactant and at least one product of the chemical reaction,

(b) the regenerator combination (282, 283) being adapted to adsorb at least one of the products so as to separate at least a portion of the product from the gas mixture to drive the reaction off equilibrium and achieve high conversion.

40. An apparatus as claimed in claim 39 further

characterised by:

(a) a catalyst (308) located in the reaction zone (274) to enhance rate of the reaction.

41. An apparatus as claimed in claim 39 further characterised by:

(a) the chemical reaction being exothermic,

(b) the reaction zone being located adjacent the first space (274) of the working volume to supply heat in the first space, so as to convert a portion of reaction heat to mechanical energy.

42. An apparatus as claimed in claim 39 further characterised by:

(a) the chemical reaction being endothermic,

(b) the reaction being located in the second space (275) so that heat required by the reaction is transported from the first space to the second space by heat pump action.

43. An apparatus as claimed in claim 39 further characterised by:

(a) condenser means (302) cooperating with the second space (275) of the apparatus so as to liquefy at least one product of the reaction, so as to facilitate separation of the product.

44. An apparatus as claimed in one of claims 25 to 43, further characterised by:

(a) the volume displacement means including first (13, 106, 155, 208, 269) and second (11, 106, 156, 212, 272) volume displacement means which are adapted to reciprocate at the same frequency, and at respective amplitudes of reciprocation with the displacement phase angle being approximately 90 degrees, the first and second displacement means communicating with the first and second spaces respectively,

(b) the ratio of the amplitudes of the displacements of the first and second displacement means being approximately equal to the ratio of the higher temperature to the lower temperature of the spaces, when expressed in degrees Kelvin.

45. An apparatus as claimed in one of claims 25 to 44, further characterised by:

(a) the regenerator combination having a chamber containing the adsorbent material (34, 120, 189, 239, 283) integral with the thermal regenerator (27, 119, 175, 238, 282).

**Patentansprüche**

1. Verfahren zum Trennen von Komponenten eines Gasgemischs mit einer ersten Komponente, die von einem adsorbierenden Material leichter adsorbiert wird, und einer zweiten Komponente, die weniger leicht adsorbiert wird,

mit den Verfahrensschritten,

daß das Gasgemisch in eine Arbeitsvolumen mit einer Strömungsbahn eingeführt wird (37, 126, 181, 243, 290), die in einem Adsorberbett das adsorbierenden Material (34, 120, 189, 239, 283) enthält,

daß die Strömungsrichtung des Gasgemischs längs der Strömungsbahn zyklisch umgekehrt wird, so daß die Richtung der Strömung zwischen entgegengesetzten Enden der Strömungsbahn wechselt, wobei der Gesamtdruck des Gasgemischs in dem Arbeitsvolumen zyklisch zwischen einer oberen und einer unteren Druckgrenze variiert,

daß gleichzeitig die Phasenrelation zwischen den zyklischen Druckänderungen und den zyklischen Strömungsumkehrungen relativ zu dem Adsorberbett so koordiniert wird, daß die erste Komponente durch vergrößerten Druck in den Adsorberbett bevorzugt adsorbiert und festgelegt wird, wenn das Gas in einer Richtung (72) fließt, und die erste Komponente bevorzugt desorbiert wird, wenn der Druck verringert und die Strömung umgekehrt wird (73),

daß in der Nähe eines Endes (42, 133, 180, 252, 276) des Adsorberbetts eine erste Gasfraktion entnommen wird, die mit der ersten Komponente angereichert ist, und in der Nähe des entgegengesetzten Endes (41, 118, 174, 255, 273) des Adsorberbetts eines zweite Gasfraktion, die bezüglich der ersten Komponents verarmt ist,

daß in der Strömungsbahn erste (20, 11, 163, 225, 274) und zweite (15, 19, 130; 165; 208, 215; 275, 277) Räume vorgesehen werden, die in der Nähe entgegengesetzten Enden der Regeneratorkombination angeordnet sind, wobei dieses Räume sich auf unterschiedlichen Temperaturen befinden, so daß die Regeneratorkombination einem Wärmegradienten ausgesetzt ist, und

daß die Gasströmung durch die Räume und die in Reihe dazu angeordnete Regeneratorkombination geleitet wird,

dadurch gekennzeichnet,

daß in der Strömungsbahn ein Wärmeregenerator (27, 119, 238, 282) vorgesehen wird, der im Zusammenwirken mit dem Adsorberbett eine Adsorber/Regeneratorkombination (34, 27; 120, 119; 189, 175; 239, 238; 283, 282) bildet,

daß die längs der Strömungsbahn verlaufende Strömung durch die Adsorber/Regeneratorkombination geleitet wird,

und daß die zyklischen Druckänderungen und die zyklische Strömungsumkehr durch erste zyklische Gasvolumenverschiebungen in Verbindung mit dem ersten Raum (20, 111, 163, 225, 274) und durch zweite zyklische Gasvolumenverschiebungen in Verbindung mit dem zweiten Raum (15, 19; 113; 165; 208, 215; 275, 277) so erzeugt werden, daß die ersten zyklischen Gasvolumenverschiebungen einen gegenüber den zweiten zyklischen Gasvolumenverschiebungen vorauseilenden Phasenwinkel haben, so daß die Gasströmung zusammen mit den zyklischen Umkehrungen des Drucks und der Strömungsrichtung zyklischen Temperaturumsteuerungen unterworfen wird und daduruch die Trennung des Gases in die erste und die zweite Gasfraktion erleichtert und eine Umwandlung zwischen thermischer Energie und Kompressionsenergie in dem Gasgemisch herbeigeführt werden.

2. Verfahren zum Betreiben einer modifizierten Stirling-Maschine, in der ein inneres Arbeitsvolumen, das ein Gas enthält, eine Strömungsbahn aufweist, die einen ersten (20, 111, 163, 225, 274) und einen zweiten Raum (15, 19; 113; 165; 208, 215; 275, 277) und einen zwischen diesen angeordneten Wärmeregenerator (27, 119, 238, 282)

umfaßt, wobei der erste und der zweite Raum sich auf verschiedenen Temperaturen befinden, so daß der Wärmeregenerator einem Wärmegradienten ausgesetzt ist,

mit den Verfahrensschritten, daß

die Strömungsrichtung des Gasgemischs längs der Strömungsbahn zyklisch umgekehrt wird, so daß die richtung der Strömung zwischen entgegengesetzten Enden der Strömungsbahn wechselt, und

der Druck des Gases in dem Arbeitsvolumen zwischen einer oberen und einer unteren Grenze zyklisch so variiert wird, daß zwischen den zyklischen Druckänderungen und den zyklischen Strömungsumkehrungen relativ zu dem Wärmeregenerator eine Phasenrelation besteht,

dadurch gekennzeichnet,

(a) daß zwischen den Räumen ein Adsorberbett mit adsorbierendem Material (34, 120, 189, 239, 283) vorgesehen wird, das mit dem Wärmeregenerator zusammenwirkt, so daß eine Adsorber/Regeneratorkombination gebildet wird,

(b) daß in das Arbeitsvolumen ein Gasgemisch eingeführt wird (37, 126, 181, 243, 290) mit einer ersten Komponente, die von einem adsorbierenden Material leichter adsorbiert wird, und einer zweiten Komponente, die weniger leicht adsorbiert wird,

(c) daß die zyklischen Druckänderungen und die zyklischen Strömungsumkehrungen durch erste zyklische Gasvolumenverschiebungen in Verbindung mit dem ersten Raum (20, 111, 163, 225, 274) und durch zweite zyklische Gasvolumenverschiebungen in Verbindung mit dem zweiten Raum (15, 19; 113; 165; 208, 215; 275, 277) erzeugt werden, derart daß die ersten zyklischen Gasvolumenverschiebungen gegenüber den zweiten zyklischen Gasvolumenverschiebungen einen voreilenden Phasenwinkel haben,

(d) daß bei der Koordinierung der Phasenrelation zwischen den zyklischen Druckänderungen und der zyklischen Strömungsumkehrung relativ zu der Regeneratorkombination gleichzeitig bevorzugt die erste Komponente an dem Adsorberbett durch erhöhten Druck adsorbiert und stillgesetzt wird, wenn das Gas in einer Richtung (72) strömt und bevorzugt die erste Komponente durch Erniedrigen des Drucks desorbiert wird, wenn die Strömungsrichtung umgekehrt wird (73), und

(e) daß von einem Endbereich (42, 133, 180, 252, 276) der Regeneratorkombination eine erste Gasfraktion entfernt wird, die bezüglich der ersten Komponente angereichert ist, und von dem entgegengesetzten Endbereich (41, 118, 174, 255, 273) der Regeneratorkombination eine zweite Gasfraktion, die bezüglich der ersten Komponente verarmt ist, entnommen wird, wodurch in dem Gasgemisch auch eine Umwandlung zwischen thermischer Energie und Kompressionsenergie herbeigeführt wird.

3. Verfahren nach Anspruch 1 oder 2, dadurch gekennzeichnet,

a) daß Wärme von dem ersten Raum zu dem zweiten Raum transportiert wird, wobei der erste Raum sich auf einer ersten Temperatur ($T_1$) befindet und der zweite Raum auf einer zweiten Temperatur ($T_2$), und

b) daß die erste Gasfraktion, die bezüglich der ersten Komponenten angereichert ist, aus der Nähe eines zweiten Endbereichs (42, 133, 180, 252 und 276) der Regeneratorkombination, der sich in der Nähe des zweiten Raums befindet, weggeschafft wird und die bezüglich der ersten Komponenten verarmte zweite Gasfraktion aus der Nähe eines zweiten Endbereichs (41, 118, 174, 255, 273) der Regeneratorkombination weggeschafft wird, der sich in der Nähe des ersten Raums befindet.

4. Verfahren nach Anspruch 1, 2 oder 3, ferner dadurch gekennzeichnet,

a) daß die zweite Gasfraktion, die bezüglich der bevorzugt adsorbierten Komponente verarmt ist, zu einer Zeit aus dem Arbeitsvolumen weggeschafft wird, wenn der Druck sich etwa auf seinem maximalen Wert für den Zyklus befindet,

b) daß die bezüglich der leichter adsorbierten Komponenten angereicherte erste Gasfraktion weggeschafft wird, wenn der Druck annähernd einen Minimalwert für den Zyklus hat.

5. Verfahren nach einen der vorgegehenden Ansprüche, ferner dadurch gekennzeichnet,

a) daß zur Erzeugung der zyklischen Strömungsrichtungumkehr und der zyklischen Drukkänderungen in dem Arbeitsvolumen erste (13, 106, 155, 208, 269) und zweite (11, 106, 156, 212, 272) Volumenverschiebungsmittel, die mit dem ersten (20, 111, 163, 225, 274) bzw. dem zweiten (15, 19; 113; 165; 208, 215; 275; 277) Raum in Verbindung stehen, mit einer ersten bzw. mit einer zweiten Amplitude hin- und herbewegt werden, wobei das Verhältnis der Amplitude der Verschiebungen annähernd gleich dem Verhältnis der höheren Temperatur ($T_1$) zu der niedrigeren Temperatur ($T_2$) ist, wenn diese in Grad Kelvin angegeben sind, und wobei die ersten Volumenverschiebungsmittel den zweiten Volumenverschiebungsmitteln um einen Phasenwinkel von etwa 90° vorauseilen.

6. Verfahren nach einen der vorhergehenden Ansprüche, dadurchgekennzeichnet,

a) daß das Adsorberbett (34, 120, 189, 239, 283) physisch in einer Kammer angeordnet wird, die den Wärmegenerator (27, 119, 175, 283, 282) enthält, so daß die Regeneratorkombination eine integrale Einheit bildet.

7. Verfahren nach einem der vorhergehenden Ansprüche, bei dem die Regeneratorkombination (27, 34; 119, 120; 175, 189; 238, 239; 282, 283) einen ersten (41, 118, 174, 255, 273) und einen zweiten (42, 133, 180, 252, 276) Endbereich aufweist, die dem ersten (20, 111, 163, 225, 274) bzw. dem zweiten (15, 19, 113, 165, 208, 215; 275, 277) Raum zugeordnet sind,

dadurch gekennzeichnet,

a) daß der erste Raum auf einer höheren Temperatur gehalten wird als der zweite Raum,

b) daß die bezüglich der leichter adsorbierten ersten Komponente angereichterte erste Gasfraktion aus der Nähe des zweiten Endbereichs des Adsorberbetts und die bezüglich der ersten Komponente verarmte zweite Gasfraktion aus der Nähe des ersten Endbereichs des Betts weggeschafft wird,

c) und daß ein Teil der dem ersten Raum zugeführten Wärme in mechanische Arbeit oder Kompressionsarbeit umgewandelt wird, so daß man die Arbeitsweise eines Motors erhält.

8. Verfahren nach einen der Ansprüche 1 bis 6, bei dem die Regeneratorkombination (27, 34; 119, 120; 175, 189; 238, 239; 282, 283) einen ersten (41, 118, 174, 255, 273) und einen zweiten (42, 133, 180, 252, 276) Endbereich aufweist, die dem ersten (20, 111, 163, 225, 274) bzw. dem zweiten (15, 19, 113, 165, 208, 215; 275, 277) Raum zugeordnet sind,

dadurch gekennzeichnet,

a) daß der erste raum auf einer höheren Temperatur gehalten wird als der zweite Raum,

b) daß aus der Nähe des zweiten Endbereichs der Kombination die bezüglich der leichter adsorbierten ersten Komponenten angereicherte erste Gasfraktion entfernt und aus der Nähe des Endbereiches der Kombination die bezüglich der ersten Komponenten verarmte Gasfraktion entfernt wird,

c) daß Wärme von dem ersten Raum zu dem zweiten Raum transportiert wird, so daß man die Arbeitsweise eines Wärmepumpenzyklus oder eines Kühlzyklus erhält.

9. Verfahren nach Anspruch 8, dadurch gekennzeichnet,

a) daß der erste Raum (20), der erste Endbereich (41) der Regeneratorkombination sowie ein Teil (24, 28) der zwischen dem ersten Raum und dem ersten Endbereich verlaufenden Strömungsbahn (mittels 60) isoliert wird, um in dem ersten Endbereich der Regeneratorkombination das Erreichen niedriger Temperaturen zu ermöglichen und die Gastrennung zu begünstigen.

10. Verfahren nach einem der vorhergehenden Ansprüche, dadurch gekennzeichnet,

(a) daß die Phasenrelation zwischen den Druck- und Strömungsumkehrungen koordiniert wird, um erste zyklische Gasvolumensverschiebungen in der Nähe eines ersten Endbereichs (118, 174) der Regeneratorkombination (119, 120; 175, 189) zu erzeugen, die einen um 180° vorauseilenden Phasenverschiebungswinkel gegenüber zweiten zyklischen Gasvolumenverschiebungen haben, die in der Nähe des entgegengesetzten zweiten Endbereichs (131, 180) der Regeneratorkombination erzeugt werden, wobei das Arbeitsvolumen im wesentlichen konstant gehalten wird, und

(b) daß ein Teil der dem relativ wärmeren Raum (111, 163) zugeführten Wärme in Kompressionsenergie umgewandelt wird, indem wenigstens eine abgetrennte Gasfraktion zugeführt wird, deren Druck größer ist als der Druck, mit dem das Gasgemisch in den Prozeß eingeführt wird, so daß das Verfahren als ein Thermo-Kompressorzyklus abläuft.

11. Verfahren nach Anspruch 1, dadurch gekennzeichnet,

(a) daß in einem ersten Abschnitt (150) der Strömungsbahn die Phasenrelation zwischen den Druck- und Strömungsumkehrungen so koordiniert wird, daß in der Nähe eines ersten Endbereiches (174) der Regeneratorkombination Gasvolumenverschiebungen erzeugt werden, die gegenüber zweiten zyklischen Gasvolumenverschiebungen, die in der Nähe des entgegengesetzten Endbereichs der Regeneratorkombination erzeugt werden, einen um 180° vorauseilenden Phasenverschiebungswinkel haben, wobei das Arbeitsvolumen des ersten Abschnitts im wesentlichen konstant gehalten wird,

(b) daß in einem zweiten Abschnitt (151) der Strömungsbahn ein zweiter Wärmegenerator (190) vorgesehen wird und in diesem zweiten Abschnitt der Strömungsbahn die Strömungsrichtung zyklisch umgekehrt wird, so daß die Strömungsrichtung zwischen entgegengesetzten Enden der Strömungsbahn zyklisch wechselt, wobei der zweite Wärmeregenerator einem Wärmegradienten ausgesetzt wird, so daß der Gasdruck zwischen einer oberen und einer unteren Druckgrenze zyklisch variiert und in dem zweiten Abschnitt eine zweite Phasenrelation besteht, bei der erste zyklische Gasvolumenverschiebungen, die in der Nähe eines ersten Endbereichs des zweiten Wärmeregenerators (190) erzeugt werden, gegenüber zweiten zyklischen Gasvolumenverschiebungen, die in der Nähe des entgegengesetzten zweiten Endbereichs des zweiten Wärmeregenerators erzeugt werden, einen um 180° vorauseilenden Phasenverschiebungswinkel haben, wobei das zweite Arbeitsvolumen im wesentlichen konstant gehalten wird,

(c) daß der erste und der zweite Abschnitt (150, 151) der Strömungsbahn miteinander verbunden werden, um eine gewünschte Phasenrelation zwischen den Strömungsrichtungsumkehrungen und den Druckänderungen des ersten und des zweiten Abschnitts der Vorrichtung zu erhalten, so daß für den Betrieb als Thermo-Kompressor größere Flexibilität und Druckdifferenzen erreicht werden.

12. Verfahren nach Anspruch 11, dadurch gekennzeichnet,

(a) daß in dem zweiten Abschnitt (151) der Strömungsbahn Umkehrungbewegungen größerer Gasvolumina vorgesehen sind als in dem ersten Abschnitt (150) der Strömungsbahn, so daß Druckänderungen aus dem zweiten Abschnitt im ersten Abschnitt dominieren.

13. Verfahren nach Anspruch 11 oder 12, dadurch gekennzeichnet,

(a) daß in der Regeneratorkombination (175, 189) des ersten Abschnitts (150) und in dem Wärmegenerator (190) des zweiten Abschnitts (151) im wesentliche gleiche Wärmegradienten mit im wesentlichen gleichen oberen Temperaturen ($T_1$, $T_3$) und im wesentlichen gleichen unteren Temperaturen ($T_2$) vorgesehen werden, wobei der erste Raum (163, 168) jedes Abschnitts der oberen Temperaturen ausgesetzt wird, so daß man einen Betrieb als Thermo-Kompressor mit verbesserter Phasenrelation erhält.

14. Verfahren nach Anspruch 11 oder 12, dadurch gekennzeichnet,

(a) daß in dem ersten Abschnitt (150) der Strömungsbahn für die Regeneratorkombination (175, 189) ein Wärmegradient zwischen einer oberen Temperatur ($T_1$) und einer unteren Temperatur ($T_2$) vorgesehen wird, wobei der ersten Raum (163, 168) der niedrigeren Temperatur ausgesetzt wird, und

(b) daß in dem zweiten Abschnitt (151) der Vorrichtung in dem zweiten Regenerator (190) ein zweiter Wärmegradient vorgesehen wird, bei dem der ersten raum (168) einer dritten Temperatur ($T_3$) ausgesetzt wird, die größer ist als die höhere Temperatur ($T_1$) des ersten Abschnitts, so daß man auch einen Betrieb als Vuilleumier-Kältemaschine oder als Wärmepumpe erhält und Gastrennungen bei niedrigen Temperaturen durchgeführt werden.

15. Verfahren nach Anspruch 1 oder 2, dadurch gekennzeichnet,

(a) daß in einem zwischen entgegengesetzten ersten und zweiten Endbereichen (249, 252) der Regeneratorkombination liegenden mittleren Abschnitt (253) der Kombination eine Verbindung mit der Regeneratorkombination (238, 239) vorgesehen wird, so daß erste und zweite Abschnitte (255, 256) der Kombination zwischen dem mittleren Abschnitt (253) und dem ersten bzw. dem zweiten Abschnitt der Regeneratorkombination verlaufen, und

(b) daß die Strömungsrichtung in dem mittleren Abschnitt der Kombination zyklisch umgekehrt wird, so daß die Strömung durch den ersten und den zweiten Abschnitt der Kombination variiert.

16. Verfahren nach Anspruch 15, dadurch gekennzeichnet,

(a) daß die zyklischen Strömungsumkehrungen in dem mittleren Abschnitt (253) der Kombination relativ zu den zyklischen Strömungsumkehrungen zu dem ersten Endbereich (259) der Regeneratorkombination (238, 239) in Phase gehalten werden und

(b) daß die Strömungsrichtung in dem mittleren Abschnitt (253) zyklisch umgekehrt wird, so daß mehr Gas durch den zweiten Abschnitt (256) der Kombination zirkuliert als durch den ersten Abschnitt (255), so daß die Wärmeströmung relativ zu dem mittleren Abschnitt und dem ersten und dem zweiten Abschnitt der Kombination in dem mittleren Abschnitt zu einem Nettogewinn oder -verlust an Wärme führt.

17. Verfahren nach Anspruch nach Anspruch 16, dadurch gekennzeichnet,

(a) daß die Phasenbeziehung zwischen den zyklischen Strömungsumkehrungen derart koordiniert werden, daß die zyklischen Gasvolumenverschiebungen in der Nähe des ersten Endbereichs (249) der Regeneratorkombination (238, 239) gegenüber den zyklischen Gasvolumenverschiebungen in der Nähe des zweiten Endbereichs der Regeneratorkombination einen voreilenden Phasenverschiebungswinkel haben, und

(b) daß im Bereich des mittleren Abschnitts (253) und der zugehörigen Leitungen (231) eine Isolation (259) vorgesehen wird, so daß die Temperatur im Bereich des mittleren Abschnitts und den zugehörigen Leitungen niedriger ist als die Temperaturen an den beiden Enden (293, 252) der Regeneratorkombination.

18. Verfahren nach Anspruch 1 oder 2, dadurch gekennzeichnet,

(a) daß in einer Reaktionszone, in der das Gasgemisch wenigstens einen Reaktionspartner und wenigstens ein Reaktionsprodukt enthält, von denen einer in dem adsorbierenden Material bevorzugt adsorbiert wird, eine chemische Reaktion durchgeführt wird,

(b) daß der Reaktionspartner und das Reaktionsprodukt durch parametrisches Pumpen über dem adsorbierenden Material voneinander getrennt werden, um bei der Reaktion eine hohe Umwandlung zu erhalten, und

(c) daß relative zu der Reaktionszone ein Wärmetransport durchgeführt wird, um die Temperatur der Reaktionszone zu steuern.

19. Verfahren nach Anspruch 1 oder 2, dadurch gekennzeichnet,

(a) daß in einer Reaktionszone eine chemische Reaktion herbeigeführt wird, in der das Gasgemisch wenigstens einen Reaktionspartner, wenigstens ein erwünschtes Produkt einer erwünschten chemischen Reaktion und wenigstens ein unerwünschtes Produkt einer Nebenreaktion enthält, wobei eines der Produkte in dem adsorbierenden Material bevorzugt adsorbiert wird,

(b) daß durch parametrisches Pumpen das erwünschte Produkt von der Reaktionszone wegtransportiert wird, um die Aufrechterhaltung des Ungleichgewichts für die erwünschte Reaktion und damit eine hohe Umwandlung in das erwünschte Produkt zu unterstützen, und

(c) daß das unerwünschte Produkt durch parametrisches Pumpen in der Reaktionszone festgehalten wird, um eine Verzögerung der unerwünschten Reaktion in der Nähe des Gleichgewichts zu unterstützen und die Umwandlung in das unerwünschte Produkt zu reduzieren.

20. Verfahren nach Anspruch 18 oder 19, dadurch gekennzeichnet,

(a) daß zur Erhöhung der Reaktionsgeschwindigkeit in der Reaktionszone (274) ein Katalysator (308) vorgesehen wird.

21. Verfahren nach Anspruch 18 oder 19, dadurch gekennzeichnet,

(a) daß die chemische Reaktion eine exotherme Reaktion ist und Reaktionswärme erzeugt und

(b) daß die Reaktionszone im Endbereich des ersten Raums (274) liegt, so daß Reaktionswärme die Wärme in dem ersten Raum vergrößert, um den Betrieb als Wärmekraftmaschine zu unterstützen.

22. Verfahren nach Anspruch 18 oder 19, dadurch gekennzeichnet,

(a) daß die chemische Reaktion eine endotherme Reaktion ist und Reaktionswärme adsorbiert und

(b) daß die Reaktionszone im Bereich des zweiten Raums (275) liegt, so daß die für die Reaktion erforderliche Wärme von dem ersten Raum herantransportiert wird.

23. Verfahren nach Anspruch 18 oder 19, dadurch gekennzeichnet, daß wenigstens ein Produkt der Reaktion in einem Kühlraum (277) der Vorrichtung verflüssigt wird, um die Trennung des Produkts zu erleichtern.

24. Verfahren nach Anspruch 1 oder 2, dadurch gekennzeichnet,

(a) daß zwischen Abschnitten der Regeneratorkombination (27, 34; 119, 120; 282, 283) und der Gasströmung Wärme entweder zu der Einlaßeinrichtung (37, 126, 290) oder der Auslaßeinrichtung (48, 125) übertragen wird.

25. Vorrichtung zum Trennen von Komponenten eines Gasgemischs mit einer ersten Komponente, die von einem adsorbierenden Material (10, 102, 148, 201, 266) leichter adsorbiert wird, und einer zweiten Komponente, die weniger leicht adsorbiert wird,

mit einem Körper mit einem inneren Arbeitsvolumen mit einem ersten (20, 111, 163, 225, 274) und einem zweiten (15, 19; 113; 165; 215, 227; 275, 277) Raum, einer den ersten und den zweiten Raum verbindenden Strömungsbahn und einem das absorbierende Material enthaltenden Adsorberbett, das zwischen den Räumen in den Strömungsweg angeordnet ist,

mit einer Einlaßeinrichtung (37, 126, 181, 243, 290) zum Einführen des Gasgemischs in das Arbeitsvolumen und einer Auslaßeinrichtung (45, 48; 125, 138; 183, 187; 247, 248; 284, 284) zum Entnehmen von Gas in der Nähe der entgegengesetzten Endbereiche (41, 42; 118, 133; 174, 180; 255, 256; 273, 276) des Adsorberbetts,

mit dem ersten und dem zweiten Raum zugeordneten Mitteln (13, 11; 106; 155, 156; 208, 212; 269, 272) zur Volumenverschiebung,

mit Mitteln (35, 110, 162, 221, 281) zur Erzeugung einer Hin- und Herbewegung, die mit der Einrichtung zur Volumenverschiebung derart zusammenwirken, daß zyklische Änderungen des Gesamtdrucks und zyklische Umkehrungen der Strömungsrichtung des Gases erzeugt werden, wobei diese Mittel zum Hin- und Herbewegen eine solche Phasenbeziehung zwischen den zyklischen Änderungen des Gasdrucks und der Richtung der Strömung des Gases über dem Adsorberbett herstellen, daß unter reduziertem Druck über das Adsorberbett in Richtung auf einem der Räume verlaufende Strömung bezüglich der leichter adsorbierten ersten Komponente angereichert wird, während die unter erhöhtem Druck über das Adsorberbett in Richtung auf den entgegengesetzten Raum entgegengesetze Strömung bezüglich der leichter adsorbierten ersten Komponenten verarmt wird,

wobei die Vorrichtung gekennzeichnet ist durch

(a) einen Wärmeregenerator (27, 119, 175, 238, 282), der mit dem Adsorberbett zusammenwirkt und mit diesem eine Adsorber/Regeneratorkombination (27, 34; 119, 120; 175, 189; 238, 239; 282, 283) bildet, die in der Strömungsbahn zwischen den genannten Räumen liegt, und eine längs der Strömungsbahn fließende Strömung aufnimmt, und

(b) Mittel, die den ersten und den zweiten Raum auf unterschiedlichen Temperaturen ($T_1$, $T_2$) halten und so die Regeneratorkombination einem Wärmegradienten aussetzen, so daß die Gasströmung zusätzlich mit den zyklischen Druck- und Richtungsänderungen zyklischen Temperaturänderungen unterworfen ist, wodurch die Trennung des Gasgemischs in eine bezüglick der ersten Komponente angereicherte erste Gasfraktion und eine bezüglich der zweiten Komponente angereicherte zweite Gasfraktion erleichtert wird, wobei

(c) die Mittel (35, 110, 162, 221, 281) zur Erzeugung der Hin- und Herbewegung mit den ersten und zweiten Mitteln zur Volumenverschiebung so zusammenwirken, daß letztere sich mit gleicher Frequenz hin- und herbewegen und das von den ersten Mitteln zur Volumenverschiebung bewegte Gasvolumen dem von den zweiten Mitteln zur Volumenverschiebung bewegten Gasvolumen mit einem zwischen Null und 180° liegendem Phasenwinkel vorauseilt.

26. Vorrichtung (10, 102, 148, 201, 266) nach Art einer modifizierten Stirling-Kraftmaschine

mit einem Körper mit einem internen Arbeitsvolumen mit einem ersten (20, 111, 163, 225, 274) und einem zweiten (15, 19; 113; 165; 215, 227; 275, 277) Raum, einer Strömungsbahn zur gasführenden Verbindung des ersten mit dem zweiten Raum und einem in der Strömungsbahn zwischen dem ersten und dem zweiten Raum angeordneten Wärmegenerator (27, 119, 175, 238, 282), wobei der erste und der zweite Raum auf unterschiedlichen Temperaturen ($T_1$, $T_2$) liegen, so daß der Regenerator einem Wärmegradienten ausgesetzt ist,

mit ersten (13, 106, 155, 208, 269) und zweiten (11, 106, 156, 212, 272) Mitteln zur Volumenverschiebung, die mit dem ersten bzw. dem zweiten Raum in Verbindung stehen,

mit Mitteln (35, 110, 162, 221, 281) zur Erzeugung einer Hin- und Herbewegung, die mit den ersten und zweiten Mitteln zur Volumenverschiebung derart zusammenwirken, daß letztere sich mit gleicher Frequenz hin- und herbewegen, um zyklische Änderungen des Gesamtdrucks und der Strömungsrichtung des Gases zu erzeugen, wobei die Mittel zum Hin- und Herbewegen den Phasenwinkel zwischen den zyklischen Druckänderungen in dem Gas und der zyklischen Richtungsänderungen des Gases über dem Wärmeregenerator bestimmen,

dadurch gekennzeichnet,

(a) daß ein Adsorberbett vorgesehen ist, das adsorbierendes Material (34, 120, 189, 239, 283) enthält und im Zusammenwirken mit dem Wärmeregenerator eine zwischen dem ersten und dem zweiten Raum angeordnete Adsorber/Regeneratorkombination (27, 34; 19, 120; 175, 189; 238, 239; 282, 283) bildet,

(b) daß das Gas ein Gasgemisch ist mit einer ersten Komponente, die von einem adsorbierenden Material leichter adsorbiert wird, und einer zweiten Komponente, die weniger leicht adsorbiert wird,

(c) daß eine Einlaßeinrichtung (37, 126, 181,

243, 290) für die Zuführung des Gasgemischs in das Arbeitsvolumen sowie eine Auslaßeinrichtung (45, 48; 125, 138; 183, 187; 247, 248; 284, 285) zur Ausgabe von Gasfraktionen an entgegengesetzten Endbereichen der Regeneratorkombination vorgesehen sind,

(d) daß die Mittel zum Hin- und Herbewegen die Gasströmung zyklischen Druck- und Richtungsumkehrungen unterwerfen, so daß die eine erste Gasfraktion, die unter vermindertem Druck durch die Regeneratorkombination zu einem der beiden Räume strömt, bezüglich der ersten Komponente angereichert und durch eine Auslaßeinrichtung ausgegeben wird und eine zweite Gasfraktion, die unter erhöhrem Druck durch die Regeneratorkombination zu dem anderen Raum strömt, bezüglich der ersten Komponente verarmt und die zweite Gasfraktion durch eine andere Auslaßeinrichtung ausgegeben wird, und

(e) daß dit Mittel (35, 110, 162, 221, 281) zur Erzeugung der Hin- und Herbewegung mit den ersten und zweiten Mitteln zur Volumenverschiebung so zusammenwirken, daß letztere sich mit gleicher Frequenz hin- und herbewegen und das von den ersten Mitteln zur Volumenverschiebung bewegte Gasvolumen dem von den zweiten Mitteln zur Volumenverschiebung bewegten Gasvolumen mit einem zwischen Null und 180° liegendem Phasenwinkel vorauseilt.

27. Vorrichtung nach Anspruch 25 oder 26, dadurch gekennzeichnet, daß die Mittel zur Volumenverschiebung einer erste (13, 106, 155, 208, 269) une eine zweite (11, 106, 156, 212, 272) Volumenverschiebungseinrichtung umfassen, die mit dem ersten bzw. dem zweiten Raum in Verbindung stehen.

28. Vorrichtung nach Anspruch 25, 26 oder 27, gekennzeichnet durch

(a) eine Steuereinrichtung (140), die mit einer Auslaßventileinrichtung (43, 46; 123; 129; 139; 184, 188; 250, 251) derart zusammenwirken kann, daß die bezüglich der leichter adsorbierten Komponente verarmte zweite Gasfraktion zu einer Zeit aus der Nähe des ersten Raums entfernt wird, in der der Druck annähernd seinen Maximalwert innerhalb des Zyklus hat, und die bezüglich der leichter adsorbierten Komponente angereicherte Gasfraktion aus der Nähe des zweiten Raums entfernt wird, wenn der Druck innerhalb des Zyklus annähernd seinen Minimalwert hat.

29. Vorrichtung nach einem der Ansprüche 25 bis 28, gekennzeichnet durch

(a) in der Regeneratorkombination (27, 34; 119, 120; 282, 283) angeordnete Hilfswärmetauscher (50, 121, 296) zur Übertragung von Wärme zwischen Abschnitten der Regeneratorkombination und der Gasströmung entweder relativ zu der Einlaßeinrichtung oder zu der Auslaßeinrichtung.

30. Vorrichtung nach einem der Ansprüche 25 bis 29, dadurch gekennzeichnet,

a) daß die Mittel (35) zum Hin- und Herbewegung mit den Mitteln (11, 13) zur Volumenverschiebung so zusammenwirken, daß Wärme aus dem ersten Raum (20) in den zweiten Raum (15, 19) gepumpt wird, und

(b) daß dem ersten Raum Mittel zur Wärmeisolierung (60) zugeordnet sind, die eine Temperaturerniedrigung des ersten Raums und eine Gastrennung bei verringerter Temperatur ermöglichen.

31. Vorrichtung nach einem der Ansprüche 25 bis 30, gekennzeichnet durch

(a) Mittel zur Aufrechterhaltung einer Temperatur ($T_1$) in dem ersten Raum (20, 225, 274), die höher ist als die Temperatur ($T_2$) des zweiten Raums (15, 19; 115, 227; 275, 277), und

(b) Mittel (11, 212, 272) zur Energieumwandlung, die mit dem ersten und zweiten Raum zusammenwirken, um die auf höherer Temperatur befindliche Wärme teilweise in mechanische Arbeit oder in Kompressionsenergie umzuwandeln, so daß man einen Betrieb als Motor erhält.

32. Vorrichtung nach Anspruch 25, dadurch gekennzeichnet,

(a) daß die Mittel zur Volumenverschiebung eine doppeltwirkende Verdrängereinrichtung (106, 155) ist, so daß der Phasenwinkel zwischen der ersten und der zweiten Gasvolumenverschiebung 180° beträgt,

(b) daß ein Verdrängerzylinder (104, 153) vorgesehen ist, der mit entgegengesetzten Endbereichen (118, 133; 174, 180) der Regeneratorkombination und mit der doppeltwirkenden Verdrängereinrichtung so zusammenwirkt, daß letzterer der ersten (111, 163) und den zweiten (113, 165) Raum voneinander trennt, und

(c) daß die Temperatur ($T_1$) des ersten Raums (111, 163) höher ist als die Temperatur ($T_2$) des zweiten Raums (113, 165), so daß man ein Betrieb als Thermo-Kompressor erhält.

33. Vorrichtung nach Anspruch 32, dadurch gekennzeichnet,

(a) daß der Wärmegradient der Regeneratorkombination (175, 189) durch die dem ersten (163) bzw. dem zweiten (165) Raum zugeordnete erste ($T_1$) bzw. zweite ($T_2$) Temperatur bestimmt wird, wobei die Regeneratorkombination und der genannte Verdrängungszylinder einen ersten Abschnitt (150) der Strömungsbahn bilden,

(b) daß ein zweiter Abschnitt (151) der Strömungsbahn eine zweite doppeltwirkende Verdrängereinrichtung (156) und einen zweiten Verdrängungszylinder (154) enthält, wobei die zweite doppeltwirkende Verdrängereinrichtung innerhalb des zweiten Verdrängerzylinders hin- und herbewegbar ist,

(c) daß ein zweiter Wärmeregenerator (190) vorgesehen ist, der mit entgegengesetzten Endbereichen des zweiten Verdrängungszylinders zusammenwirkt und einem zweiten Wärmegradienten ausgesetzt ist, der durch die zweite Temperatur ($T_2$) und eine dritte Temperatur ($T_3$) bestimmt ist, wobei die dritte Temperatur im Wesentlichen gleich der ersten Temperatur ist, und

(d) daß einer Leitungsanordnung (172) den ersten und den zweiten Abschnitt (150, 151) der Strömungsbahn miteinander verbindet und die erste und die zweite doppeltwirkende Verdrängereinrichtung und die Mittel zur Hin- und Herbewegung unter einem Phasenwinkel zusammenwirken, der zyklische Druckänderungen und Richtungsumkehrungen der Gasströmung über die Regeneratorkombination koordiniert, um die Trennung der Komponenten zu verbessern.

34. Vorrichtung nach Anspruch 32, dadurch gekennzeichnet,

(a) daß der Wärmegradient der Regeneratorkombination (175, 189) durch die dem ersten (163) bzw. dem zweiten (165) Raum zugeordnete erste $T_1$) bzw. zweite ($T_2$) Temperatur bestimmt wird, wobei die zweite Temperatur in der Nähe der Umgebungstemperatur liegt,

(b) daß ein zweiter Abschnitt (151) der Strömungsbahn eine zweite doppeltwirkende Verdrängereinrichtung (156) und einen zweiten Verdrängungszylinder (154) enthält, wobei die zweite doppeltwirkende Verdrängereinrichtung innerhalb des zweiten Verdrängerzylinders hin- und herbewegbar ist,

(c) daß ein zweiter Wärmeregenerator (190) vorgesehen ist, der mit entgegengesetzten Endbereichen des zweiten Verdrängungszylinders zusammenwirkt und einem zweiten Wärmegradienten ausgesetzt ist, der durch die zweite Temperatur ($T_2$) und eine dritte Temperatur ($T_3$) bestimmt ist, wobei die dritte Temperatur größer ist als die Umgebungstemperatur, und

(d) daß Mittel (195) vorgesehen sind, die Vorrichtung Wärme mit der dritten Temperatur zuführen, so daß die Verdrängereinrichtung und die Mittel zur Hin- und Herbewegung so betrieben werden, daß sowohl ecfe Gastrennung als auch eine Kühlmaschinenfunktion erreicht werden.

35. Vorrichtung nach Anspruch 33 oder 34, dadurch gekennzeichnet,

(a) daß die zweite doppeltwirkende Verdrängereinrichtung (165) eine größere Verdrängung hat als die erste doppeltwirkende Verdrängereinrichtung (155), so daß sie für die Änderungen der Gasströmung und des Gasdrucks in dem Arbeitsvolumen dominierend ist.

36. Vorrichtung nach einem der Ansprüche 25 bis 35, dadurch gekennzeichnet,

(a) daß die Adsorber/Regeneratorkombination (238, 239) einen mittleren Abschnitt (253) aufweist, der zwischen den entgegengesetzten ersten (249) und zweiten (256) Endbereichen der Regeneratorkombination so angeordnet ist, daß der erste (255) und der zweite (256) Abschnitt der Regeneratorkombination zwischen dem mittleren Abschnitt und dem ersten bzw. dem zweiten Endbereich der Regeneratorkombination liegen, und

(b) daß das Arbeitsvolumen einen dritten Raum (229) umfaßt, der über eine Zwischenleitung (231) mit dem mittleren Abschnitt verbunden ist, wobei die Mittel (208) zur Volumenverschiebung im Zusammenwirken mit dem dritten Raum zyklische Strömungsrichtungsumkehrungen des Gases zwischen dem dritten Raum und dem mittleren Abschnitt erzeugen.

37. Vorrichtung nach Anspruch 36, dadurch gekennzeichnet,

(a) daß die Mittel (221) zur Erzeugung der Hin- und Herbewegung mit den Mitteln (208) zur Volumenverschiebung so zusammenwirken, daß die zyklischen Strömungsumkehrungen zwischen dem dritten Raum (229) und dem mittleren Abschnitt (253) der Regeneratorkombination gleichphasig gehalten werden mit den zyklischen Strömungsumkehrungen zwischen dem ersten Raum (225) und dem ersten Abschnitt (255) der Kombination, und

(b) daß die Mittel (208) zur Volumenverschiebung derart mit dem ersten (227), dem zweiten (215) und dem dritten (229) Raum zusammenwirken, daß die Gasströmung durch den zweiten Abschnitt (256) der Kombinatin größer ist als durch den ersten Abschnitt der Kombination.

38. Vorrichtung nach Anspruch 37, dadurch gekennzeichnet,

(a) daß die Mittel (221) zur Hin- und Herbewegung mit den Mitteln (208) zur Volumenverschiebung derart zusammenwirken, daß zyklische Gasvolumenverschiebungen in der Nähe des ersten Endbereichs (249) der Regeneratorkombination (238, 239) einen den zyklischen Gasvolumenverschiebungen in der Nähe des zweiten Endbereichs (252) der Regeneratorkombination vorauseilenden Phasenverschiebungswinkel haben, und

(b) daß im Bereich des mittleren Abschnitts (253) und der Zwischenleitung (231) Isoliermittel (255) vorgesehen sind, so daß die Temperatur im Bereich des mittleren Abschnitts und der Zwischenleitung im Vergleich zu der Temperatur an den beiden Enden der Regeneratorkombination abgesenkt ist.

39. Vorrichtung nach einen der Ansprüche 25 bis 38, gekennzeichnet durch

(a) Mittel zur Herbeiführung einer chemischen Reaktion in einer Reaktionszone in dem Arbeitsvolumen, in der das Gasgemisch wenigstens einen Reaktionspartner und wenigstens ein Produkt der chemischen Reaktion enthält, wobei

(b) die Regeneratorkombination (282, 283) so ausgebildet ist, daß sie wenigstens eines der Produkte adsorbiert und so wenigstens ein Teil des Produkts von dem Gasgemisch getrennt wird, um die Reaktion aus dem Gleichgewicht zu führen und hohen Umwandlungsgrad zu erzielen.

40. Vorrichtung nach Anspruch 39, dadurch gekennzeichnet,

(a) daß zur Erhöhung der Reaktionsgeschwindigkeit in der Reaktionszone (274) ein Katalysator (308) vorgesehen sind.

41. Vorrichtung nach Anspruch 39, dadurch gekennzeichnet,

(a) daß die chemische Reaktion eine exotherme Reaktion ist und Reaktionswärme erzeugt und

(b) daß die Reaktionszone in der Nähe des ersten Raums (274) des Arbeitsvolumens liegt, um dem ersten Raum Wärme zuzuführen und so einen Teils der Reaktionswärme in mechanische Energie umzuwandeln.

42. Vorrichtung nach Anspruch 39, dadurch gekennzeichnet,

(a) daß die chemische Reaktion eine endotherme Reaktion ist und

(b) daß die Reaktionszone in dem zweiten Raum

(275) liegt, so daß für die Reaktion benötigte Wärme durch Wärmepumpwirkung aus dem ersten Raum in den zweiten transportiert wird.

43. Vorrichtung nach Anspruch, gekennzeichnet durch

(a) eine Kondensatoreinrichtung (302) die mit dem zweiten Raum (275) der Vorrichtung so zusammenwirkt, daß wenigstens ein Produkt der Reaktion verflüssigt und so die Trennung des Produkts erleichtert wird.

44. Vorrichtung nach einem der Ansprüche 25 bis 43, dadurch gekennzeichnet,

(a) daß die Mittel zur Volumenverschiebung erste (13, 106, 155, 208, 269) und zweite (11, 106, 156, 212, 272) Volumenverschiebungseinrichtungen umfassen, die mit derselben Frequenz und korrespondierenden Bewegungsamplituden mit einem Phasenverschiebungswinkel von etwa 90° hin- und herbewegbar sind, wobei die ersten und die zweiten Verschiebungsmittel mit dem ersten bzw. dem zweiten Raum verbunden sind, und

(b) daß das Verhältnis der Bewegungsamplituden der ersten und zweiten Verschiebungsmittel etwa gleich dem Verhältnis der höheren Temperatur zu der niedrigeren Temperatur der Räume ist, wenn diese in Grad Kelvin ausgedrückt werden.

45. Vorrichtung nach einem der Ansprüche 25 bis 44, dadurch gekennzeichnet,

(a) daß die Regeneratorkombination eine das adsorbierende Material (34, 120, 189, 139, 283) enthaltende Kammer besitzt, die mit dem Wärmeregenerator (27, 119, 175, 238, 282) eine Einheit bildet.

**Revendications**

1. Procédé de séparation de constituants d'un mélange de gaz contenant un premier constituant qui est adsorbé plus facilement et un second constituant qui est adsorbé moins facilement par une matière adsorbante, le procédé comprenant les étapes suivantes:

l'introduction (37, 126, 181, 243, 290) du mélange de gaz dans un volume de travail ayant un trajet de circulation contenant la matière adsorbante (34, 120, 189, 239, 283) disposée dans un lit adsorbant,

l'inversion cyclique du sens de circulation du mélange de gaz suivant le trajet de circulation afin que le sens de circulation alterne entre les extrémités opposées du trajet de circulation avec variation cyclique de la pression totale du mélange de gaz entre des limites supérieure et inférieure de pression dans le volume de travail,

la coordination simultanée d'une relation de phase entre les variations cycliques de pression et les inversions cycliques de circulation dans le lit adsorbant afin que le premier constituant soit adsorbé préférentiellement et immobilisé par une pression accrue appliquée au lit adsorbant lorsque le gaz s'écoule dans un premier sens (72) et le premier constituant est préférentiellement désorbé lorsque la pression est réduite et la circulation est inversée (73),

l'extraction, à proximité d'une première extrémité (42, 133, 180, 252, 276) du lit adsorbant, d'une première fraction gazeuse enrichie en premier constituant, et l'extraction, à proximité de l'extrémité opposée (41, 118, 174, 255, 273) du lit adsorbant, d'une seconde fraction gazeuse appauvrie en premier constituant,

la disposition, dans le trajet de circulation, d'un premier (20, 111, 163, 225, 275) et d'un second (15, 19, 113; 165; 208, 215; 275, 277) espace placés près des extrémités adjacentes d'une combinaison formant régénérateur, ces espaces étant à des températures différentes afin que la combinaison formant régénérateur soit exposée à un gradient thermique, et

la circulation du courant de gaz dans lesdits espaces en série avec la combinaison formant régénérateur, le procédé étant caractérisé en ce qu'il comprend

la disposition, dans le trajet de circulation, d'un régénérateur thermique (27, 119, 175, 238, 282) destiné à coopérer avec ledit adsorbant afin qu'il crée une combinaison formant adsorbant-régénérateur (34, 27; 120, 119; 189, 175; 239, 238; 283, 282),

la circulation, dans la combinaison formant adsorbant-régénérateur, du courant qui s'écoule le long du trajet de circulation, et

la création des variations cycliques de pression et des inversions cycliques de circulation par des premiers déplacements cycliques d'un volume de gaz, associés au premier espace (20, 111, 163, 225, 274) et par des seconds déplacements cycliques d'un volume de gaz associées au second espace (15, 19; 113; 165; 208, 215; 275, 277), afin que les premiers déplacements cycliques d'un volume de gaz aient un angle de phase en avance par rapport aux seconds déplacements cycliques d'un volume de gaz, si bien que le courant de gaz est soumis à des inversions cycliques de température, avec les inversions cycliques de pression et de sens, si bien que la séparation du gaz en une première et une seconde fraction est facilitée, et la conversion entre l'énergie thermique et l'énergie de compression est facilitée dans le mélange de gaz.

2. Procédé de mise en oeuvre d'une machine à cycle modifié de Stirling dans laquelle un volume interne de travail contenant un gaz a un trajet de circulation qui comprend un premier espace (20, 111, 163, 225, 274) et un second espace (15, 19; 113; 165; 208, 215; 275, 277) et un régénérateur thermique (27, 119, 175, 238, 282) placé entre les espaces, le premier et le second espaces étant à des températures différentes afin que le régénérateur soit exposé à un gradient thermique, le procédé comprenant les étapes suivantes:

l'inversion cyclique du sens de circulation du gaz le long du trajet de circulation afin que le sens de circulation alterne entre les extrémités opposées du trajet de circulation, et

la variation cyclique de la pression du gaz entre des limites supérieure et inférieure de pression dans le volume de travail afin qu'il existe une relation de phase entre les variations cycliques de

pression et les inversions cycliques de circulation relatives aux régénérateurs thermiques, le procédé étant caractérisé par

(a) la disposition, entre lesdits espaces, d'un lit adsorbant contenant une matière adsorbante (34, 120, 189, 239, 283) et destiné à coopérer avec le régénérateur thermique afin qu'ils constituent une combinaison formant adsorbant-régénérateur,

(b) l'introduction (37, 126, 181, 243, 290) dans le volume de travail, d'un mélange de gaz contenant un premier constituant qui est adsorbé plus facilement par la matière adsorbante et un second constituant qui est adsorbé moins facilement par la matière adsorbante,

(c) la création des variations cycliques de pression et des inversions cycliques de circulation par des premiers déplacements cycliques d'un volume de gaz associés au premier espace (20, 111, 163, 225, 274) et par des seconds déplacements cycliques d'un volume de gaz associés au second espace (15, 19; 113; 165; 208, 215; 275, 277) afin que les premiers déplacements cycliques d'un volume de gaz présentent un angle de phase en avance par rapport aux seconds déplacements cycliques d'un volume de gaz,

(d) simultanément, lors de la coordination de la relation de phase entre les variations cycliques de pression et les inversions cycliques de sens de circulation relatives à la combinaison formant régénérateur, l'adsorption et l'immobilisation préférentielles du premier constituant sur le lit combiné par augmentation de la pression lorsque le gaz circule dans un premier sens (72) et la désorption préférentielle du premier consituant par réduction de la pression lorsque le sens de circulation est inversé (73), et

(e) l'extraction, à partir d'une première extrémité (42, 133, 180, 252, 276) de la combinaison formant régénérateur, d'une première fraction gazeuse enrichie en premier constituant, et l'extraction, de l'extrémité opposée (41, 118, 174, 255, 273) de la combinaison formant régénérateur, d'une seconde fraction gazeuse appauvrie en premier constituant, si bien qu'une conversion entre l'énergie thermique et l'énergie de compression est aussi obtenue dans le mélange de gaz.

3. Procédé selon la revendication 1 ou 2, caractérisé en outre par

(a) le transport de chaleur du premier espace au second espace, le premier espace étant à une première température ($T_1$) et le second espace étant à une second température ($T_2$), et

(b) l'extraction de la première fraction gazeuse enrichie en premier constituant de la proximité d'une seconde extrémité (42, 133, 180, 252, 276) de la combinaison formant régénérateur qui est adjacente au seconde espace, et l'extraction de la seconde fraction gazeuse appauvrie en premier constituant de la proximité d'une première extrémité (41, 118, 174, 255, 273) de la combinaison formant régénérateur, qui est adjacente au premier espace.

4. Procédé selon la revendication 1, 2 ou 3, caractérisé en outre par

(a) l'extraction de la seconde fraction gazeuse appauvrie en constituant adsorbé préférentiellement du volume de travail au moment où la pression est approximativement maximale dans le cycle, et

(b) l'extraction de la première fraction gazeuse enrichie en constituant adsorbé le plus facilement lorsque la pression est approximativement minimale au cours du cycle.

5. Procédé selon l'une quelconque des revendications précédentes, caractérisé en outre en ce que

(a) pour la création des inversions cycliques de sens de circulation et des variations de pression dans le volume de travail, un premier dispositif (13, 106, 155, 208, 269) et un second dispositif (11, 106, 156, 212, 272) de déplacement volumique sont déplacés en translation afin qu'ils communiquent avec le premier espace (20, 111, 163, 225, 274) et le second espace (15, 19; 113; 165; 208, 215; 275, 277) respectivement pour une première et une seconde amplitude de déplacement alternatif respectivement, le rapport des amplitudes des déplacements étant approximativement égal au rapport de la température la plus élevée ($T_1$) à la température la plus faible ($T_2$) exprimiées en kelvins, et le premier dispositif de déplacement volumique à un angle de phase en avance d'environ 90° par rapport au second dispositif de déplacement volumique.

6. Procédé selon l'une quelconque des revendications précédentes, caractérisé en outre par

(a) la disposition du lit adsorbant (34, 120, 189, 239, 283) physiquement dans une chambre contenant le régénerateur thermique (27, 119, 175, 283, 282) afin que la combinaison formant régénérateur forme un ensemble solidaire.

7. Procédé selon l'une quelconque des revendications précédentes, dans lequel la combinaison formant régénérateur (27, 34; 119, 120; 175, 189; 238, 239; 282, 283) a une première extrémité (41, 118, 174, 255, 273) et une seconde extrémité (42, 133, 180, 252, 276) associées au premier espace (20, 111, 163, 225, 274) et au second espace (15, 19, 113; 165; 208, 215; 275, 277) respectivement, et qui se caractérisé en outre en ce qu'il comprend:

(a) le maintien du premier espace à une température supérieure à celle du second espace,

(b) l'extraction de la première fraction gazeuse enrichie en premier constituant le plus facilement adsorbé depuis la proximité de la seconde extrémité du lit, et l'extraction de la seconde fraction gazeuse appauvrie en premier constituant de la proximité de la première extrémité du lit, et

(c) la transformation d'une certaine quantité de la chaleur fournie au premier espace en travail mécanique ou en travail de compression afin qu'un fonctionnement d'un cycle moteur soit obtenu.

8. Procédé selon l'une quelconque des revendications 1 à 6, dans lequel la combinaison formant régénérateur (27, 34; 119, 120; 175, 189; 238, 239; 282, 283) a une première extrémité (41, 118, 174, 255, 273) et une seconde extrémité (42, 133, 180, 252, 276) qui sont associées respectivement au premier espace et au second espace, et qui est en

outre caractérisé en ce qu'il comprend

(a) le maintien du second espace à une température supérieure à celle du premier espace,

(b) l'extraction, de la proximité de la seconde extrémité de la combinaison, de la première fraction gazeuse enrichie en premier constituant adsorbé le plus facilement, et l'extraction, de la proximité de la première extrémité de la combinaison, de la seconde fraction appauvrie en premier constituant, et

(c) le transport de chaleur du premier espace au second afin qu'un cycle de pompe à chaleur ou un cycle de réfrigération soit obtenu.

9. Procédé selon la revendication 8, caractérisé en outre en ce qu'il comprend

(a) l'isolement (60) du premier espace (20), de la première extrémité (41) de la combinaison formant régénérateur et d'une partie (24, 28) du trajet de circulation compris entre le premier espace et la première extrémité afin que de basses températures puissent être obtenues à la première extrémité de la combinaison et facilitent la séparation du gaz.

10. Procédé selon l'une quelconque des revendications précédentes, caractérisé en outre en ce qu'il comprend

(a) la coordination de la relation de phase entre les inversions de pression et de courant afin que des premiers déplacements cycliques d'un volume de gaz soient créés à proximité d'une première extrémité (118, 174) de la combinaison formant régénérateur (119, 120; 175, 189) avec un angle de phase de déplacement en avance de 180° par rapport aux seconds déplacements cycliques d'un volume de gaz créés à proximité de la seconde extrémité opposée (133, 180) de la combinaison formant régénérateur, et le maintien du volume de travail à une valeur pratiquement constant, et

(b) la transformation d'une partie de la chaleur fournie à l'espace relativement chaud (111, 163) en travail de compression par transmission d'au moins une fraction gazeuse séparée à une pression élevée par rapport à la pression à laquelle le mélange de gaz est introduit, afin qu'un cycle de compresseur thermique soit obtenu.

11. Procédé selon la revendication 1, caractérisé en outre en ce qu'il comprend

(a) dans une première partie (150) du trajet de circulation, la coordination de la relation de phase entre les inversions de pression et de sens de circulation de manière que des premiers déplacements cycliques d'un volume de gaz soient créés à proximité d'une première extrémité (174) de la combinaison formant régénérateur avec un angle de phase de déplacement en avance de 180° par rapport aux seconds déplacements cycliques d'un volume de gaz créés à proximité de la seconde extrémité opposée de la combinaison, et le maintien du volume de travail de la première partie à une valeur pratiquement constante,

(b) dans une seconde partie (151) du trajet de circulation, la disposition d'un second régénérateur thermique (190) et la création, dans la seconde partie du trajet de circulation, d'une inversion cyclique du sens de circulation afin que le sens de circulation alterne entre les extrémités opposées du second trajet de circulation, et l'application au second régénérateur, d'un gradient thermique tel que la pression du gaz varie cycliquement entre des limites supérieure et inférieure, si bien qu'une seconde relation de phase existe dans la seconde partie dans laquelle les premiers déplacements cycliques d'un volume de gaz créés à proximité de la première extrémité du second régénérateur (190) présentent un angle de phase de déplacement en avance de 180° par rapport à des seconds déplacements cycliques d'un volume de gaz créés près de la seconde extrémité opposée du second réfrigérateur, et le maintien du second volume de travail à une valeur pratiquement constante, et

(c) la mise en communication de la première et de la seconde partie (150, 151) du trajet de circulation afin que la relation voulue de phase soit obtenue entre les inversions de sens de circulation et les variations de pression de la première et de la seconde partie de l'appareil, si bien que la souplesse est accrue et que les différences de pression pouvant être utilisées dans un compresseur thermique sont accrues.

12. Procédé selon la revendication 11, caractérisé en outre en ce qu'il comprend

(a) la disposition, dans la seconde partie (151) des inversions du trajet de circulation, de plus grands volumes de gaz que dans la première partie (150) du trajet de circulation, si bien que les variations de pression de la seconde partie sont plus importantes que celles de la première partie.

13. Procédé selon la revendication 11 ou 12, caractérisé en outre en ce qu'il comprend

(a) la formation, dans la combinaison formant régénérateur (175, 189) de la première partie (150) et dans le régénérateur thermique (190) de la seconde partie (151), de gradients thermiques pratiquement égaux ayant des températures supérieures ($T_1$, $T_3$) pratiquement égales et des températures inférieures ($T_2$) pratiquement égales, le premier espace (163, 168) de chaque partie étant exposé à la température supérieure, afin qu'un fonctionnement de compresseur thermique soit obtenu avec une meilleure relation de phase.

14. Procédé selon la revendication 11 ou 12, caractérisé en outre en ce qu'il comprend

(a) dans la première partie (150) du trajet de circulation, la création d'un gradient thermique pour la combinaison formant régénérateur (175, 189) entre des températures supérieure ($T_1$) et inférieure ($T_2$), le premier espace (163) étant exposé à la température inférieure, et

(b) dans la second partie (151) de l'appareil, la création, dans le second régénérateur (190) d'un second gradient thermique dans lequel le premier espace (168) est exposé à une troisième température ($T_3$) qui est supérieure à la température supérieure ($T_1$) de la première partie, si bien qu'un fonctionnement en réfrigérateur de Vuilleumier ou en pompe à chaleur est obtenu et permet des séparations gazeuses à des températures basses.

15. Procédé selon la revendication 1 ou 2, caractérisé en outre en ce qu'il comprend

(a) la mise en communication avec la combinaison formant régénérateur (238, 239) dans une partie intermédiare de combinaison (253) comprise entre la première et la seconde extrémité opposée (249, 252) de la combinaison formant régénérateur, afin que la première et la seconde partie (255, 256) de combinaison soient placées entre la partie intermédiaire (253) et la première et la seconde extrémité respectivement de la combinaison formant régénérateur, et

(b) l'inversion cyclique du sens de circulation au niveau de la partie intermédiaire de combinaison afin que le courant circulant dans la première et la seconde partie de combinaison varie cycliquement.

16. Procédé selon la revendication 15, caractérisé en outre en ce qu'il comprend

(a) le maintien des inversions cycliques de circulation dans la partie intermédiaire (253) de combinaison en phase avec les inversions cycliques de circulation par rapport à la premièr extrémité (249) de la combinaison formant régénérateur (238, 239), et

(b) l'inversion cyclique des sens de circulation, dans la partie intermédiaire (253), afin qu'une plus grande quantité de gaz circule dans la seconde partie de combinaison (256) que dans la première (255), si bien que l'écoulement de la chaleur dans la partie intermédiaire et dans la première et la seconde partie de combinaison permet un gain résultant ou une perte résultante de chaleur dans la partie intermédiaire.

17. Procédé selon la revendication 16, caractérisé en ce qu'il comporte en outre

(a) la coordination de la relation de phase entre les inversions cycliques de circulation afin que des déplacements cycliques d'un volume de gaz à proximité de la première extrémité (249) de la combinaison formant régénérateur (238, 239) présentent un angle de phase de déplacement en avance par rapport aux déplacements cycliques d'un volume de gaz près de la seconde extrémité de la combinaison formant régénérateur, et

(b) la disposition d'une isolation (259) prés de la partie intermédiaire (253) et des conduits associés (231) afin que la température à proximité de la partie intermédiaire et aux conduits associés soit inférieure aux températures aux deux extrémités (293, 252) de la combinaison formant régénérateur.

18. Procédé selon la revendication 1 ou 2, caractérisé en outre en ce qu'il comprend

(a) l'exécution d'une réaction chimique dans une zone réactionnelle, le mélange de gaz comprenant au moins un réactif et au moins un produit de la réaction, l'un d'eux étant adsorbé préférentiellement sur la matière adsorbante,

(b) la séparation du réactif et du produit par pompage paramétrique sur la matière adsorbante afin que la réaction soit déplacée vers une conversion élevée, et

(c) le transport de chaleur, par rapport à la zone réactionnelle, afin que la température de cette zone réactionnelle soit maîtrisée.

19. Procédé selon la revendication 1 ou 2, caractérisé en outre en ce qu'il comprend

(a) l'exécution d'une réaction chimique dans une zone réactionnelle, le mélange de gaz comprenant au moins un réactif de la réaction, au moins un produit voulu d'un réaction chimique voulue, et au moins un produit indésirable d'une réaction secondaire, l'un des produits étant adsorbé préférentiellement sur la matière adsorbante,

(b) le transport, par pompage paramétrique, du produit voulu à distance de la zone réactionnelle afin que le maintien hors d'équilibre voulu de la réaction soit facilité et facilite l'obtention d'un rendement élevé de conversion en produite voulu, et

(c) le piégeage, par pompage paramétrique, du produit indésirable présent dans la zone réactionnelle afin que le retardement de la réaction indésirable à proximité de l'équilibre soit facilité et que la transformation en produit indésirable soit réduite.

20. Procédé selon la revendication 18 ou 19, caractérisé en outre en ce qu'il comprend

(a) la disposition d'un catalyseur (308) dans la zone réactionnelle (274) afin que la vitesse de la réaction soit accrue.

21. Procédé selon la revendication 18 ou 19, caractérisé en outre en ce que

(a) la réaction chimique est exothermique et dégage de la chaleur de réaction,

(b) la zone réactionnelle est placée près du premier espace (274) afin que la chaleur de réaction s'ajoute à la chaleur présente dans le premier espace et facilite le fonctionnement en moteur thermique.

22. Procédé selon la revendication 18 ou 19, caractérisé en outre en ce que

(a) la réaction chimique est endothermique et adsorbe de la chaleur de réaction, et

(b) la zone réactionnelle est placée près du second espace (275) afin que la chaleur nécessaire à la réaction soit transportée à partir du premier espace.

23. Procédé selon la revendication 18 ou 19, caractérisé en outre en ce qu'il comprend

(a) la liquéfaction d'au moins un produit de la réaction dans un espace refroidisseur (277) de l'appareil afin que la séparation du produit soit facilitée.

24. Procédé selon la revendication 1 ou 2, caractérisé en outre par

(a) le transfert de chaleur entre des parties de la combinaison formant régénérateur (27, 34; 119, 120; 282, 283) et le courant de gaz vers le dispositif d'entrée (37, 126, 290) ou le dispositif de sortie (48, 125).

25. Appareil (10, 102, 148, 201, 266) de séparation de constituants d'un mélange contenant un premier constituant qui est adsorbé plus facilement et un second constituant qui est moins facilement adsorbé par une matière adsorbante (34, 120, 189, 239, 283), l'appareil comprenant un corps ayant un volume interne de travail qui

comporte un premier espace (20, 111, 163, 225, 274) et un second espace (15, 19; 113; 165; 215, 227; 275, 277), un trajet de circulation reliant le premier espace au second, et un lit adsorbant contenant la matière adsorbante qui est placé dans le trajet de circulation entre lesdits espaces, un dispositif d'entrée (37, 126, 181, 243, 290) destiné à admettre un mélange de gaz dans le volume de travail, et une dispositif de sortie (45, 48; 125, 138; 183; 187; 247, 248; 284, 285) destiné à évacuer du gaz de la proximité des extrémités opposées (41, 42; 118, 133; 174, 180; 255, 256; 273, 276) du lit adsorbant, un dispositif (13, 11; 106; 155, 156; 208, 212; 269, 272) de déplacement volumique associé au premier et second espace, un dispositif (35, 110, 162, 221, 281) de déplacement alternatif coopérant avec le dispositif de déplacement en volume afin qu'il crée des variations cycliques de la pression totale et des inversions cycliques du sens de circulation du gaz, le dispositif de déplacement alternatif déterminant la relation de phase entre les variations cycliques de pression dans le gaz et les sens de circulation du gaz sur le lit adsorbant, si bien que le courant à pression réduite circulant sur le lit adsorbant vers le premier espace est enrichi en premier constituant le plus facilement adsorbé alors que le courant en sens inverse à pression acccue le long du lit adsorbant vers l'espace opposé est appauvri en premier constituant plus facilement adsorbé, l'appareil étant caractérisé en outre en ce qu'il comprend

(a) un régénérateur thermique (27, 119, 175, 238, 282) coopérant avec le lit adsorbant et destiné à créer une combinaison formant adsorbant-régénérateur (27, 34; 119, 120; 175, 189; 238, 239; 282, 283) placé dans le trajet de circulation entre les espaces afin qu'il reçoive le courant qui circule le long du trajet de circulation,

(b) un dispositif destiné à maintenir le premier et le second espace à des températures différentes ($T_1$, $T_2$) afin que la combinaison formant régénérateur soit exposée à un gradient thermique et que le courant de gaz soit soumis à des inversions cycliques de température avec les inversions cycliques de pression et de sens de circulation, si bien que la séparation du mélange gazeux en une première fraction gazeuse enrichie en premier constituant et une seconde fraction gazeuse enrichie en second constituant est facilitée, et

(c) le dispositif de déplacement alternatif (35, 110, 162, 221, 281) coopérant avec le premier et le second dispositif de déplacement volumique afin que les dispositifs de déplacement se déplacent en translation à la même fréquence, et que le volume de gaz déplacé par la premier dispositif de déplacement volumique soit en avance par rapport au volume de gaz déplacé par le second dispositif de déplacement volumique d'un angle de phase compris entre 0 et 180°.

26. Appareil (10, 102, 148, 201, 266) qui ressemble à une machine à cycle modifié de Stirling, l'appareil comprenant un corps ayant un volume interne de travail qui comporte un premier espace (20, 111, 163, 225, 274) et un second espace (15, 19; 113; 165; 215, 227; 275, 277), un trajet de circulation de gaz reliant le premier et le second espaces, un régénerateur thermique (27, 119, 175, 238, 282) placé dans le trajet de circulation entre le premier et le second espaces le premier et le second espace étant à des températures différentes ($T_1$, $T_2$) afin que le régénérateur soit exposé à un gradient thermique, un premier dispositif (13, 106, 155, 208, 269) et un second dispositif (11, 106, 156, 212, 272) de déplacement volumique communiquant avec le premier et le second espaces respectivement, des dispositifs de déplacement alternatif (35, 110, 162, 221, 281) coopérant avec le premier et le second dispositifs de déplacement volumique afin que le premier et le second dispositifs de déplacement volumique se déplacent en translation à la même fréquence et créent des variations cycliques de la pression totale et du sens de circulation du gaz, des dispositifs de déplacement en translation déterminant un angle de phase entre les variations cycliques de la pression dans le gaz et les sens de circulation du gaz sur le régénérateur, l'appareil étant caractérisé par

(a) un lit adsorbant contenant une matière adsorbante (34, 120, 189, 239, 283) coopérant avec le régénérateur thermique pour la création d'une combinaison formant adsorbant-régénérateur (27, 34; 119, 120; 175, 189; 238, 239; 282, 283) placée entre les premier et second espaces,

(b) le gaz étant un mélange de gaz contenant un premier constituant qui est plus facilement adsorbé et un second constituant qui est moins facilement adsorbé par la matière adsorbante,

(c) un dispositif d'entrée (37, 126, 181, 243, 290) destiné à admettre le mélange de gaz dans le volume de travail, et un dispositif de sortie (45, 48; 125, 138; 183, 187; 247, 248; 284, 285) destiné à évacuer des fractions gazeuses des extrémités opposées de la combinaison formant régénérateur,

(d) le dispositif de déplacement alternatif soumettant le courant de gaz à des inversions cycliques de pression et de sens afin qu'un courant à pression réduite d'une première fraction gazeuse circulant sur la combinaison formant régénérateur vers le premier espace soit enrichi en premier constituant plus facilement adsorbé et soit évacué par un dispositif de sortie, qu'un courant à pression accrue de la seconde fraction gazeuse circulant sur la combinaison formant régénérateur vers l'espace restant soit appauvri en premier constituant plus facilement adsorbé, et que la seconde fraction de gazeuse soit retirée par un autre dispositif de sortie, et

(e) les dispositifs de déplacement en translation (35, 110, 162, 221, 281) coopérant avec le premier et le second dispositifs de déplacement volumique afin que les dispositifs de déplacement se déplacent en translation à la même fréquence et que le volume de gaz déplacé par le premier dispositif de déplacement volumique soit en avance par rapport au volume de gaz déplacé par le second dispositif de déplacement

volumique d'un angle de phase comprise entre 0 et 180°.

27. Appareil selon la revendication 25 ou 26, caractérisé en outre en ce que les dispositifs de déplacement volumique comprenant le premier dispositif (13, 106, 155, 208, 269) et le second dispositif (11, 106, 156, 212, 272) de déplacement en volume communiquent avec le premier et le second espaces respectivement.

28. Appareil selon la revendication 25, 26 ou 27, caractérisé en outre par

(a) un dispositif de commande (57, 140) destiné à coopérer avec une soupape de sortie (43, 46; 123; 129; 139; 184, 188; 250, 251) afin que la seconde fraction gazeuse appauvrie en constituant le plus facilement adsorbé soit extraite de la proximité du premier espace à un moment où la pression est approximativement maximale dans le cycle, et que la première fraction gazeuse enrichie en constituant le plus facilement adsorbé soit extraite de la proximité du second espace lorsque la pression est approximativement minimale pendant le cycle.

29. Appareil selon l'une des revendications 25 à 28, caractérisé en outre par

(a) des échangeurs de chaleur auxiliaires (50, 121, 296) placés dans la combinaison formant régénérateur (27, 34; 119, 120; 282, 283) et destinés à transférer de la chaleur entre des parties de la combinaison formant régénérateur et du courant de gaz, vers le dispositif d'entrée ou le dispositif de sortie.

30. Appareil selon l'une quelconque des revendications 25 à 29, caractérisé en outre en ce que

(a) les dispositifs de déplacement en translation (35) coopèrent avec les dispositifs de déplacement volumique (11, 13) afin que de la chaleur soit pompée du premier espace (20) au second espace (15, 19), et

(b) un dispositif d'isolation thermique (60) coopère avec le premier espace afin qu'il permette une réduction de la température du premier espace et permette ainsi la séparation du gaz à une température réduite.

31. Appareil selon l'une quelconque des revendications 25 à 30, caractérisé en outre par

(a) un dispositif destiné à maintenir la température ($T_1$) du premier espace (20, 225, 274) à une valeur supérieure à la température ($T_2$) du second espace (15, 19; 215, 227; 275, 277), et

(b) un dispositif de conversion de travail (11, 212, 272) destiné à coopérer avec le premier et le second espaces afin qu'il transforme partiellement la chaleur à la température relativement élevée en travail mécanique ou en compression de manière que l'appareil fonctionne aussi en moteur.

32. Appareil selon la revendication 25, caractérisé en outre en ce que

(a) les dispositifs de déplacement volumique sont des dispositifs à double effet (106, 155), si bien que l'angle de phase des premier et des second déplacements volumiques est de 180°,

(b) un cylindre de déplacement (104, 153) coopère avec les extrémités opposées (118, 133; 174, 180) de la combinaison formant régénérateur et avec le dispositif de déplacement à double effet, si bien que le dispositif de déplacement à double effet sépare le premier espace (111, 163) du second espace (113, 165), et

(c) la température ($T_1$) du premier espace (111, 163) est supérieure à la température ($T_2$) du second espace (113, 165) afin que l'appareil fonctionne en compresseur thermique.

33. Appareil selon la revendication 32, caractérisé en ce que

(a) le gradient thermique de la combinaison formant régénérateur (175, 189) est déterminé par une première température ($T_1$) et une seconde température ($T_2$) associées au premier espace (163) et au second espace (165) respectivement, la combinaison formant régénérateur et le cylindre de déplacement constituant une première partie (150) du trajet de circulation,

(b) une seconde partie (151) du trajet de circulation a un second dispositif de déplacement à double effet (156) et un second cylindre de déplacement (154), le second dispositif de déplacement à double effet étant mobile en translation dans le second cylindre de déplacement,

(c) un second régénérateur thermique (190) coopère avec les extrémités opposées du second cylindre de déplacement et est exposé à un second gradient thermique délimité par la seconde température ($T_2$) et une troisième température ($T_3$), la troisième température étant pratiquement égale à la première température, et

(d) un dispositif à conduits (172) reliant la première et la seconde parties (150, 151) du trajet de circulation, et le premier et le second dispositifs de déplacement à double effet coopèrent avec les dispositifs de déplacement en translation afin qu'ils travaillent avec un angle de phase qui coordonne les variations cycliques de pression et les inversions de sens du courant de gaz le long de la combinaison formant régénérateur afin que la séparation des constituants soit facilitée.

34. Appareil selon la revendication 32, caractérisé en outre en ce que

(a) le gradient thermique de la combinaison formant régénérateur est déterminé par une première température ($T_1$) et une seconde température ($T_2$) associées au premier espace (163) et au second espace (165) respectivement, la seconde température étant proche de la température ambiante,

(b) une seconde partie (151) du trajet de circulation a un second dispositif de déplacement à double effet (156) et un second cylindre de déplacement (154), le second dispositif de déplacement à double effet pouvant se déplacer en translation dans le second cylindre de déplacement,

(c) un second régénérateur thermique (190) communique avec les extrémités opposées du second cylindre de déplacement et est exposé à un second gradient thermique délimité par la seconde température ($T_2$) et une troisième température ($T_3$) qui est supérieure à la température ambiante, et

(d) un dispositif destiné à transmettre de la

chaleur (195) à l'appareil à la troisième température afin que les dispositifs de déplacement volumique et les dispositifs de déplacement en translation soient entraînés d'une matière telle que des fonctions de séparation de gaz et de réfrigération soient obtenues simultanément.

35. Appareil selon la revendication 33 ou 34, caractérisé en outre en ce que

(a) le second dispositif de déplacement à double effet (165) a une déplacement supérieur à celui du premier dispositif de déplacement à double effet (155) afin qu'il prédomine pour la détermination des variations de débit de gaz et de pression dans le volume de travail.

36. Appareil selon l'une quelconque des revendications 25 à 35, caractérisé en outre en ce que

(a) la combinaison formant adsorbant-régénérateur (238, 239) a une partie intermédiaire de combinaison (253) placée entre une première extrémité (249) et une seconde extrémité (256) opposée de la combinaison formant régénérateur afin que la première partie (255) et la seconde partie (256) de combinaison soient placées entre la partie intermédiaire de combination et la première ou la seconde extrémité de la combinaison formant régénérateur respectivement, et

(b) le volume de travail a un troisième espace (229) qui communique avec la partie intermédiaire par un conduit intermédiaire (231), et les dispositifs de déplacement volumique (208) coopèrent avec le troisième espace afin qu'ils provoquent des inversions cycliques de sens de circulation du gaz entre le troisième espace et la partie intermédiaire.

37. Appareil selon la revendication 36, caractérisé en outre en ce que,

(a) les dispositifs de déplacement en translation (221) coopèrent avec les dispositifs de déplacement volumique (208) afin qu'ils maintiennent les inversions cycliques de circulation entre le troisième espace (229) et la partie intermédiaire (253) de la combinaison en phase avec les inversions cycliques du courant formé entre le premier espace (225) et la première partie (255) de combinaison, et

(b) les dispositifs de déplacement en volume (208) coopèrent avec le premier espace (227), le second espace (215) et le troisième espace (229) afin que le débit de gaz dans la seconde partie de combinaison (256) soit supérieur au débit dans la première partie de combinaison.

38. Appareil selon la revendication 37, caractérisé en outre en ce que

(a) les dispositifs de déplacement en translation (221) coopèrent avec les dispositifs de déplacement volumique (208) afin que les déplacements cycliques de volume de gaz à proximité de la première extrémité (249) de la combinaison formant régénérateur (238, 239) aient un angle de phase de déplacement en avance par rapport aux déplacements cycliques de volume de gaz à proximité de la seconde extrémité (252) de la combinaison formant régénérateur, et

(b) un dispositif d'isolation (255) est adjacent à la partie intermédiaire (253) et au conduit intermédiaire (231) afin que la température à proximité de la partie intermédiaire et du conduit intermédiaire soit abaissée par rapport à la température aux deux extrémités de la combinaison formant régénérateur.

39. Appareil selon l'une quelconque des revendications 25 à 38, caractérisé en outre en ce que

(a) un dispositif est destiné à assurer une réaction chimique dans une zone réactionnelle (274) du volume de travail, le mélange de gaz comprenant au moins un réactif et au moins un produit de la réaction chimique, et

(b) la combinaison formant régénérateur (282, 283) est destinée à adsorber l'un au moins des produits afin qu'elle sépare au moins une partie du produit du mélange de gas et mette la réaction hors d'équilibre et donne une conversion élevée.

40. Appareil selon la revendication 39, caractérisé en outre par

(a) un catalyseur (308) placé dans la zone réactionnelle (274) afin que la vitesse de réaction soit accrue.

41. Appareil selon la revendication 39, caractérisé en outre en ce que

(a) la réaction chimique est exothermique, et

(b) la zone réactionnelle est placée prés du premier espace (274) du volume de travail afin que de la chaleur soit fournie au premier espace, si bien qu'une partie de la chaleur de réaction est transformée en énergie mécanique.

42. Appareil selon la revendication 39, caractérisé en outre en ce que

(a) la réaction chimique est endothermique, et

(b) la réaction est localisée dans le second espace (275) afin que la chaleur nécessaire à la réaction soit transportée depuis le premier espace vers le second espace par une action de pompe à chaleur.

43. Appareil selon la revendication 39, caractérisé en outre par

(a) un dispositif condensateur (302) coopérant avec le second espace (275) de l'appareil afin qu'un produit au moins de la réaction soit liquéfié, si bien que la séparation du produit est facilitée.

44. Appareil selon l'une quelconque des revendications 25 à 43, caractérisé en outre en ce que

(a) les dispositifs de déplacement volumique comprennent un premier dispositif (13, 106, 155, 208, 269) et un second dispositif (11, 106, 156, 212, 272) de déplacement en volume qui sont destinés à se déplacer en translation à la même fréquence et avec des amplitudes respectives de déplacement alternatif telles que l'angle de phase de déplacement est d'environ 90°, le premier et le second dispositifs de déplacement communiquant avec le premier et le second espaces respectivement, et

(b) le rapport des amplitudes des déplacements du premier et du second dispositifs de déplacement est approximativement égal au rapport de la température la plus élevée à la température la moins élevée desdits espaces, exprimées en kelvins.

45. Appareil selon l'une quelconque des revendications 25 à 44, caractérisé en outre en ce que

(a) la combinaison formant régénérateur a une chambre contenant la matière adsorbante (34, 120, 189, 239, 283) qui est solidaire du régénérateur thermique (27, 119, 175, 238, 282).

FIG. 1

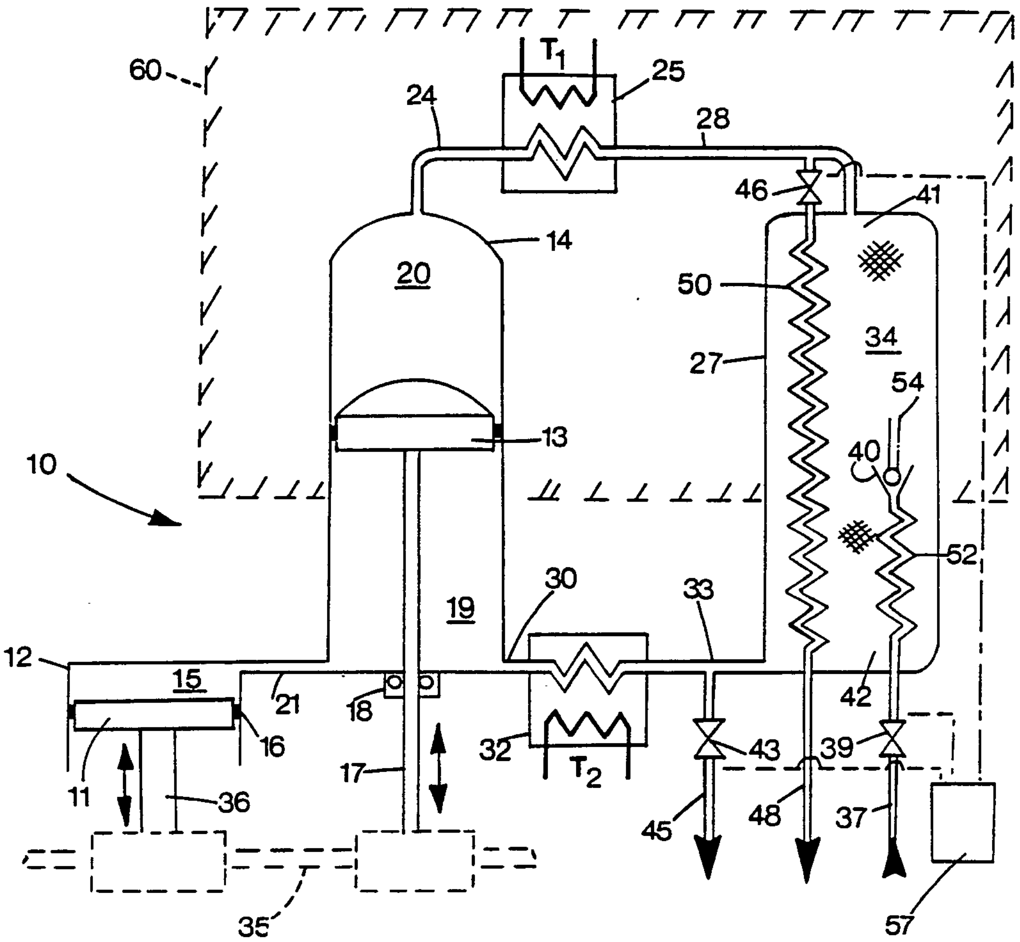
T1
60
25
24
28
46
41
14
20
50
34
27
54
40
13
10
52
30
33
19
12
15
21
18
42
16
32
43
39
T2
11
17
36
45
48
37
35
57

FIG.2

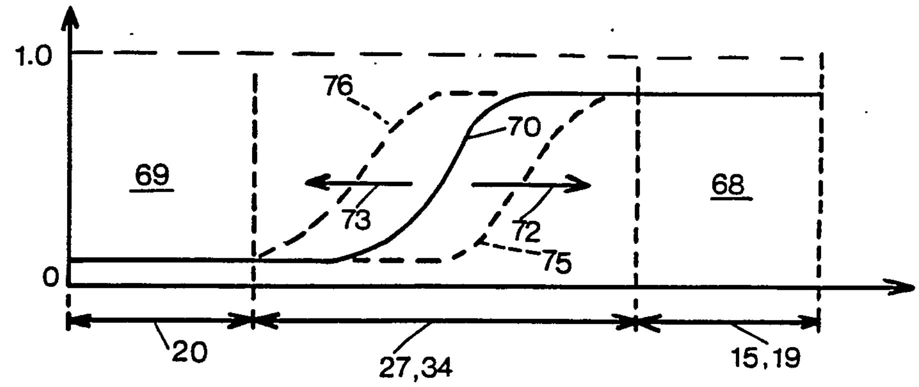


FIG.3

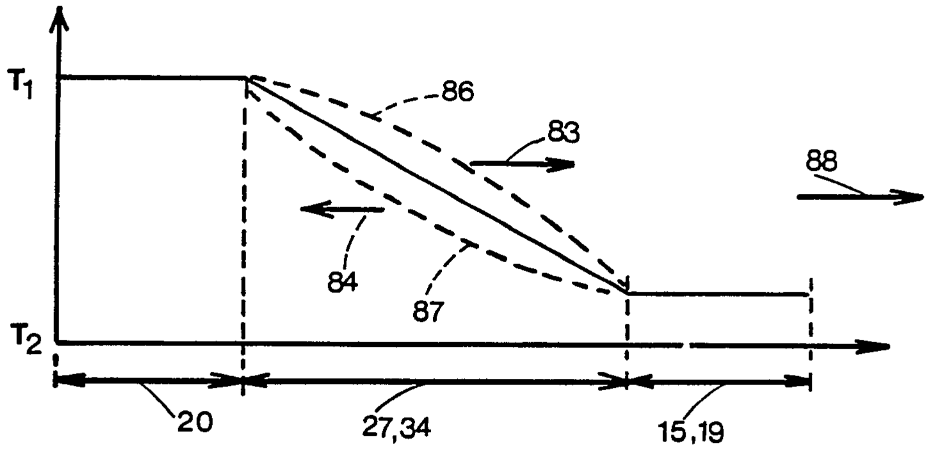


FIG.4

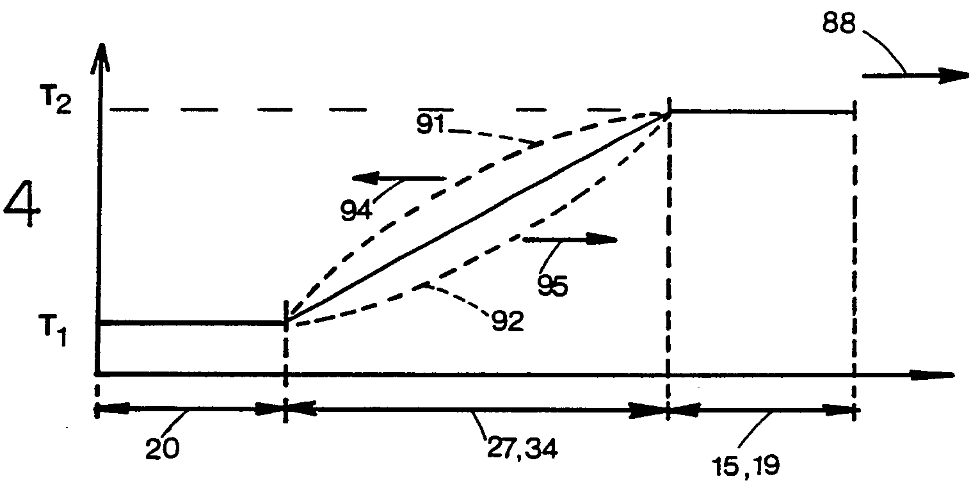

FIG. 5

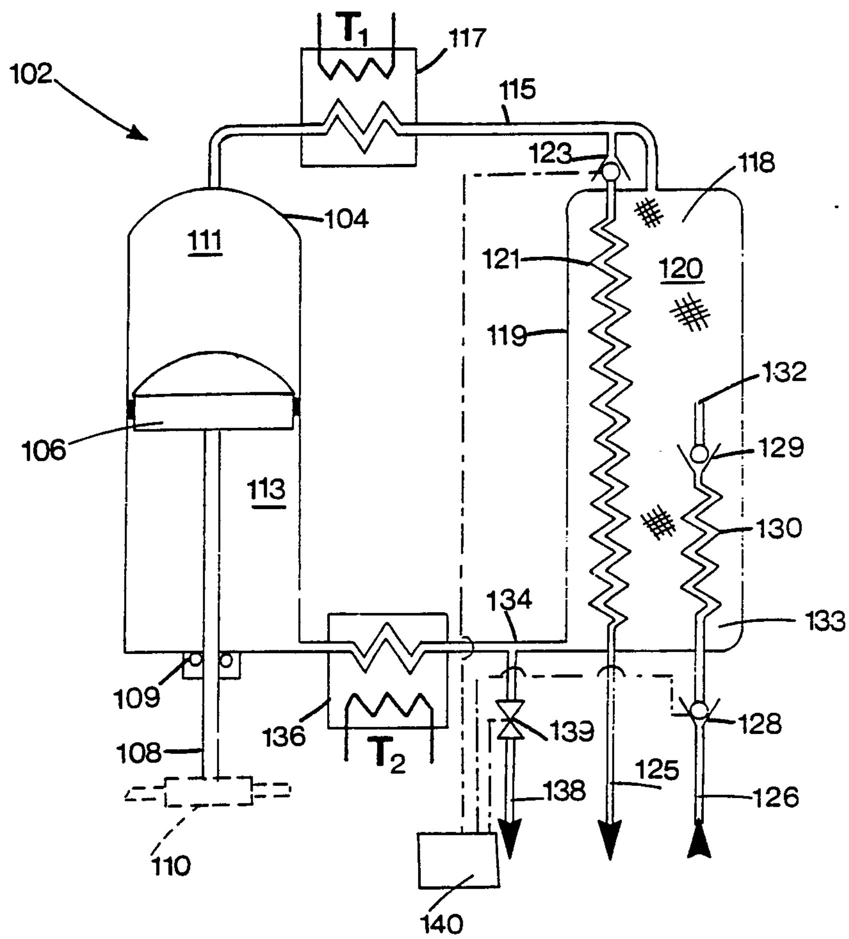

T1
117
102
115
123
118
104
111
121
120
119
132
106
129
113
130
134
133
109
128
139
136
108
T2
125
138
126
110
140

FIG. 6

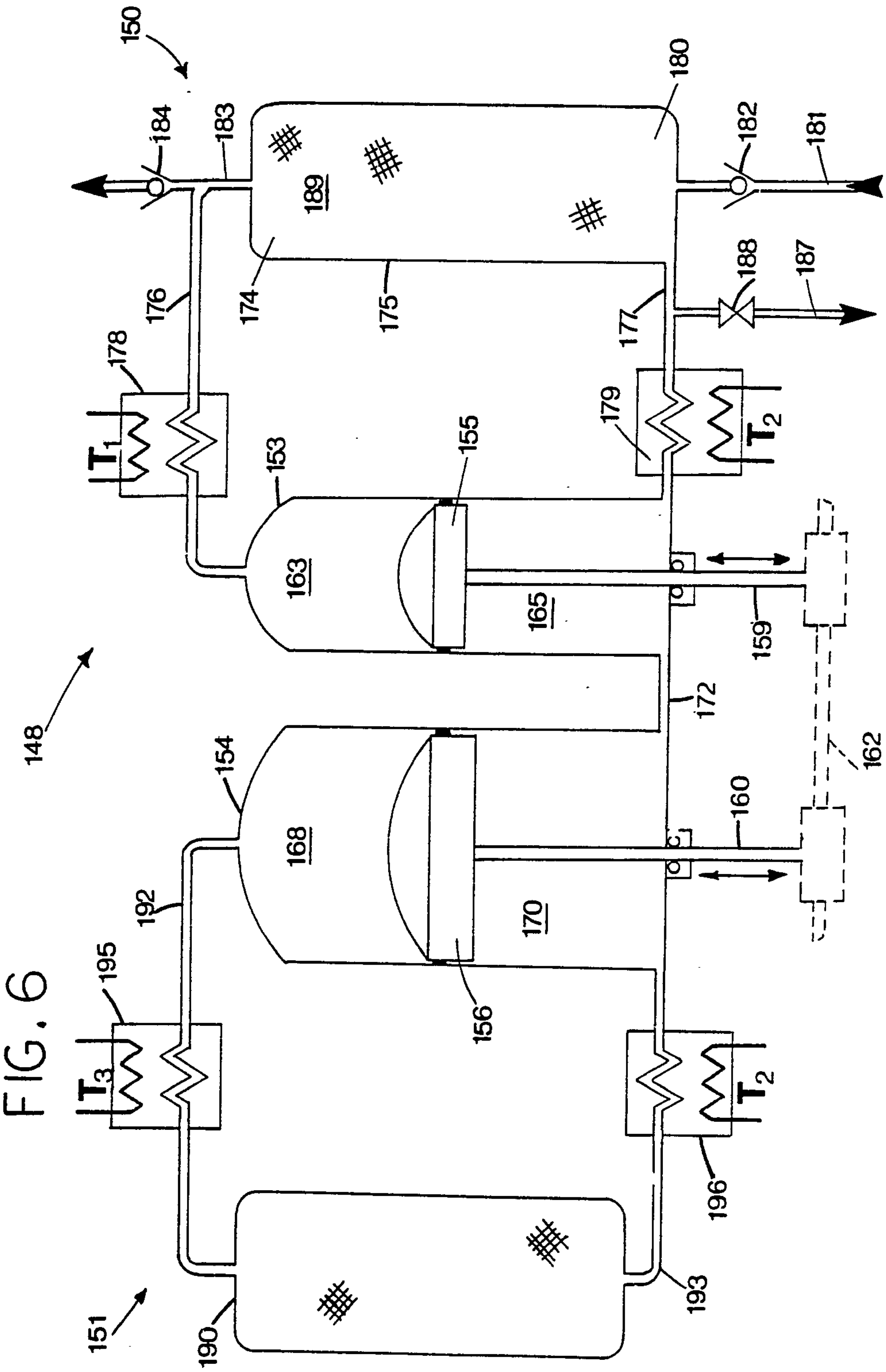
150
148
151
153
154
155
156
159
160
162
163
165
168
170
172
174
175
176
177
178
179
180
181
182
183
184
187
188
189
190
192
193
195
196
$T_1$
$T_2$
$T_2$
$T_3$

FIG. 7

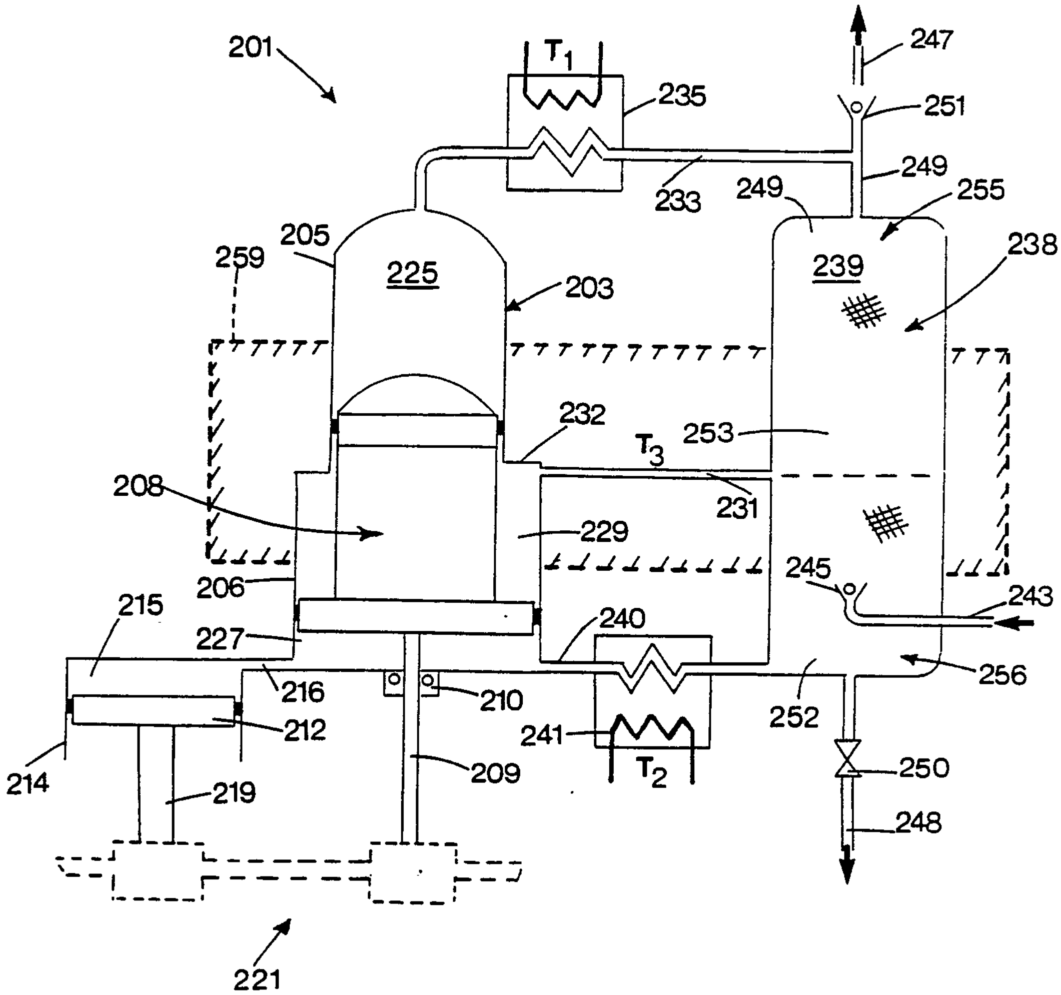
201
T1
235
247
251
249
233
249
255
205
259
225
203
239
238
232
253
T3
208
231
229
206
245
243
215
240
227
216
210
256
212
241
252
214
209
T2
250
219
248
221

FIG. 8

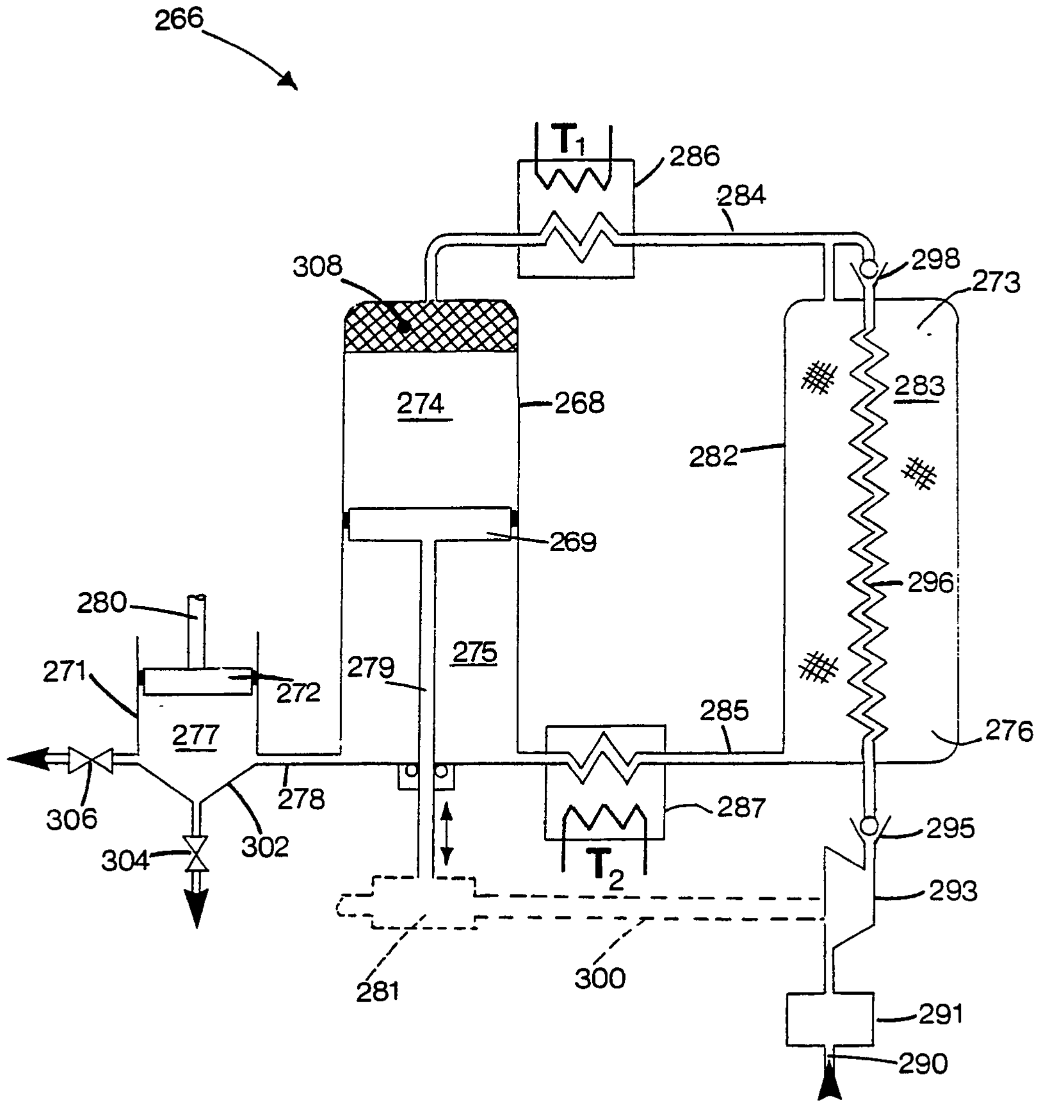
266
T1
286
284
308
298
273
274
268
283
282
269
296
280
271
279
275
272
277
285
276
306
278
302
287
295
304
T2
293
281
300
291
290